# EUROPEAN PATENT APPLICATION

(11) **EP 3 920 043 A1**
(43) Date of publication of application: **08.12.2021**
(21) Application number: 20782878.1
(22) Date of filing: 03.01.2020
(51) Int. Cl.: G06F 16/332

(54) **DIALOGUE INTERACTION METHOD, GRAPHICAL USER INTERFACE, TERMINAL DEVICE, AND NETWORK DEVICE**

(30) Priority: 29.03.2019 CN 201910256287
(71) Applicant: Huawei Technologies Co., Ltd., Shenzhen, Guangdong 518129 (CN)
(72) Inventor: CHEN, Xiao, Shenzhen, Guangdong 518129 (CN); QIAN, Li, Shenzhen, Guangdong 518129 (CN)
(74) Representative: Goddar, Heinz J.
(86) International application number: PCT/CN2020/070344
(87) International publication number: WO 2020/199701

(57) **Abstract**

A dialog interaction method, a graphical user interface (31, 41), a terminal device (101, 200), and a network device (102, 300) are provided in this application. The method includes: The terminal device (101, 200) displays a dialog view (506) in a first region of a target dialog user interface (51), and displays a conceptual view (505) in a second region of the target dialog user interface (51). The target dialog user interface (51) is a graphical user interface (31, 41) corresponding to a target dialog. The dialog view (506) is used to display dialog data (507, 511, 512, 513, 515, 516, 518, 520, 521, 529) of the target dialog. The conceptual view (505) is used to display a knowledge subgraph (508, 509, 510, 513, 514, 517, 519, 522) corresponding to the target dialog. The knowledge subgraph (508, 509, 510, 513, 514, 517, 519, 522) includes a plurality of semantic entities (531) and a semantic relationship between semantic entities (531) in the plurality of semantic entities (531). The plurality of semantic entities (531) include a first semantic entity. The first semantic entity is a semantic entity (531) existing in the dialog data (507, 511, 512, 513, 515, 516, 518, 520, 521, 529). The technical solution can improve dialog interaction experience of a user.

## Description

### TECHNICAL FIELD

This application relates to the field of artificial intelligence, and in particular, to a dialog interaction method, a graphical user interface, a terminal device, and a network device.

### BACKGROUND

A dialog system, which can also be referred to as a question answering system, a question answering robot, or the like, is a system developed and growing with the emergence of an artificial intelligence (artificial intelligence, AI) technology in recent years. It can answer questions posed by a user in a natural language with an accurate and concise natural language, and can satisfy the user's demand for obtaining information quickly and accurately.

The dialog system may display dialog data between the user and the dialog system through a graphical user interface (graphical user interface, GUI), that is, the dialog data between the user and the dialog system may be presented in a dialog view manner on a GUI corresponding to the dialog system. The dialog view displayed on the GUI can intuitively display the dialog data between the user and the dialog system for the user to view. As dialog data between the user and the dialog system increases, all dialog data cannot be displayed in the dialog view due to a limited display space. The user needs to review historical dialog data in a manner such as scrolling forward (for example, scrolling up) and searching. It is not conducive to the user to quickly learn of all content of the dialog and is difficult for the user to make quick decisions based on the dialog content.

### SUMMARY

This application provides a dialog interaction method, a graphical user interface, a terminal device, and a network device, to resolve a problem that it is difficult for a user to quickly learn of all content of a dialog in a current dialog system.

According to a first aspect, a dialog interaction method is provided. The method may be used for a terminal device in a dialog system. The method includes: The terminal device displays a dialog view in a first region of a target dialog user interface, and displays a conceptual view in a second region of the target dialog user interface. The target dialog user interface is a graphical user interface corresponding to a target dialog. The dialog view is used to display dialog data of the target dialog. The conceptual view is used to display a knowledge subgraph corresponding to the target dialog. The knowledge subgraph corresponding to the target dialog includes a plurality of semantic entities, and a semantic relationship between semantic entities in the plurality of semantic entities. The plurality of semantic entities include a first semantic entity. The first semantic entity is a semantic entity existing in the dialog data of the target dialog.

The target dialog is a dialog between two or more dialog parties in the dialog system that have an association relationship. The target dialog user interface is a graphical user interface used to display dialog data sent by each of the two or more dialog parties.

In this technical solution, when displaying the dialog user interface, the terminal device in the dialog system further displays the knowledge subgraph corresponding to the target dialog in addition to the dialog data of the target dialog. The knowledge subgraph corresponding to the target dialog includes the semantic entity existing in the dialog data. The semantic entity is equivalent to an abstract and a summary of the dialog data of the target dialog, thereby helping a user quickly learn of an outline of historical dialog content, to review the historical dialog content.

With reference to the first aspect, in a possible implementation, the plurality of semantic entities included in the knowledge subgraph corresponding to the target dialog further include one or more second semantic entities associated with the first semantic entity.

In a feasible implementation, the second semantic entity may include a semantic entity adjacent to the first semantic entity in a knowledge graph. Further, the second semantic entity includes some semantic entities adjacent to the first semantic entity in the knowledge subgraph. The some semantic entities may be a semantic entity that is adjacent to the first semantic entity in the knowledge graph and whose use frequency in a dialog process is greater than a first frequency threshold. The dialog process may be a dialog process of the target dialog, or may be a dialog process of the entire dialog system (that is, a dialog process including a plurality of dialogs in the dialog system). Alternatively, the some semantic entities may be a semantic entity that is adjacent to the first semantic entity in the knowledge graph and that is determined based on a user profile. The some semantic entities adjacent to the first semantic entity in the knowledge graph is not limited to the foregoing two cases. This is not limited in this application.

In another feasible implementation, the second semantic entity may alternatively include a semantic entity whose path distance from the first semantic entity in the knowledge subgraph is less than a first distance threshold, that is, a semantic entity close to the first semantic entity in a knowledge graph. Further, the second semantic entity may include some semantic entities close to the first semantic entity. The some semantic entities may be a semantic entity whose use frequency in a dialog process is close to that of the first semantic entity and whose use frequency in a dialog process is greater than a second frequency threshold. The dialog process may be a dialog process of the target dialog, or may be a dialog process of the entire dialog system. Alternatively, the some semantic entities may be a semantic entity that is adjacent to the first semantic entity in the knowledge graph and that is determined based on a user profile. The some semantic entities close to the first semantic entity is not limited to the foregoing two cases. This is not limited in this application.

In the foregoing several possible implementations, the knowledge subgraph corresponding to the target dialog further includes the second semantic entity in addition to the first semantic entity used to summarize an outline of the dialog data. The second semantic entity is associated with the first semantic entity, and the second semantic entity serves to guide a dialog topic, thereby improving dialog experience of the user.

With reference to the first aspect, in a possible implementation, the method further includes: When new dialog data is obtained, the terminal device updates the conceptual view. An updated conceptual view is used to display a knowledge subgraph updated based on the new dialog data. The updated knowledge subgraph includes a semantic entity existing in the new dialog data, or a semantic entity existing in the new dialog data and a semantic entity associated with the semantic entity existing in the new dialog data. The knowledge subgraph displayed in the conceptual view is updated with generation of dialog data, thereby achieving synchronization between the dialog data and the knowledge subgraph. An updated knowledge subgraph further includes a semantic entity associated with a semantic entity existing in the new dialog data, thereby guiding a topic.

With reference to the first aspect, in a possible implementation, the method further includes: When a quantity of semantic entities in the knowledge subgraph is greater than a first quantity, the terminal device deletes one or more semantic entities in the knowledge subgraph. By deleting the semantic entity in the knowledge subgraph, the semantic entity is dynamically deleted, thereby ensuring concision of the conceptual view.

With reference to the first aspect, in a possible implementation, the method further includes: When a first operation acting on first dialog data displayed in the dialog view is detected, the terminal device distinctly displays a third semantic entity in the conceptual view in response to the first operation. The third semantic entity includes a semantic entity existing in the first dialog data, and/or a semantic entity associated with the semantic entity existing in the first dialog data. Optionally, the third semantic entity may alternatively include a semantic entity whose topic correlation with the first dialog data is greater than a correlation threshold.

With reference to the first aspect, in a possible implementation, the method further includes: When a second operation acting on a fourth semantic entity displayed in the conceptual view is detected, the terminal device displays second dialog data in the dialog view in response to the second operation. The fourth semantic entity is a semantic entity existing in the second dialog data, or a semantic entity associated with a semantic entity existing in the second dialog data. Optionally, the second dialog data may be alternatively historical dialog data whose topic correlation with the fourth semantic entity is greater than a correlation threshold.

With reference to the first aspect, in a possible implementation, the method further includes: When the second operation acting on the fourth semantic entity displayed in the conceptual view is detected, the terminal device displays abstract information of the second dialog data in the conceptual view in response to the second operation. The fourth semantic entity is a semantic entity existing in the second dialog data, or a semantic entity associated with a semantic entity existing in the second dialog data. Further, the terminal device may display, in the conceptual view, abstract information of second dialog data with a latest generation time.

In the foregoing several possible implementations, when dialog data in the dialog view is selected, the terminal device distinctly displays, in the conceptual view, a semantic entity corresponding to the dialog data; and when a semantic entity in the conceptual view is selected, the terminal device displays, in the dialog view, dialog data corresponding to the semantic entity, thereby implementing collaborative interaction between the dialog view and the conceptual view, helping the user locate a semantic entity and historical dialog content, and improving dialog experience of the user.

With reference to the first aspect, in a possible implementation, the method further includes: When a third operation acting on a task semantic entity displayed in the conceptual view is detected, the terminal device displays key information corresponding to the task semantic entity in the conceptual view in response to the third operation.

With reference to the first aspect, in a possible implementation, after the terminal device displays the key information corresponding to the task semantic entity in the conceptual view in response to the third operation, the method further includes: When a fourth operation acting on the key information is detected and a user intention specific to the key information is obtained, the terminal device triggers, in response to the fourth operation, execution of a dialog task that meets the user intention.

With reference to the first aspect, in a possible implementation, after the terminal device triggers, in response to the fourth operation, the execution of the dialog task that meets the user intention, the method further includes: The terminal device updates the key information in the conceptual view based on a result obtained by executing the dialog task that meets the user intention.

In the foregoing several possible implementations, the knowledge subgraph displayed in the conceptual view further includes the task semantic entity in addition to the semantic entity existing in the dialog data in the dialog view, and the task semantic entity serves to define a function boundary of the dialog system, so that the user may learn of a function of the dialog system based on the task semantic entity.

With reference to the first aspect, in a possible implementation, the method further includes: When a new semantic entity that has a semantic relationship with a semantic entity in historical dialog data in the knowledge graph is identified, and the new semantic entity does not exist in the historical dialog data, the terminal device initiates a dialog based on the semantic entity in the historical dialog data and the new semantic entity. The terminal device actively initiates the dialog based on an association relationship between concepts in the historical dialog data, thereby guiding a topic, and enriching dialog content.

According to a second aspect, another dialog interaction method is provided. The method may be used for a network device in a dialog system. The method includes: The network device generates, based on dialog data of a target dialog, a knowledge subgraph corresponding to the target dialog. The knowledge subgraph corresponding to the target dialog includes a plurality of semantic entities, and a semantic relationship between semantic entities in the plurality of semantic entities. The plurality of semantic entities include a first semantic entity. The first semantic entity is a semantic entity existing in the dialog data. The network device sends the knowledge subgraph corresponding to the target dialog to a terminal device. The knowledge subgraph corresponding to the target dialog is used by the terminal device to display a dialog view in a first region of a target dialog user interface, and display a conceptual view in a second region of the target dialog user interface. The dialog view is used to display the dialog data of the target dialog. The conceptual view is used to display the knowledge subgraph corresponding to the target dialog. The target dialog user interface is a graphical user interface corresponding to the target dialog.

The target dialog is a dialog between two or more dialog parties in the dialog system that have an association relationship. The target dialog user interface is a graphical user interface used to display dialog data sent by each of the two or more dialog parties.

In this technical solution, the network device generates, based on the dialog data of the target dialog, the knowledge subgraph corresponding to the target dialog, and sends the generated knowledge subgraph to the terminal device, so that when displaying the dialog user interface, the terminal device further displays the knowledge subgraph corresponding to the target dialog in addition to the dialog data of the target dialog. The knowledge subgraph corresponding to the target dialog includes the semantic entity existing in the dialog data. The semantic entity is equivalent to an abstract and a summary of the dialog data of the target dialog, thereby helping a user quickly learn of an outline of historical dialog content, to review the historical dialog content.

With reference to the second aspect, in a possible implementation, the method further includes: The network device updates, based on new dialog data, the knowledge subgraph corresponding to the target dialog, and sends an updated knowledge subgraph to the terminal device. The updated knowledge subgraph is used by the terminal device to update the conceptual view. The updated knowledge subgraph includes a semantic entity existing in the new dialog data, or a semantic entity existing in the new dialog data and a semantic entity associated with the semantic entity existing in the new dialog data.

According to a third aspect, a graphical user interface on a terminal device is provided. The terminal device has a display screen, a memory, and one or more processors. The one or more processors are configured to execute one or more computer programs stored in the memory. The graphical user interface is a graphical user interface corresponding to a target dialog. The graphical user interface may include: a dialog view displayed in a first region of the graphical user interface, and a conceptual view displayed in a second region of the graphical user interface. The dialog view is used to display dialog data of the target dialog. The conceptual view is used to display a knowledge subgraph corresponding to the target dialog. The knowledge subgraph corresponding to the target dialog includes a plurality of semantic entities, and a semantic relationship between semantic entities in the plurality of semantic entities. The plurality of semantic entities include a first semantic entity. The first semantic entity is a semantic entity existing in the dialog data of the target dialog.

The target dialog is a dialog between two or more dialog parties in a dialog system that have an association relationship. The target dialog user interface is a graphical user interface used to display dialog data sent by each of the two or more dialog parties.

With reference to the third aspect, in a possible implementation, the plurality of semantic entities included in the knowledge subgraph corresponding to the target dialog further include one or more second semantic entities associated with the first semantic entity.

In a feasible implementation, the second semantic entity may include a semantic entity adjacent to the first semantic entity in a knowledge graph. Further, the second semantic entity includes some semantic entities adjacent to the first semantic entity in the knowledge graph. The some semantic entities may be a semantic entity that is adjacent to the first semantic entity in the knowledge graph and whose use frequency in a dialog process is greater than a first frequency threshold. The dialog process may be a dialog process of the target dialog, or may be a dialog process of the entire dialog system (that is, a dialog process including a plurality of dialogs in the dialog system). Alternatively, the some semantic entities may be a semantic entity that is adjacent to the first semantic entity in the knowledge graph and that is determined based on a user profile. The some semantic entities adjacent to the first semantic entity in the knowledge graph are not limited to the foregoing two cases. This is not limited in this application.

In a feasible implementation, the second semantic entity may alternatively include a semantic entity whose path distance from the first semantic entity in the knowledge subgraph is less than a first distance threshold, that is, a semantic entity close to the first semantic entity in the knowledge subgraph. Further, the second semantic entity may include some semantic entities close to the first semantic entity. The some semantic entities may be a semantic entity whose use frequency in a dialog process is close to that of the first semantic entity and whose use frequency in a dialog process is greater than a second frequency threshold. The dialog process may be a dialog process of the target dialog, or may be a dialog process of the entire dialog system. Alternatively, the some semantic entities may be a semantic entity that is adjacent to the first semantic entity in the knowledge graph and that is determined based on a user profile. The some semantic entities close to the first semantic entity are not limited to the foregoing two cases. This is not limited in this application.

With reference to the third aspect, in a possible implementation, when new dialog data is obtained, the conceptual view is updated. An updated conceptual view is used to display a knowledge subgraph updated based on the new dialog data. The updated knowledge subgraph includes a semantic entity existing in the new dialog data, or a semantic entity existing in the new dialog data and a semantic entity associated with the semantic entity existing in the new dialog data. The knowledge subgraph displayed in the conceptual view is updated with generation of dialog data, thereby achieving synchronization between the dialog data and the knowledge subgraph. An updated knowledge subgraph further includes a semantic entity associated with a semantic entity existing in the new dialog data, thereby guiding a topic.

With reference to the third aspect, in a possible implementation, when a quantity of semantic entities in the knowledge subgraph is greater than a first quantity, one or more semantic entities in the knowledge subgraph are deleted.

With reference to the third aspect, in a possible implementation, when a first operation acting on first dialog data displayed in the dialog view is detected, a third semantic entity is distinctly displayed in the conceptual view in response to the first operation. The third semantic entity includes a semantic entity existing in the first dialog data, and/or a semantic entity associated with the semantic entity existing in the first dialog data. Optionally, the third semantic entity may alternatively include a semantic entity whose topic correlation with the first dialog data is greater than a correlation threshold.

With reference to the third aspect, in a possible implementation, when a second operation acting on a fourth semantic entity displayed in the conceptual view is detected, second dialog data is displayed in the dialog view in response to the second operation. The fourth semantic entity is a semantic entity existing in the second dialog data, or a semantic entity associated with a semantic entity existing in the second dialog data. Optionally, the second dialog data may be alternatively historical dialog data whose topic correlation with the fourth semantic entity is greater than a correlation threshold.

With reference to the third aspect, in a possible implementation, when the second operation acting on the fourth semantic entity displayed in the conceptual view is detected, abstract information of the second dialog data is displayed in the conceptual view in response to the second operation. The fourth semantic entity is a semantic entity existing in the second dialog data, or a semantic entity associated with a semantic entity existing in the second dialog data. Further, abstract information of second dialog data with a latest generation time may be displayed in the conceptual view.

With reference to the third aspect, in a possible implementation, when a third operation acting on a task semantic entity displayed in the conceptual view is detected, key information corresponding to the task semantic entity is displayed in the conceptual view in response to the third operation.

With reference to the third aspect, in a possible implementation, after the key information corresponding to the task semantic entity is displayed in the conceptual view in response to the third operation, when a fourth operation acting on the key information is detected and a user intention specific to the key information is obtained, execution of a dialog task that meets the user intention is triggered in response to the fourth operation.

With reference to the first aspect, in a possible implementation, after the execution of the dialog task that meets the user intention is triggered in response to the fourth operation, the key information is updated in the conceptual view based on a result obtained by executing the dialog task that meets the user intention.

With reference to the third aspect, in a possible implementation, when a new semantic entity that has a semantic relationship with a semantic entity in historical dialog data in the knowledge graph is identified, and the new semantic entity does not exist in the historical dialog data, a dialog is initiated based on the semantic entity in the historical dialog data and the new semantic entity.

According to a fourth aspect, a terminal device is provided. The terminal device may include a display screen, a memory, and one or more processors. The one or more processors are configured to execute one or more computer programs stored in the memory. When the one or more processors execute the one or more computer programs, the terminal device is enabled to implement the method in any one of the first aspect or the implementations of the first aspect.

According to a fifth aspect, another terminal device is provided. The terminal device may include an apparatus. The apparatus may implement the method in any one of the first aspect or the implementations of the first aspect.

According to a sixth aspect, a network device is provided. The network device may include a memory and one or more processors. The one or more processors are configured to execute one or more computer programs stored in the memory. When the one or more processors execute the one or more computer programs, the network device is enabled to implement the method in any one of the second aspect or the implementations of the second aspect.

According to a seventh aspect, another network device is provided. The network device may include an apparatus. The apparatus may implement the method in any one of the second aspect or the implementations of the second aspect.

According to an eighth aspect, a computer program product including instructions is provided. When the computer program product is run on a terminal device, the terminal device is enabled to perform the method in any one of the first aspect or the implementations of the first aspect.

According to a ninth aspect, a computer program product including instructions is provided. When the computer program product is run on a network device, the network device is enabled to perform the method in any one of the second aspect or the implementations of the second aspect.

According to a tenth aspect, a computer-readable storage medium is provided, including instructions. When the instructions are run on a terminal device, the terminal device is enabled to perform the method in any one of the first aspect or the implementations of the first aspect.

According to an eleventh aspect, a computer-readable storage medium is provided, including instructions. When the instructions are run on a network device, the network device is enabled to perform the method in any one of the first aspect or the implementations of the first aspect.

According to a twelfth aspect, a communications system is provided. The communications system may include a terminal device, and may further include a network device. The terminal device may be the terminal device in the fourth aspect or the fifth aspect, and the network device may be the network device in the sixth aspect or the seventh aspect.

### BRIEF DESCRIPTION OF DRAWINGS

FIG. 1 is a schematic diagram of a system architecture of a dialog system according to an embodiment of this application;
FIG. 2 is a schematic structural diagram of a terminal device according to an embodiment of this application;
FIG. 3A to FIG. 3F are some graphical user interfaces implemented on a terminal device in a process of entering a target dialog user interface according to an embodiment of this application;
FIG. 4A1 to FIG. 4H2 are some graphical user interfaces implemented on a terminal device after a user enters a target dialog user interface according to an embodiment of this application;
FIG. 5A and FIG. 5B are a schematic flowchart of a dialog interaction method according to an embodiment of this application;
FIG. 6A to FIG. 6E are another schematic flowchart of a dialog interaction method according to an embodiment of this application;
FIG. 7A and FIG. 7B are still another schematic flowchart of a dialog interaction method according to an embodiment of this application;
FIG. 8A and FIG. 8B are still another schematic flowchart of a dialog interaction method according to an embodiment of this application;
FIG. 9A and FIG. 9B are still another schematic flowchart of a dialog interaction method according to an embodiment of this application;
FIG. 10A and FIG. 10B are still another schematic flowchart of a dialog interaction method according to an embodiment of this application;
FIG. 11A and FIG. 11B are still another schematic flowchart of a dialog interaction method according to an embodiment of this application;
FIG. 12A to FIG. 12C are still another schematic flowchart of a dialog interaction method according to an embodiment of this application;
FIG. 13A and FIG. 13B are still another schematic flowchart of a dialog interaction method according to an embodiment of this application; and
FIG. 14 is a structural block diagram of a network device according to an embodiment of this application.

### DESCRIPTION OF EMBODIMENTS

The following describes the technical solutions in the embodiments of this application with reference to the accompanying drawings in the embodiments of this application.

The technical solutions of this application may be used for a dialog system that displays dialog data by using a user interface.

In this application, the dialog data is data, such as voice data or text data, that is sent by two or more dialog parties in the dialog system for a dialog scenario or a dialog context in which the dialog parties are located, and that is used to express respective opinions, ideas, or logics of the two or more dialog parties. The dialog data may also be referred to as session data, chat data, question and answer data, or the like. This is not limited in this application.

A user interface (user interface, UI) is a medium interface for interaction and information exchange between an application program or an operating system and a user. The user interface implements conversion between an internal form of information and a form acceptable to the user. A user interface of an application program is source code written in a specific computer language such as Java or extensible markup language (extensible markup language, XML). The interface source code is parsed and rendered on a terminal device, and finally presented as user-recognizable content, for example, a control such as a picture, a text, or a button. A control (control) is also referred to as a widget (widget), and is a basic element of a user interface. Typical controls include a toolbar (toolbar), a menu bar (menu bar), a text box (text box), a button (button), a scrollbar (scrollbar), a picture, and a text. Attributes and content of controls on an interface are defined by tags or nodes. For example, in XML, controls included in an interface are defined by nodes such as <Textview>, <ImgView>, and <VideoView>. One node corresponds to one control or one attribute on an interface. After parsing and rendering, the node is presented as user-visible content. In addition, interfaces of many application programs, such as a hybrid application (hybrid application), usually further include web pages. A web page, also referred to as a page, may be understood as a special control embedded in an application program interface. A web page is source code written in a specific computer language, such as hypertext markup language (hypertext markup language, HTML), cascading style sheets (cascading style sheets, CSS), or JavaScript (JavaScript, JS). The web page source code may be loaded and displayed as user-recognizable content by a browser or a web page display component with a function similar to that of the browser. Specific content included in the web page is also defined by tags or nodes in the web page source code. For example, in HTML, elements and attributes of a web page are defined by <p>, <img>, <video>, and <canvas>. A common representation of the user interface is a GUI, which is a graphically displayed user interface related to computer operations. The GUI may be an interface element such as an icon, a window, or a control displayed on a display screen of a terminal device. The control may include a visual interface element such as an icon, a button, a menu, a tab, a text box, a dialog box, a status bar, a navigation bar, or a widget.

In some embodiments, a dialog system that displays dialog data by using a user interface may be a human-computer-interaction-based dialog system. Dialog parties included in the human-computer-interaction-based dialog system may be a person and a machine, that is, a user and a device, and the device may be a device held by the user. Specifically, the human-computer-interaction-based dialog system may be a dialog system that is oriented to an individual user and that is configured to provide a service for the individual user. The dialog system may be various auxiliary applications (application, APP) installed on a terminal device, for example, Siri, Cortana, Alexa, Google Now, or another auxiliary APP used to provide an assistant service for an independent individual user. Alternatively, the human-computer-interaction-based dialog system may be a dialog system that is oriented to all users and that is configured to provide a specific service for all the users. The dialog system may be various customer service assistants, job assistants, intelligent robots, and the like that are designed by enterprises or companies to resolve problems of employees or users. For example, the dialog system may be AliMe.

Optionally, the dialog system that displays dialog data by using a user interface may be alternatively an instant-messaging-based dialog system. Dialog parties included in the instant-messaging-based dialog system may be two or more users. The instant-messaging-based dialog system is a communications system configured to establish instant messaging between two or more users. Specifically, the dialog system may be a communications tool that transfers dialog data in real time by using a network, for example, QQ, WeChat, DingTalk, or Fetion.

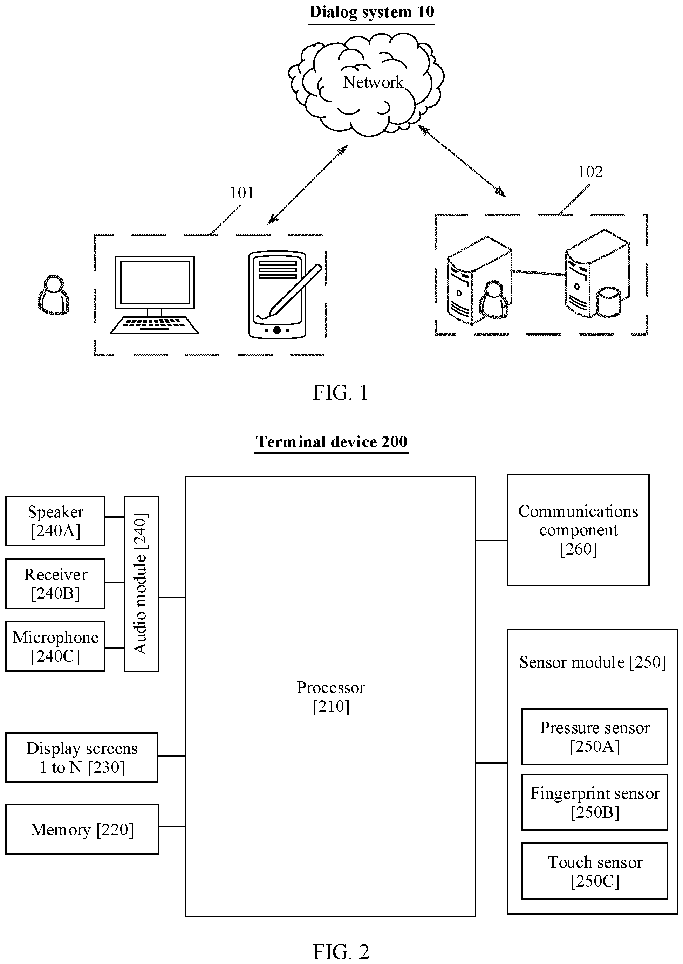

In some possible implementation scenarios, a system architecture of the dialog system may be shown in FIG. 1. The dialog system 10 may include a terminal device 101 and a network device 102. The terminal device 101 is oriented to a user, and may interact with the user. The terminal device 101 may obtain, by using an input peripheral (such as a display screen or a microphone), various operations initiated by the user; initiate requests to the network device based on the operations initiated by the user, to obtain responses generated by the network device based on the operations initiated by the user; and output the responses to the user by using an output peripheral (such as the display screen or a speaker). For example, if the terminal device is a terminal device in a human-computer-interaction-based dialog system, the terminal device may obtain dialog data entered by the user, send the dialog data to the network device, and then receive reply data generated by the network device based on the dialog data, and display the reply data to the user by using the display screen. Specifically, the terminal device may be a device with a display function, such as a mobile phone, a computer, an iPad, or an e-reader. The network device 102 is configured to provide dialog-related background support for the dialog system. The network device 102 may receive a request initiated by the terminal device based on an operation initiated by the user, perform a corresponding operation according to the request, generate a response, and return the response to the terminal device, to complete interaction between the dialog system and the user. For example, the network device is an instant-messaging-based dialog system. The network device may receive dialog data A sent by a first terminal device. The network device may send the dialog data A to a second user terminal, where the second user terminal is a destination of the dialog data A. Then, when receiving dialog data B sent by the second user terminal to the first user terminal, the network device sends the dialog data B to the first user terminal, to complete dialog interaction between the first user terminal and the second user terminal. Specifically, the network device 102 may include a real-time communications server, a database server, and the like. The real-time communications server may be configured to interact with the terminal device 101. The database server is configured to store various types of data used to implement functions that are implemented by the dialog system. For example, the dialog system is a human-computer-interaction-based dialog system, and the human-computer-interaction-based dialog system generates reply data by using a knowledge graph. In this case, the database server may be configured to store dialog data and the knowledge graph used to generate the reply data. For another example, the dialog system is an instant-messaging-based dialog system. In this case, the database server may be configured to store instant messaging accounts in the instant messaging system, and an instant messaging relationship (such as a friend relationship) between the instant messaging accounts.

In some other possible implementation scenarios, when the dialog system is a human-computer-interaction-based dialog system, the dialog system may alternatively include only one device: a terminal device. In addition to the operations performed by the terminal device 101 in the system architecture shown in FIG. 1, the terminal device may further perform all or some of the operations performed by the network device 102 in the system architecture shown in FIG. 1.

In the foregoing dialog system, a user interface used to implement interaction and information exchange with a user is displayed on the terminal device. For ease of understanding, the terminal device included in this application is described first FIG. 2 is an example schematic structural diagram of a terminal device 200.

The terminal device 200 may include a processor 210, a memory 220, a display screen 230, an audio module 240, a speaker 240A, a receiver 240B, a microphone 240C, a sensor module 250, a communications component 260, and the like. The sensor module 250 may include a pressure sensor 250A, a fingerprint sensor 250B, a touch sensor 250C, and the like. It can be understood that the structure shown in this embodiment of this application does not constitute a specific limitation on the terminal device 200.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate devices, or may be integrated into one or more processors. In some embodiments, the user 200 may alternatively include one or more processors 210.

A memory may be further disposed in the processor 210 to store instructions and data. In some embodiments, the memory in the processor 210 is a cache. The memory may store an instruction or data just used or cyclically used by the processor 210. If the processor 210 needs to use the instruction or the data again, the processor 210 may directly invoke the instruction or the data from the memory. This avoids repeated access and reduces a waiting time of the processor 210, thereby improving efficiency of the terminal device 200.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, or the like.

The memory 220 may be configured to store one or more computer programs, and the one or more computer programs include instructions. The processor 210 may run the instructions stored in the memory 220, so that the terminal device 200 performs a dialog interaction method provided in some embodiments of this application, various function applications, data processing, and the like. The memory 220 may include a program storage region and a data storage region. The program storage region may store an operating system. The program storage region may further store one or more application programs (for example, a gallery or a contact) and the like. The data storage region may store data (for example, a picture or a contact) created in a process of using the terminal device 200. In addition, the memory 220 may include a high-speed random access memory, or may include a nonvolatile memory, for example, at least one magnetic disk storage device, a flash storage device, or a universal flash storage (universal flash storage, UFS).

The terminal device 200 may implement a display function by using the GPU, the display screen 230, the application processor, and the like. The GPU is a microprocessor for image processing, and is connected to the display screen 230 and the application processor. The GPU is configured to perform mathematical and geometric calculation, and is used for graphics rendering. The processor 210 may include one or more GPUs that execute an instruction to generate or change display information.

The display screen 230 is configured to display an image, a video, and the like. The display screen 230 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a mini LED, a micro LED, a micro OLED, a quantum dot light-emitting diode (quantum dot light emitting diodes, QLED), or the like. In some embodiments, the terminal device 200 may include two or N display screens 230, where N is a positive integer greater than 2.

The terminal device 200 may implement audio functions, such as music playing and recording, by using the audio module 240, the speaker 240A, the receiver 240B, the microphone 240C, the application processor, and the like.

The audio module 240 is configured to convert digital audio information into an analog audio signal for output, and is also configured to convert analog audio input into a digital audio signal. The audio module 240 may be further configured to encode and decode an audio signal. In some embodiments, the audio module 240 may be disposed in the processor 210, or some functional modules of the audio module 240 are disposed in the processor 210. The speaker 240A, also referred to as a "loudspeaker", is configured to convert an audio electrical signal into a sound signal. The terminal device 200 may be used to listen to music or answer a hands-free call by using the speaker 240A.

The receiver 240B, also referred to as an "earpiece", is configured to convert an audio electrical signal into a sound signal. When the terminal device 200 is used to answer a call or listen to voice information, the receiver 240B may be placed close to a human ear to listen to a voice.

The microphone 240C, also referred to as a "mike" or a "mic", is configured to convert a sound signal into an electrical signal. When making a call or sending voice information, a user may move a mouth close to the microphone 240C and make a sound, to input a sound signal into the microphone 240C. At least one microphone 240C may be disposed in the terminal device 200. In some other embodiments, two microphones 240C may be disposed in the terminal device 200, to implement a noise reduction function, in addition to collecting a sound signal. In some other embodiments, three, four, or more microphones 240C may be alternatively disposed in the terminal device 200, to collect a sound signal and reduce noise. The microphones 240C may further identify a sound source, implement a directional recording function, and the like.

The pressure sensor 250A is configured to sense a pressure signal, and may convert the pressure signal into an electrical signal. In some embodiments, the pressure sensor 250A may be disposed in the display screen 230. There are many types of pressure sensors 250A, for example, a resistive pressure sensor, an inductive pressure sensor, and a capacitive pressure sensor. The capacitive pressure sensor may include at least two parallel plates that have conductive materials. When a force acts on the pressure sensor 250A, capacitance between electrodes changes. The terminal device 200 determines pressure strength based on the capacitance change. When a touch operation acts on the display screen 230, the terminal device 200 detects strength of the touch operation based on the pressure sensor 250A. The terminal device 200 may also calculate a touch location based on a detection signal of the pressure sensor 250A. In some embodiments, touch operations acting on a same touch location but having different touch operation strength may correspond to different operation instructions. For example, when a touch operation whose touch operation strength is less than a first pressure threshold acts on an icon of an SMS application, an instruction for viewing an SMS message is executed; or when a touch operation whose touch operation strength is greater than or equal to the first pressure threshold acts on the icon of the SMS application, an instruction for creating an SMS message is executed.

The fingerprint sensor 250B is configured to collect a fingerprint. The terminal device 200 may implement fingerprint-based unlocking, unlocking for application access, fingerprint-based photographing, fingerprint-based call answering, and the like by using a collected fingerprint characteristic.

The touch sensor 250C may also be referred to as a touch panel or a touch-sensitive surface. The touch sensor 250C may be disposed in the display screen 230, and the touch sensor 250C and the display screen 230 form a touchscreen, which is also referred to as a "touch control screen". The touch sensor 250C is configured to detect a touch operation acting on or near the touch sensor 250C. The touch sensor may transmit the detected touch operation to the application processor, to determine a type of a touch event. Visual output related to the touch operation may be provided by using the display screen 230. In some other embodiments, the touch sensor 250C may be alternatively disposed on a surface of the terminal device 200, and is at a location different from that of the display screen 230.

The communications component 260 may be used by the terminal device 200 to communicate with another communications device. The another communications device may be, for example, a network device (such as a server). The communications component 260 may include a wired communications interface, for example, an Ethernet interface or an optical fiber interface. Optionally, the communications component 260 may further include a wireless communications interface. In specific implementation, the communications component 260 may include a radio frequency interface and a radio frequency circuit, to implement functions that are implemented by the wireless communications interface. The radio frequency circuit may include a transceiver, a component (such as a conductor or a wire) configured to transmit and receive electromagnetic waves in free space during wireless communication, and the like.

It should be understood that the terminal device 200 may include more or fewer components than those shown in the figure, or some components may be combined, or some components may be split, or there may be a different component layout. The components shown in the figure may be implemented by hardware, software, or a combination of software and hardware.

The terminal device 200 shown in FIG. 2 as an example may display, by using the display screen 230, user interfaces described in the following embodiments. The terminal device 200 may also detect, by using the touch sensor 230C, a touch operation on each user interface, for example, a tap operation on each user interface (such as a touch operation or a double-tap operation on an icon), or a swipe-up or swipe-down operation, an operation of performing a circle drawing gesture, or the like on each user interface. In some embodiments, the terminal device may also detect, by using an input peripheral other than the touch sensor, an operation performed by a user on a user interface. For example, the terminal device may detect, by using the microphone 240C, a voice operation performed by the user on the user interface. For another example, the terminal device may further detect, by using a camera not shown in FIG. 2, a non-touch gesture operation or action operation performed by the user on the user interface. For another example, the terminal device may further detect a gesture operation, such as an operation of moving a mouse or clicking a mouse, by using an input peripheral not shown in FIG. 2, for example, a mouse or a touchpad. This is not limited to the descriptions herein.

With reference to application scenarios of this application, the following describes some embodiments of graphical user interfaces that are related to a dialog system and that are implemented on the terminal device 200.

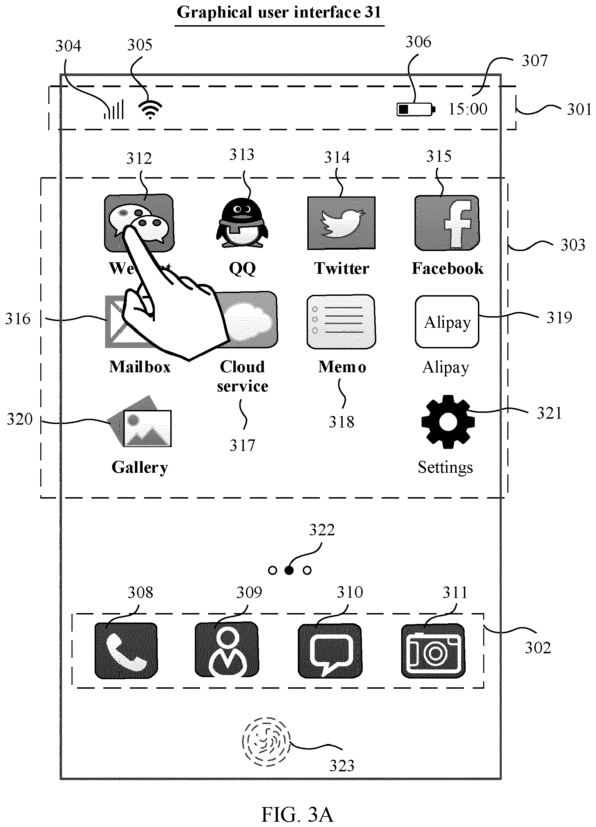

In the dialog system, one of two or more dialog parties may enter a target dialog user interface to perform operations related to dialog data, for example, sending the dialog data, viewing the dialog data, or deleting the dialog data. First, some graphical user interfaces implemented on the terminal device in a process of entering the target dialog user interface are described, as shown in FIG. 3A to FIG. 3F

In this application, a dialog user interface is a graphical user interface, on the terminal device 200, that is used to display dialog data sent by each of two or more dialog parties. For a human-computer-interaction-based dialog system, the dialog user interface may be a user interface, on the terminal device 200, that is used to display dialog data sent by each of the dialog system and a user. For an instant-messaging-based dialog system, the dialog user interface may be a user interface, on the terminal device 200, that is used to display dialog data sent by each of two or more users. The target dialog user interface is a dialog user interface of a target dialog, and the target dialog is a dialog between two or more dialog parties that have an association relationship. For the human-computer-interaction-based dialog system, the target dialog is a dialog between the dialog system and a user holding or using the terminal device, that is, a dialog between the terminal device and the user holding or using the terminal device. For the instant-messaging-based dialog system, the target dialog is a dialog between two or more instant messaging users that have an instant messaging relationship. For example, an instant messaging user 1 has a friend relationship with an instant messaging user 2, an instant messaging user 3, and an instant messaging user 4, the instant messaging user 1 has set up an instant messaging group, and the instant messaging group includes the instant messaging user 1, the instant messaging user 2, and the instant messaging user 3. In this case, the target dialog may be a separate dialog between the instant messaging user 1 and the instant messaging user 2, or may be a separate dialog between the instant messaging user 1 and the instant messaging user 3, or may be a separate dialog between the instant messaging user 1 and the instant messaging user 4, or may be an instant messaging group dialog between the instant messaging 1, the instant messaging user 2, and the instant messaging user 3.

In some embodiments, a user may enter the target dialog user interface from a user interface used for an application program menu. The following describes some graphical user interfaces on the terminal device in a process in which the user enters the target dialog user interface from the user interface used for the application program menu.

First, FIG. 3A shows an example graphical user interface 31, on the terminal device, that is used for an application program menu. The graphical user interface 31 may include a status bar 301, a tray 302 with common application program icons, and other application program icons 303.

The status bar 301 may include one or more signal strength indicators 304 for a mobile communications signal (also referred to as a cellular signal), one or more signal strength indicators 305 for a wireless fidelity (wireless fidelity, Wi-Fi) signal, a battery status indicator 306, a time indicator 307, and the like.

The tray 302 with the common application program icons may be used to display application program icons that are relatively frequently used on the terminal device 200, or that are set by the user, or that are set by the system by default, for example, a phone icon 308, a contact icon 309, an SMS message icon 310, and a camera icon 311 shown in FIG. 3A. In some embodiments, the tray 302 with the common application program icons may be further used to display an icon of an application program corresponding to the dialog system (the application program corresponding to the dialog system is referred to as a target application program below), for example, may be used to display icons of some instant-messaging-based chat tools (such as DingTalk and Fetion).

The other application program icons 303 are icons of application programs installed on the terminal device 200 other than common application programs, for example, a WeChat (Wechat) icon 312, a QQ icon 313, a Twitter (Twitter) icon 314, a Facebook (Facebook) icon 315, a mailbox icon 316, a cloud service icon 317, a memo icon 318, an Alipay icon 319, a gallery icon 320, and a settings icon 321 shown in FIG. 3A. In some embodiments, the other application program icons 303 may include an icon of a target application program. The icon of the target application program may be, for example, the WeChat icon 312 or the QQ icon 313 shown in FIG. 3A.

The other application program icons 303 may be distributed on a plurality of pages. The graphical user interface 31 may further include a page indicator 322. The page indicator 322 may be used to indicate a page to which an application program currently browsed by the user belongs. The user may swipe a region of the other application program icons left or right to browse application program icons on other pages.

In some embodiments, the graphical user interface 31 shown in FIG. 3A as an example may be a home screen (Home screen).

In some other embodiments, the terminal device 200 may further include a home screen key 323. The home screen key 323 may be a physical key or a virtual key. The home screen key may be configured to receive an instruction of the user, to return to the home screen from a currently displayed user interface, so that the user can conveniently view the home screen at any time. Specifically, the instruction of the user may be an operation instruction entered by the user by pressing the home screen key once, or an operation instruction entered by the user by pressing the home screen key twice consecutively within a short time, or an operation instruction entered by the user by pressing and holding the home screen key within a preset time. In some other embodiments of this application, a fingerprint sensor may be further integrated in the home screen key, so that a fingerprint is collected and recognized when the home screen key is pressed.

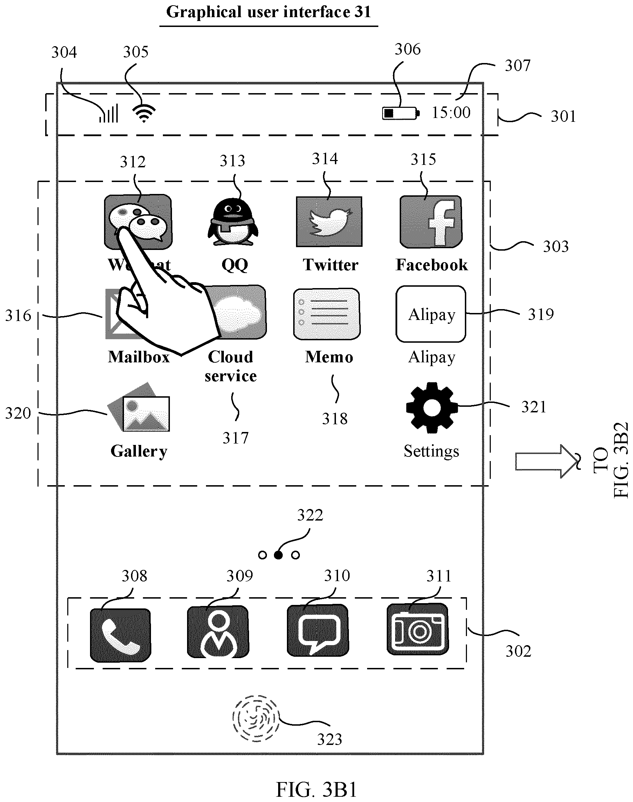

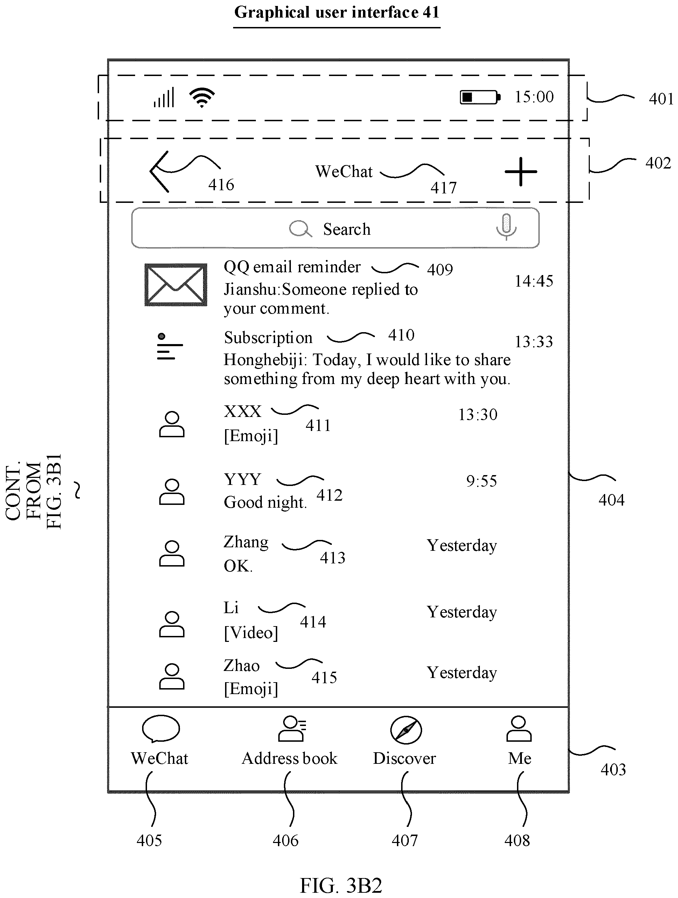

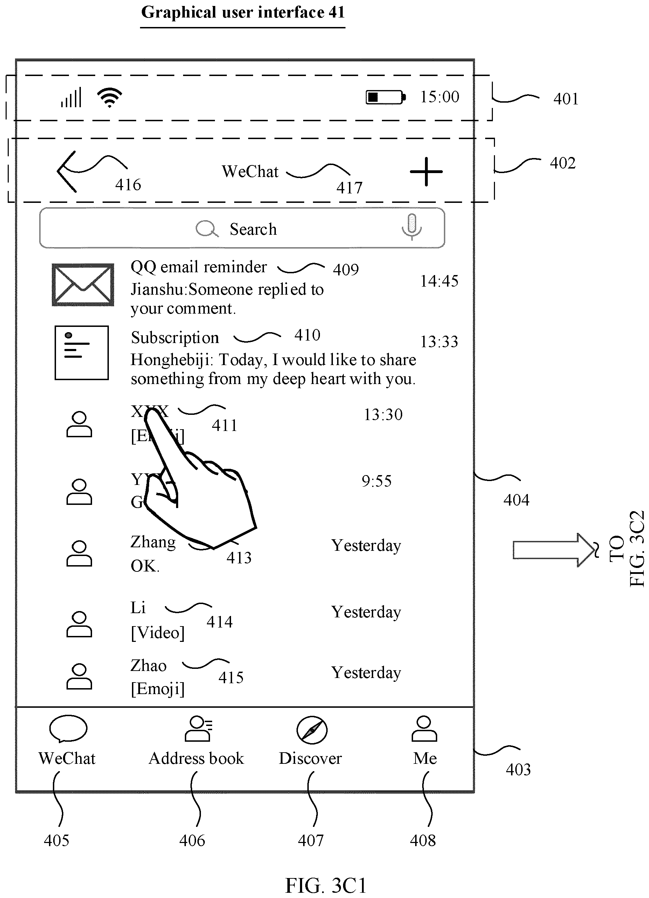

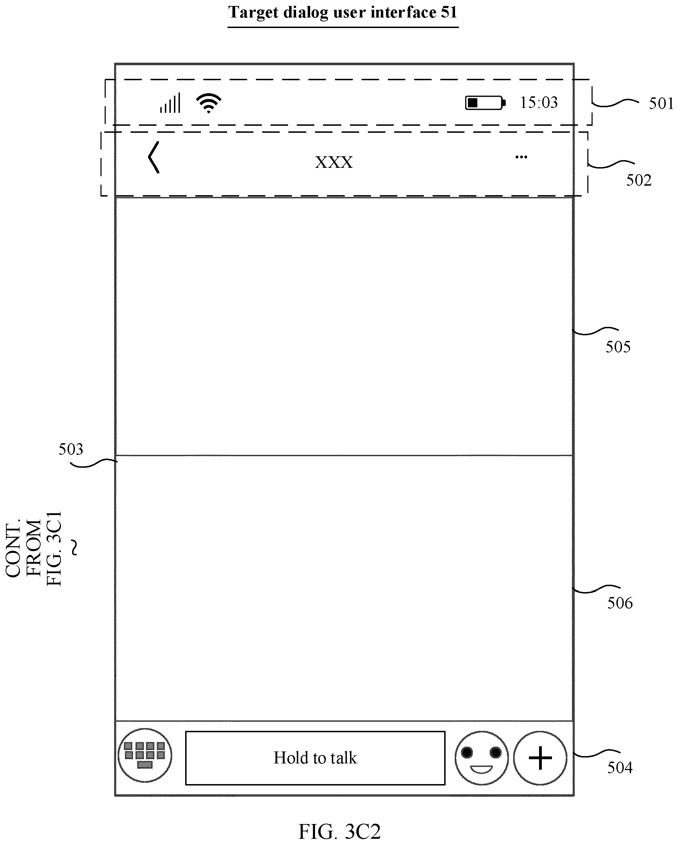

FIG. 3B1, FIG. 3B2, FIG. 3C1, and FIG. 3C2 show example graphical user interfaces implemented on the terminal device when the user enters the target dialog user interface on the terminal device 200 from the user interface used for the application program menu.

As shown in FIG. 3B1 and FIG. 3B2, when a tap operation on an icon of a target application program (for example, the WeChat icon 312) is detected, the terminal device 200 displays a graphical user interface 41 of the target application program in response to the tap operation.

As shown in FIG. 3B1 and FIG. 3B2, the graphical user interface 41 may include a status bar 401, a title bar 402, an option navigation bar 403, and a page content display region 404.

For the status bar 401, refer to the status bar 301 on the user interface 31 shown in FIG. 3A. Details are not described herein again.

The title bar 402 may include a back key 416 and a current-page indicator 417. The back key 416 may be configured to return to an upper-level menu. It can be understood by a person skilled in the art that a logical upper level of a page is fixed and is determined during design of an application program. The current-page indicator 417 may be used to indicate a current page. For example, the current-page indicator is text information "WeChat". The current-page indicator is not limited to text information, and may be alternatively an icon.

The option navigation bar 403 is used to display a plurality of application options of the target application program, and the option navigation bar 403 includes an application option 405 ("WeChat"), an application option 406 ("Address book"), an application option 407 ("Discover"), and an application option 408 ("Me").

The page content display region 404 is used to display a lower-level menu or content of an application option selected by the user. The content displayed in the option content display region 404 may change as the application option selected by the user changes. When detecting a tap operation on an application option in the option navigation bar 403, the terminal device 200 may respond to the tap operation, and the terminal device 200 may display a lower-level menu or content of the application option in the option content display region 404, and display a title of the application option in the option title bar.

The content displayed in the page content display region 404 is content corresponding to the application option 405 ("WeChat"), and includes an option 409 ("QQ email reminder"), an option 410 ("Subscription"), an option 411 ("XXX"), an option 412 ("YYY"), an option 413 ("Zhang"), an option 414 ("Li"), and an option 415 ("Zhao"). The option 411, the option 412, the option 413, and the option 414 are selected for a dialog. In this application, the application option 405 ("WeChat") may be referred to as a dialog application option, and a page content display region corresponding to the dialog application option may be used to display one or more dialog options. In an instant messaging scenario, one dialog option corresponds to one instant messaging dialog. Optionally, the dialog application option may also be referred to as a "friend" (for example, the target application program is Alipay), a "message" (for example, the target application program is QQ or Taobao), a "chat", or the like. This is not limited to the descriptions herein.

As shown in FIG. 3C1 and FIG. 3C2, when detecting a tap operation on a dialog option (for example, the dialog option 411) in a page content display region corresponding to a dialog application option ("WeChat"), the terminal device 200 displays a target dialog user interface 51 in response to the tap operation. The target dialog user interface 51 may include a status bar 501, a title bar 502, a dialog region 503, and a dialog input region 504.

For the status bar 501, refer to the status bar 301 on the graphical user interface 31 shown in FIG. 3A. For the title bar 502, refer to the title bar 402 on the graphical user interface 41 shown in FIG. 3B1 and FIG. 3B2. Details are not described herein again.

The dialog region 503 may include a dialog view 506 and a conceptual view 505. In this application, a region occupied by the dialog view 506 on the target dialog user interface 51 may be referred to as a first region, and a region occupied by the conceptual view 505 on the target dialog user interface 51 may be referred to as a second region. The dialog view 506 is used to display dialog data of a target dialog. The conceptual view 505 is used to display a knowledge subgraph corresponding to the target dialog. The knowledge subgraph corresponding to the target dialog may include a plurality of semantic entities, and a semantic relationship between semantic entities in the plurality of semantic entities. The plurality of semantic entities may include a semantic entity existing in the dialog data of the target dialog. For various cases of the knowledge subgraph corresponding to the target dialog, refer to subsequent descriptions.

The dialog input region 504 is a region in which a user holding or using the terminal device 200 enters dialog data, and the user holding or using the terminal device 200 may enter the dialog data by using text and/or voice.

With reference to FIG. 3B1, FIG. 3B2, FIG. 3C1, and FIG. 3C2, it can be learned that the user enters the target dialog user interface from the graphical user interface used for the application program menu by sequentially selecting to-be-displayed graphical user interfaces through a plurality of tap operations. Not limited to the manner of sequentially selecting the to-be-displayed graphical user interfaces through the plurality of tap operations, in an optional implementation, the user may alternatively sequentially select the to-be-displayed graphical user interfaces in another manner, to enter the target dialog user interface from the graphical user interface used for the application program menu. For example, the user may alternatively sequentially select the to-be-displayed graphical user interfaces through double-tapping, circle drawing, voice, or the like. This is not limited in this application. In addition, a specific quantity of selections, that is, a quantity of selections required for entering the target dialog user interface, is related to a user interface design of the target application program, and is not limited in this application.

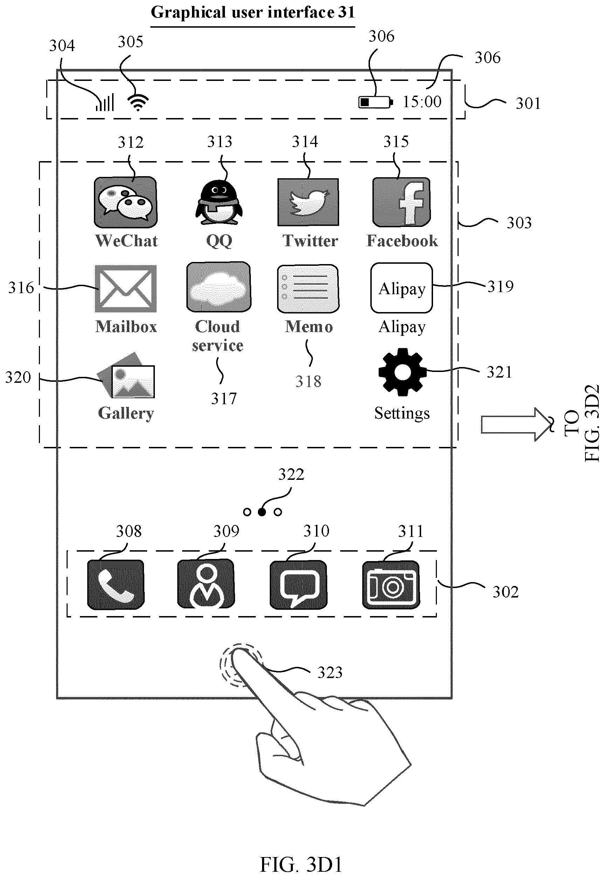

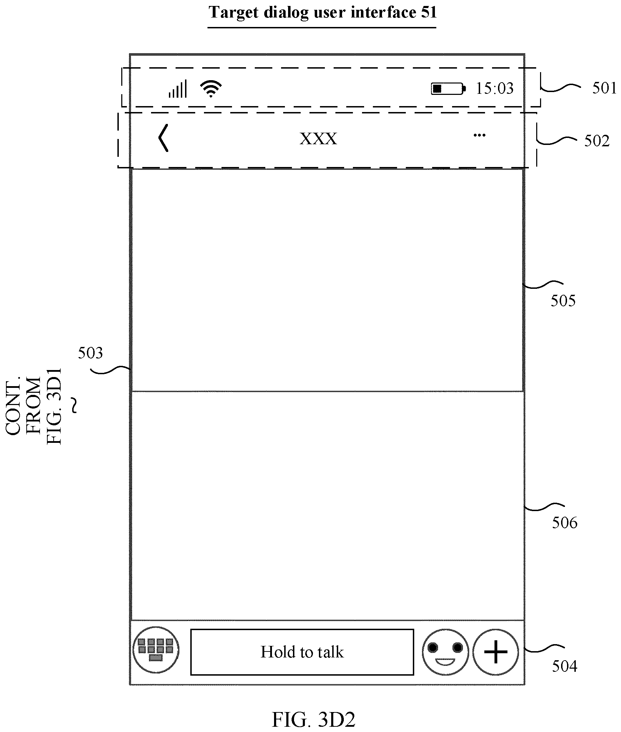

FIG. 3D1 and FIG. 3D2 show an example graphical user interface implemented on the terminal device when the user enters the target dialog user interface on the terminal device 200 from the user interface used for the application program menu.

As shown in FIG. 3D1 and FIG. 3D2, when a pressing operation performed by the user on the home screen key is detected and duration of the pressing operation is greater than a duration threshold, the terminal device 200 displays the target dialog user interface 51 in response to the pressing operation. For descriptions of the target dialog user interface 51, refer to the corresponding descriptions of FIG. 3C1 and FIG. 3C2. Details are not described herein again.

With reference to FIG. 3D1 and FIG. 3D2, it can be learned that the terminal device enters the target dialog user interface from the user interface used for the application program menu by directly invoking the target dialog user interface by pressing and holding the home screen key. Not limited to the manner of pressing and holding, in an optional implementation, the user may alternatively directly invoke the dialog user interface in another manner to enter the dialog user interface from the user interface used for the application program menu. For example, the user may alternatively invoke the target dialog user interface by drawing a circle on the user interface used for the application program menu, by double-tapping or triple-tapping the home screen key, or by using voice. This is not limited in this application.

Optionally, the user may alternatively enter the target dialog user interface by using another user interface displayed on the terminal device 200. This is not limited in this application. The another user interface may be a user interface on the terminal device other than a user interface of the target application program. For example, the another user interface may be a user interface of a memo on the terminal device.

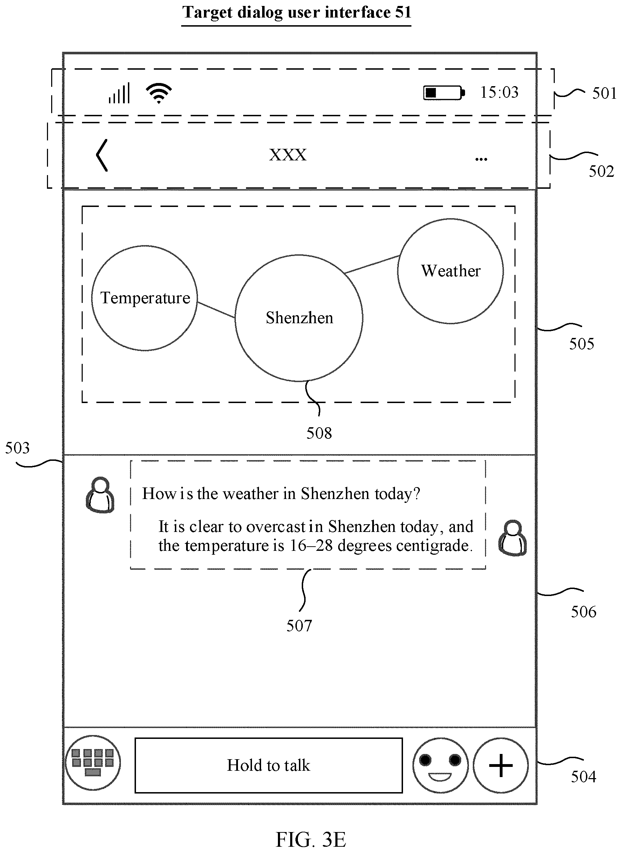

In some embodiments, before the user enters the target dialog user interface, dialog data of a target dialog has been generated in the dialog system, and the dialog system has a function of displaying dialog data of one or more dialogs that is generated before a current dialog. A start and an end of a dialog may be measured by whether the target dialog user interface is displayed or whether the target application program is started or closed. To be specific, entering the target dialog user interface indicates the start of the dialog, and exiting the target dialog user interface indicates the end of the dialog; or starting the target application program indicates the start of the dialog, and closing the target application program indicates the end of the dialog. For the target dialog user interface displayed on the terminal device 200, further refer to FIG. 3E. FIG. 3E shows an example target dialog user interface implemented on the terminal device 200. As shown in FIG. 3E, the target dialog user interface 51 may include a status bar 501, a title bar 502, a dialog region 503, and a dialog input region 504. For the status bar 501, the title bar 502, and the dialog input region 504, refer to the corresponding descriptions of FIG. 3C1 and FIG. 3C2. The target dialog user interface 51 shown in FIG. 3E differs from the target dialog user interface 51 shown in FIG. 3C1 and FIG. 3C2 or FIG. 3D1 and FIG. 3D2 in that the dialog view 506 in the dialog region 503 displays historical dialog data 507 ("How is the weather in Shenzhen today?" "It is clear to overcast in Shenzhen today, and the temperature is 16-28 degrees centigrade."), where the historical dialog data 507 is dialog data generated before the user enters the target dialog user interface; and the conceptual view 505 in the dialog region 504 displays a knowledge subgraph 508, where the knowledge subgraph 508 includes semantic entities ("Shenzhen", "weather", and "temperature") existing in the historical dialog data 507.

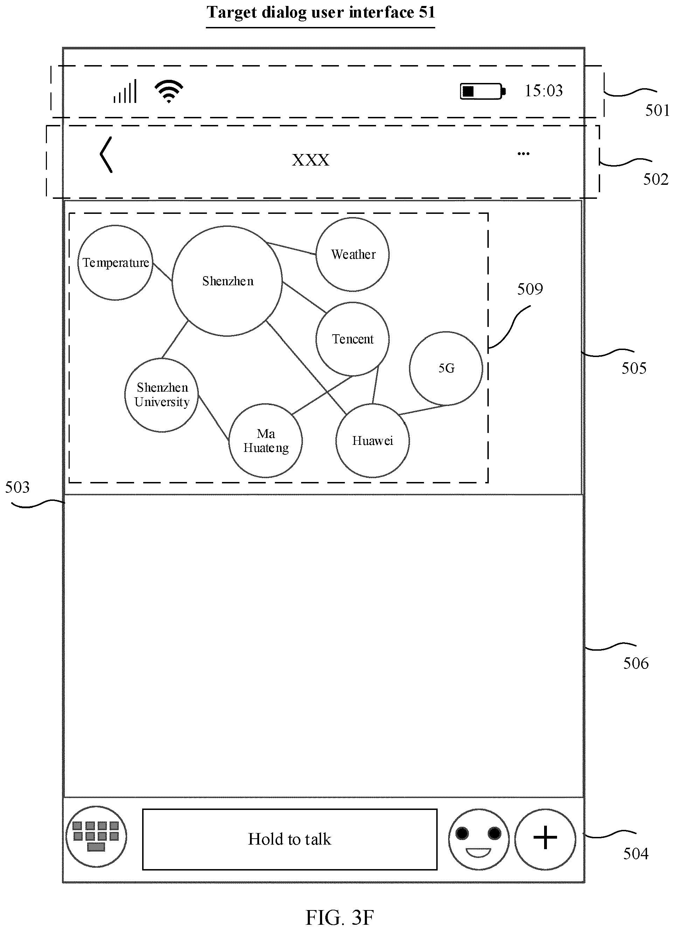

In some embodiments, the dialog system does not have a function of displaying dialog data of one or more dialogs that is generated before a current dialog, or no dialog data of a target dialog has been generated in the dialog system before the user enters the target dialog user interface. For a definition of a dialog, refer to the foregoing descriptions. For the target dialog user interface displayed on the terminal device 200, further refer to FIG. 3F. FIG. 3F shows an example target dialog user interface implemented on the terminal device 200. As shown in FIG. 3F, the target dialog user interface 51 may include a status bar 501, a title bar 502, a dialog region 503, and a dialog input region 504. For the status bar 501, the title bar 502, and the dialog input region 504, refer to the corresponding descriptions of FIG. 3C1 and FIG. 3C2. The target dialog user interface 51 shown in FIG. 3F differs from the target dialog user interface 51 shown in FIG. 3E in that the dialog view 506 in the dialog region 503 does not display dialog data, and the conceptual view 505 in the dialog region 503 displays a knowledge subgraph 509. The knowledge subgraph 509 may be referred to as an initial knowledge subgraph. The initial knowledge subgraph may include a plurality of initial semantic entities ("Shenzhen", "weather", "temperature", "Shenzhen University", "Ma Huateng", "Tencent", "Huawei", and "5G"). The initial semantic entity may be one or more of the following:
the initial semantic entity is a semantic entity existing in dialog data of one or more dialogs that is generated before a current dialog;
the initial semantic entity is a semantic entity with relatively high popularity in the dialog system;
the initial semantic entity is a semantic entity related to a to-do item in the user's schedule; and
the initial semantic entity is a semantic entity determined based on a user profile of the user.

Not limited to the foregoing several cases, in an optional implementation, the initial semantic entity may be alternatively in other cases. This is not limited in this application. For specific descriptions of the foregoing several initial semantic entities, refer to descriptions of subsequent method embodiments.

FIG. 3C1 to FIG. 3F show some possible cases of the target dialog user interface as examples. Not limited to the foregoing cases, in an optional implementation, the target dialog user interface may further include a view switching button. A function of the view switching button may be switching a type of a view displayed in the dialog region. To be specific, by using the view switching button, the dialog region may be enabled to display only the dialog view, or display only the conceptual view, or display the dialog view and the conceptual view. Optionally, a function of the view switching button may be alternatively enabling or disabling the conceptual view. To be specific, by using the view switching button, the conceptual view may be disabled, so that the dialog region displays only the dialog view; or the conceptual view may be enabled, so that the dialog region displays the dialog view and the conceptual view. Optionally, the view switching button may be alternatively an interface element such as an icon, an option bar, or a floating window. In an optional implementation, the target dialog view interface 51 may alternatively not include the title bar 502 shown in FIG. 3C1 to FIG. 3F. A specific presentation of the target dialog user interface when the user enters a target view interface is not limited in this application.

It should be understood that the graphical user interfaces shown in FIG. 3A to FIG. 3F are merely several examples provided in this application to describe some graphical user interfaces implemented on the terminal device in a process of entering the target dialog user interface, and do not constitute a limitation on this application.

After entering the target dialog user interface, the user may perform an operation related to dialog data, and content displayed on the target dialog user interface is related to the user operation. The following describes some graphical user interfaces implemented on the terminal device after the user enters the target dialog user interface.

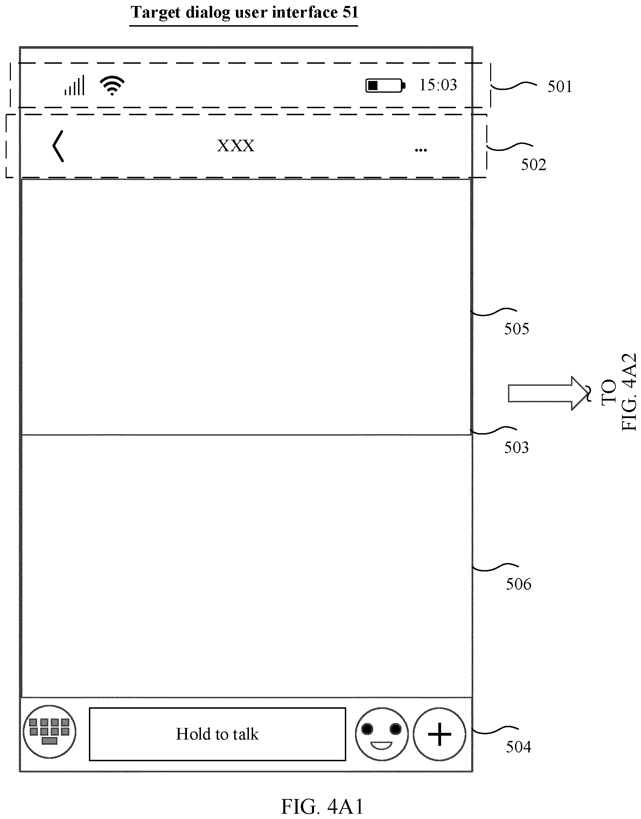

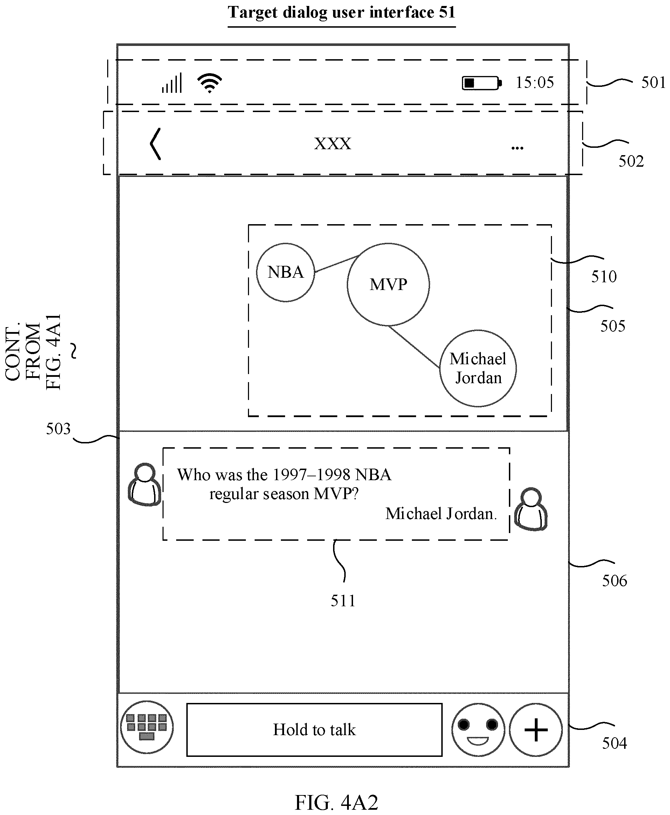

In some embodiments, content displayed in the dialog view and the conceptual view changes as new dialog data is generated in the dialog system. FIG. 4A1 and FIG. 4A2 show an example graphical user interface implemented on the terminal device 200 when new dialog data is generated.

FIG. 4A1 shows the target dialog user interface implemented on the terminal device 200 when the user enters the target dialog user interface. As shown in FIG. 4A2, when new dialog data 511 ("Who was the 1997-1998 NBA regular season MVP?" "Michael Jordan.") is generated in the dialog system, the terminal device 200 obtains the new dialog data 511. The terminal device 200 updates the dialog view 506 and the conceptual view 505. An updated dialog view 506 displays the new dialog data 511. An updated conceptual view 505 displays a knowledge subgraph 510. The knowledge subgraph 510 includes semantic entities ("NBA", "MVP", and "Michael Jordan") existing in the new dialog data 511.

With reference to FIG. 4A1 and FIG. 4A2, it can be learned that the terminal device updates the dialog view and the conceptual view when obtaining the new dialog data, the updated dialog view displays the new dialog data, the updated conceptual view displays the knowledge subgraph updated based on the new dialog data, and the updated knowledge subgraph includes the semantic entities existing in the new dialog data.

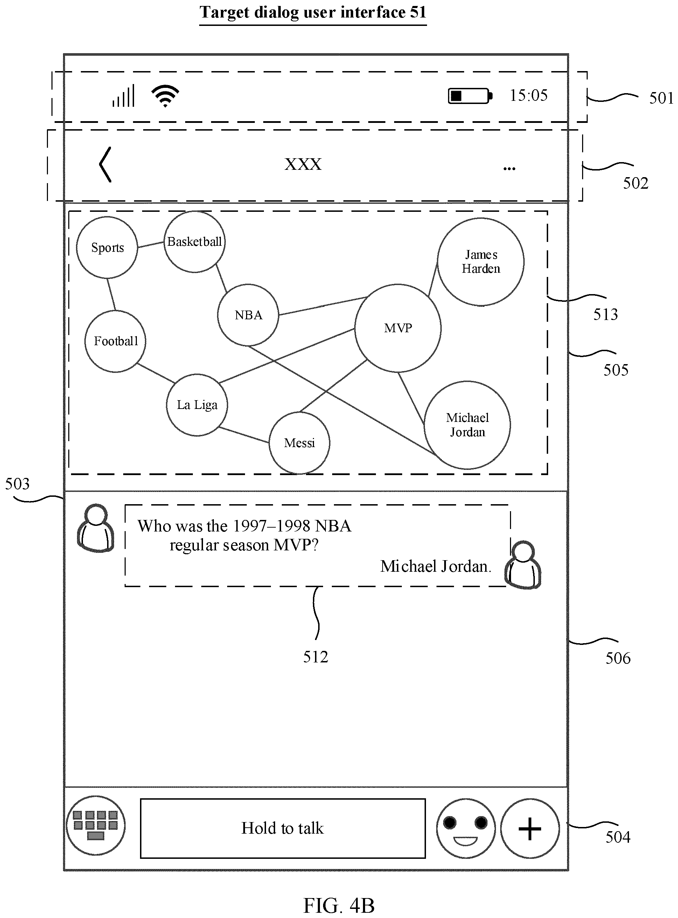

In some embodiments, in addition to a semantic entity existing in dialog data, the knowledge subgraph displayed in the conceptual view may further include a semantic entity associated with the semantic entity existing in the dialog data. FIG. 4B shows an example graphical user interface that is implemented on the terminal device and that displays a semantic entity associated with a semantic entity existing in dialog data.

As shown in FIG. 4B, the dialog view 506 displays dialog data 512 ("Who was the 1997-1998 NBA regular season MVP?" "Michael Jordan."), and the conceptual view 505 displays a knowledge subgraph 513. The knowledge subgraph 513 includes a first semantic entity ("NBA", "MVP", and "Michael Jordan"), where the first semantic entity is a semantic entity existing in the dialog data 512; and a second semantic entity associated with the first semantic entity ("sports", "basketball", "football", "LaLiga", "Messi", and "James Harden").

With reference to FIG. 4B, it can be learned that, in addition to the first semantic entity existing in the dialog data displayed in the dialog view, the knowledge subgraph displayed in the conceptual view may further include the second semantic entity, where the second semantic entity is a semantic entity associated with the first semantic entity. For specific cases of the second semantic entity, refer to descriptions in subsequent method embodiments.

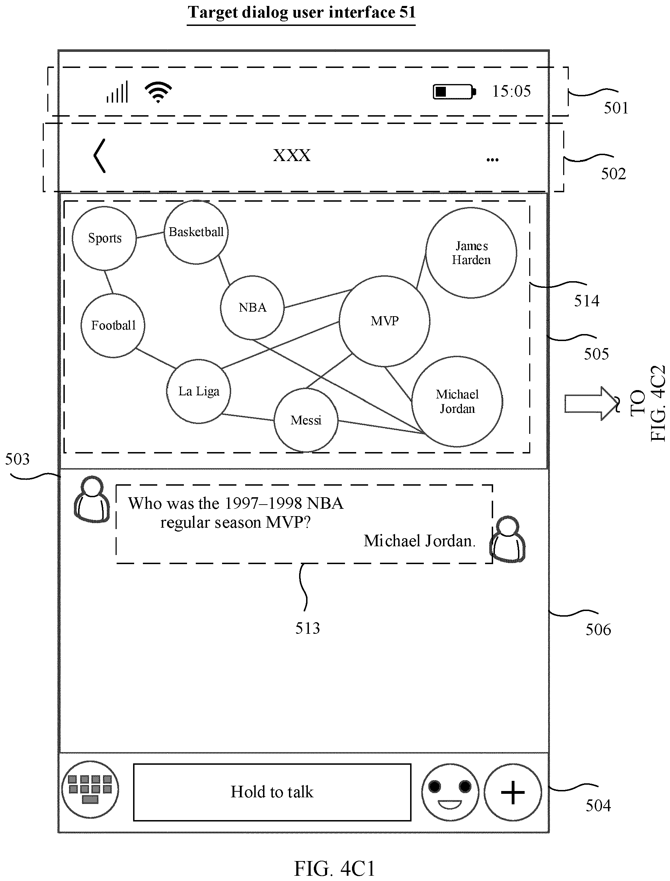

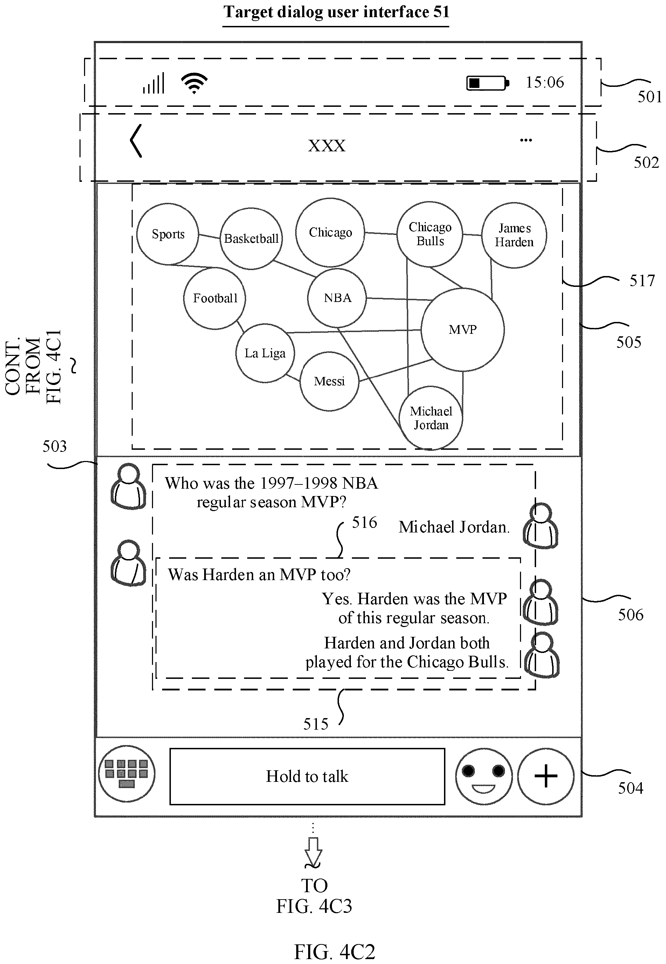

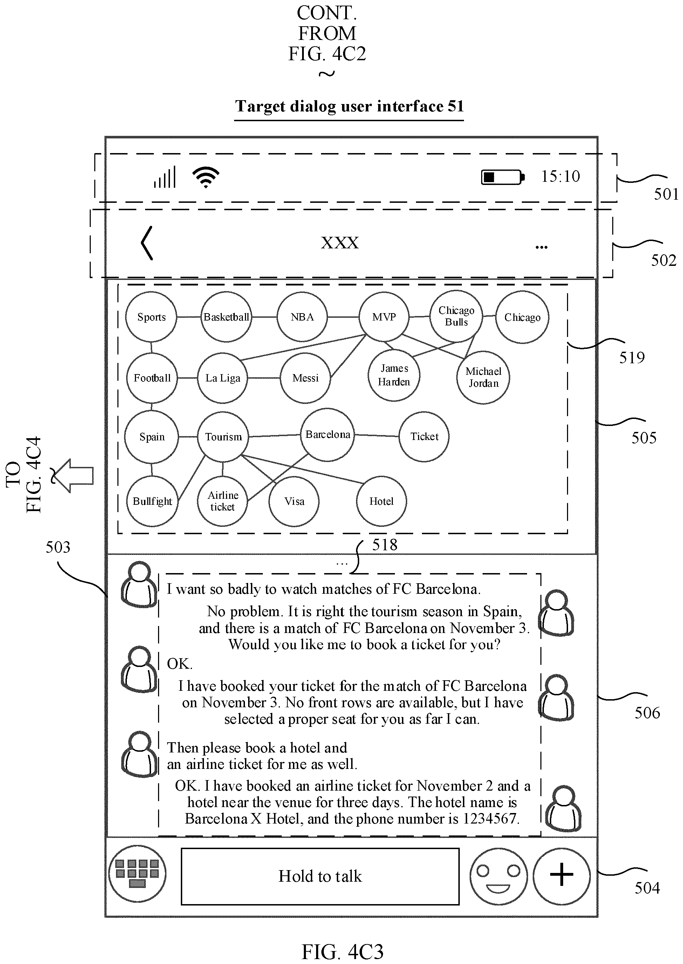

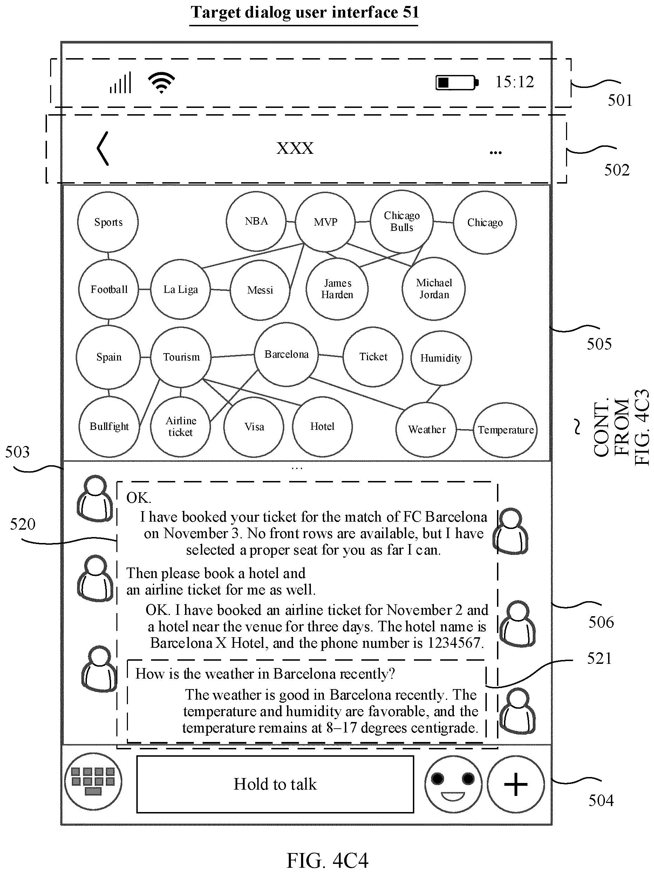

In some embodiments, a semantic entity included in the knowledge subgraph displayed in the conceptual view and a quantity of semantic entities may change with a change of dialog data. A shape of the knowledge subgraph and a manner of displaying a semantic entity in the knowledge subgraph may also change with the change of the quantity of semantic entities in the knowledge subgraph. FIG. 4C1 to FIG. 4C4 show some example graphical user interfaces implemented on the terminal device 200 when the knowledge subgraph displayed in the conceptual view changes with a change of dialog data.

As shown in FIG. 4C1, the dialog view 506 displays dialog data 513 ("Who was the 1997-1998 NBA regular season MVP?" "Michael Jordan."). A volume of the dialog data 513 is relatively small. The conceptual view 505 displays a knowledge subgraph 514. A quantity of semantic entities in the knowledge subgraph 514 is also relatively small, and the semantic entities in the knowledge subgraph 514 are displayed in the conceptual view 505 in a relatively sparse and extended manner.

As shown in FIG. 4C2, the dialog view 506 displays dialog data 515. Compared with the dialog data 513 in FIG. 4C1, new dialog data 516 ("Was Harden an MVP too?" "Yes. Harden was the MVP of this regular season." "Harden and Jordan both played for the Chicago Bulls.") is added. A volume of the dialog data is increased. The conceptual view 505 displays a knowledge subgraph 517. Compared with the knowledge subgraph 514 in FIG. 4C1, a quantity of semantic entities in the knowledge subgraph 517 is increased, and two semantic entities are added: "Chicago" and "Chicago Bulls". Compared with the manner of displaying the semantic entities in the knowledge subgraph 514, the semantic entities in the knowledge subgraph 517 are displayed in the conceptual view 505 more densely.

As shown in FIG. 4C3, the dialog view 506 displays data of a plurality of dialogs. The dialog view 506 displays dialog data 518 ("I want so badly to watch matches of FC Barcelona." "No problem. It is right the tourism season in Spain, and there is a match of FC Barcelona on November 3. Would you like me to book a ticket for you?" "OK." "I have booked your ticket for the match of FC Barcelona on November 3. No front rows are available, but I have selected a proper seat for you as far I can." "Then please book a hotel and an airline ticket for me as well." "OK. I have booked an airline ticket for November 2 and a hotel near the venue for three days. The hotel name is Barcelona X Hotel, and the phone number is 1234567."). A volume of the dialog data is increased. The conceptual view 505 displays a knowledge graph 519. Compared with the knowledge subgraph 517 in FIG. 4C2, a quantity of semantic entities in the knowledge subgraph 519 is further increased. Compared with the manner of displaying the semantic entities in the knowledge graph 517, the semantic entities in the knowledge subgraph 519 are displayed in the conceptual view 505 in a parallel layout.

As shown in FIG. 4C4, the dialog view 506 displays dialog data 520. Compared with the dialog data 518 in FIG. 4C3, new dialog data 521 ("How is the weather in Barcelona recently?" "The weather is good in Barcelona recently. The temperature and humidity are favorable, and the temperature remains at 8-17 degrees centigrade.") is added. A volume of the dialog data is further increased. The conceptual view 505 displays a knowledge subgraph 522. Compared with the knowledge subgraph 519 in FIG. 4C3, some semantic entities ("basketball") are deleted, and semantic entities ("weather", "temperature", and "humidity") in the new dialog data 521 are added. The semantic entities in the knowledge subgraph 522 are displayed in the conceptual view 505 in a parallel layout.

With reference to FIG. 4C1 to FIG. 4C4, it can be learned that a quantity of semantic entities displayed in the conceptual view increases as a volume of dialog data increases. When a relatively large quantity of semantic entities cannot be displayed in a sparse and extended manner, the semantic entities may be displayed in the conceptual view in a dense and compact manner (for example, in the parallel layout shown in FIG. 4C3 and FIG. 4C4). With a further increase in a quantity of semantic entities, when a quantity of semantic entities is relatively large, one or more semantic entities in the knowledge subgraph may be deleted, so that a semantic entity existing in new dialog data can be displayed in the conceptual view. For a specific logic and manner of deleting the semantic entity, refer to descriptions in subsequent method embodiments.

It should be understood that FIG. 4C1 to FIG. 4C4 are merely an example provided in this application to interpret descriptions that a semantic entity included in the knowledge subgraph displayed in the conceptual view and a quantity of semantic entities may change with a change of dialog data, and that semantic entities are displayed in a dense and compact manner when a quantity of semantic entities is relatively large. This does not constitute a limitation on this application. In an optional implementation, there may be alternatively another dense and compact manner. For example, as a quantity of semantic entities in the knowledge subgraph increases, when the knowledge subgraph is displayed in the conceptual view, a region occupied by some or all semantic entities in the conceptual view may be narrowed to display more semantic entities, or a distance between some or all semantic entities in the conceptual view may be shortened to display more semantic entities. This is not limited in this application.

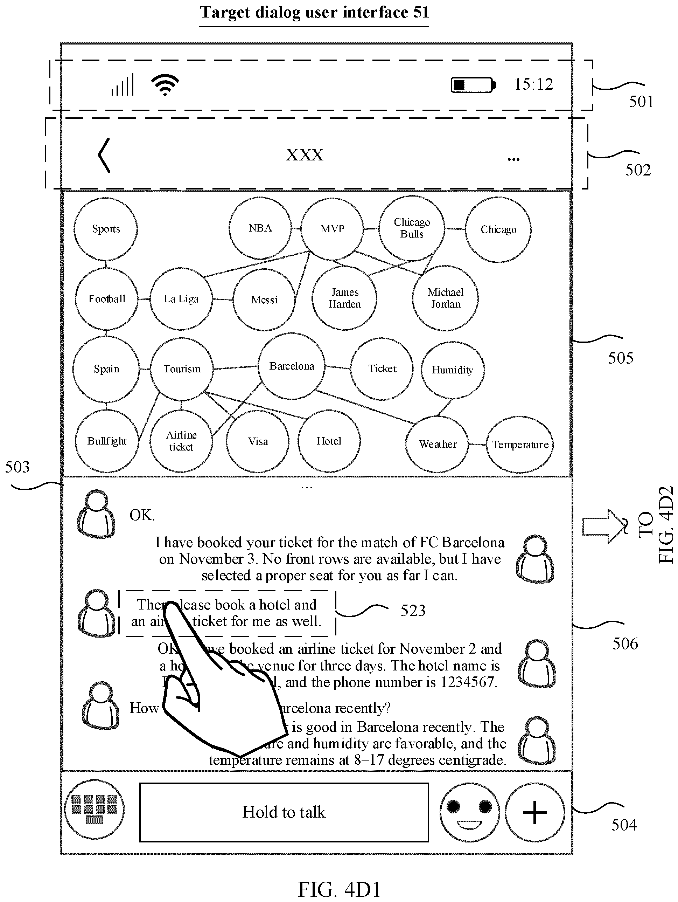

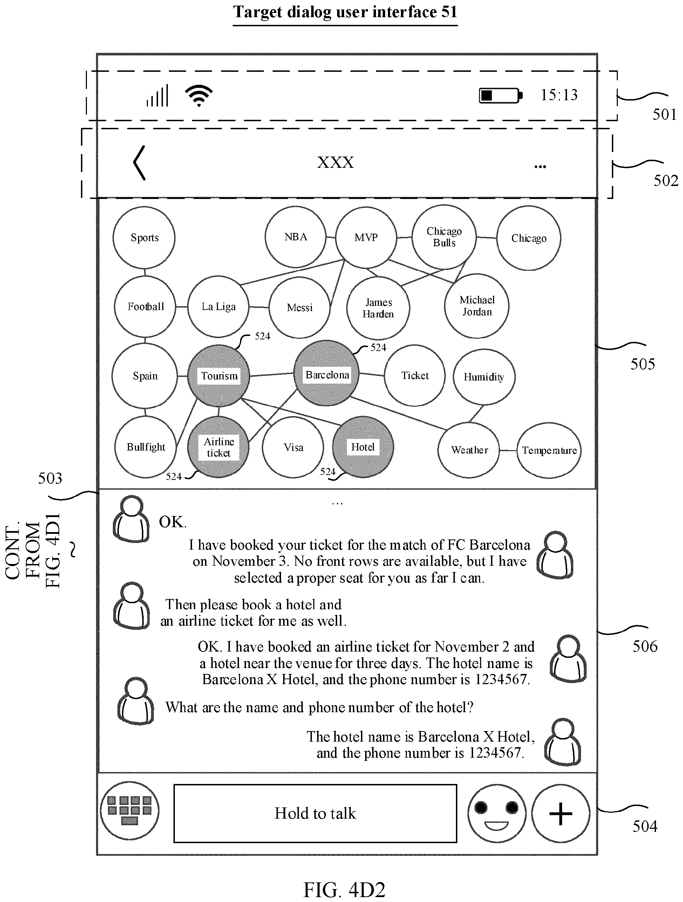

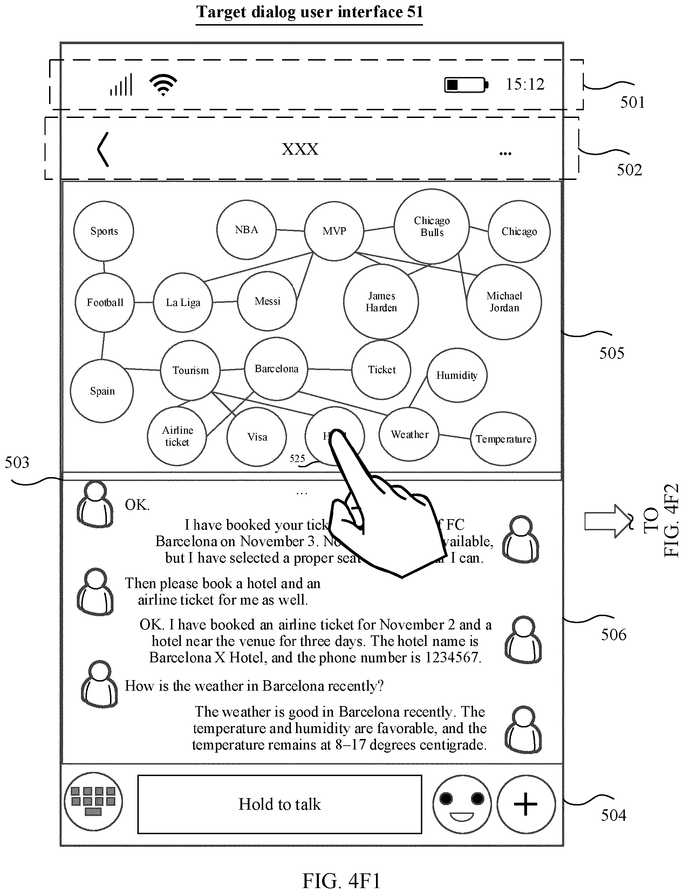

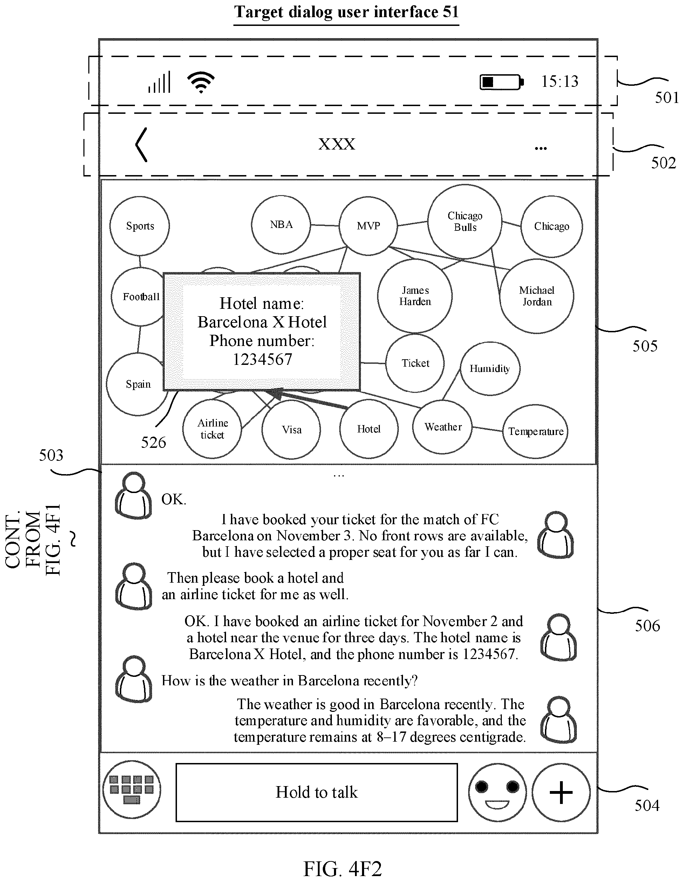

In some embodiments, the conceptual view and the dialog view may interact with each other collaboratively. FIG. 4D1 to FIG. 4F2 show example graphical user interfaces implemented on the terminal device 200 when the conceptual view and the dialog view interact with each other collaboratively.

As shown in FIG. 4D1 and FIG. 4D2, when detecting a tap operation on first dialog data 523 (for example, the dialog data "Then please book a hotel and an airline ticket for me as well.") displayed in the dialog view 506, the terminal device 200 highlights a third semantic entity 524 ("Barcelona", "tourism", "hotel", and "airline ticket") in the conceptual view 505 in response to the tap operation. The third semantic entity 524 is a semantic entity related to the first dialog data 523. For a specific definition of the third semantic entity, refer to descriptions in subsequent method embodiments.

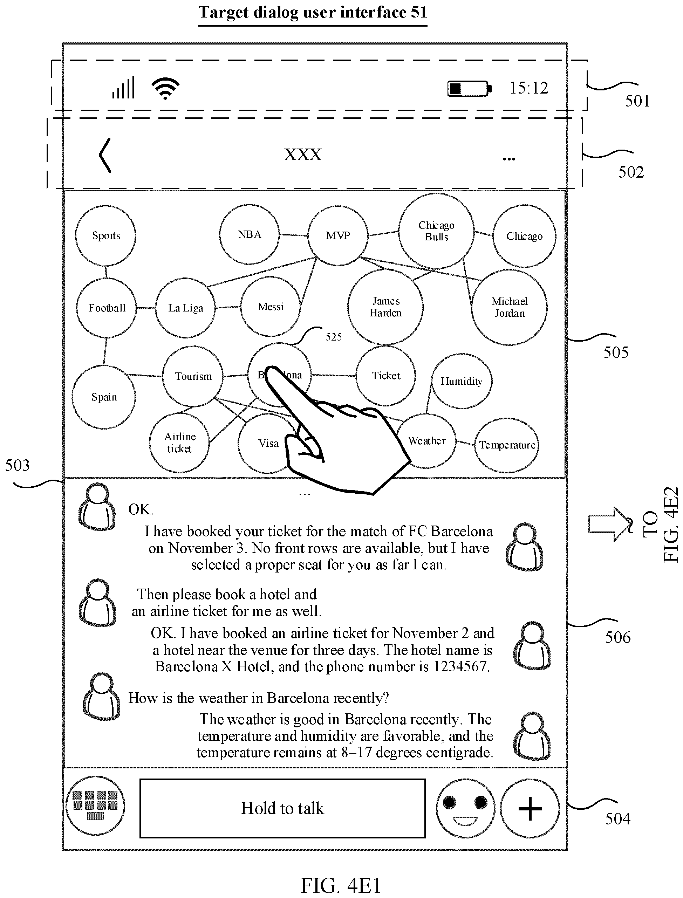

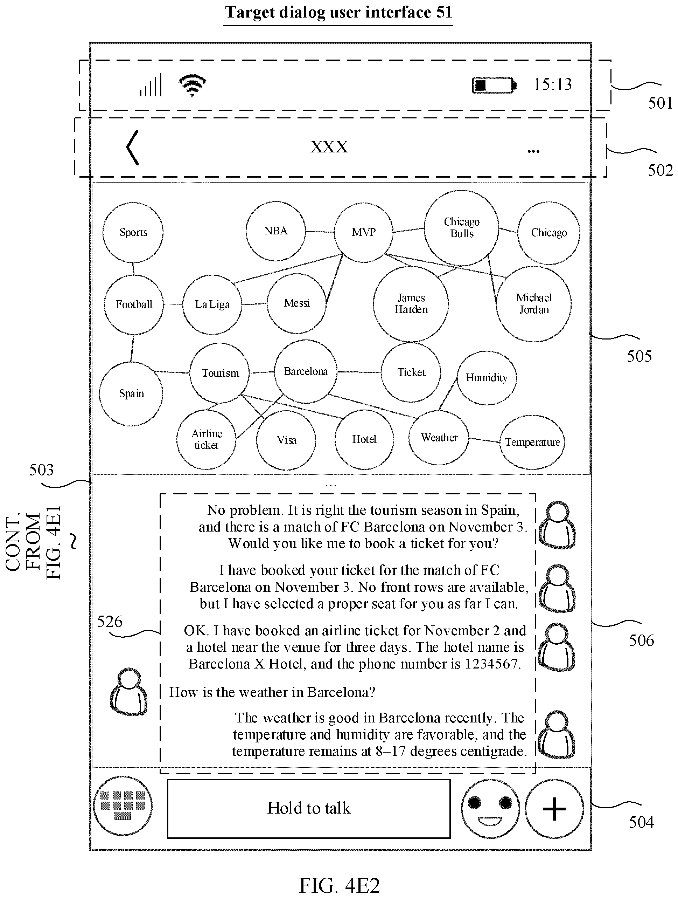

As shown in FIG. 4E1 and FIG. 4E2, when detecting a tap operation on a fourth semantic entity 525 (for example, the semantic entity "Barcelona") displayed in the conceptual view 505, the terminal device 200 displays second dialog data 526 ("No problem. It is right the tourism season in Spain, and there is a match of FC Barcelona on November 3. Would you like me to book an airline ticket for you?" "I have booked your ticket for the match of FC Barcelona on November 3. No front rows are available, but I have selected a proper seat for you as far I can." "OK. I have booked an airline ticket for November 2 and a hotel near the venue for three days. The hotel name is Barcelona X Hotel, and the phone number is 1234567." "How is the weather in Barcelona?" "The weather is good in Barcelona recently. The temperature and humidity are favorable, and the temperature remains at 8-17 degrees centigrade.") in the dialog view 506 in response to the tap operation. The second dialog data 526 is dialog data related to the fourth semantic entity. For a specific definition of the second dialog data, refer to descriptions in subsequent method embodiments.

As shown in FIG. 4F1 and FIG. 4F2, when detecting a tap operation on a fourth semantic entity 525 (for example, the semantic entity "hotel") displayed in the conceptual view 505, the terminal device 200 displays abstract information 526 (hotel name: Barcelona X Hotel, phone number: 1234567) of second dialog data ("OK. I have booked an airline ticket for November 2 and a hotel near the venue for three days. The hotel name is Barcelona X Hotel, and the phone number is 1234567.") in the conceptual view 505 in response to the tap operation. The second dialog data is dialog data related to the fourth semantic entity 525. For a specific definition of the second dialog data, refer to descriptions in subsequent method embodiments.

With reference to FIG. 4D1 to FIG. 4F2, it can be learned that dialog data displayed in the dialog view and a semantic entity displayed in the conceptual view may have a linkage relationship, and when detecting a user operation acting on dialog data corresponding to a semantic entity or on a semantic entity corresponding to dialog data, the terminal device jointly displays the semantic entity corresponding to the dialog data or the dialog data corresponding to the semantic entity. For a manner of determining the semantic entity corresponding to the dialog data or the dialog data corresponding to the semantic entity, refer to subsequent descriptions.

It should be understood that the graphical user interfaces shown in FIG. 4D1 to FIG. 4F2 are merely several examples provided in this application to describe collaborative interaction between the conceptual view and the dialog view, and do not constitute a limitation on this application. In an optional implementation, there may be alternatively more implementations of collaborative interaction between the conceptual view and the dialog view. For example, the tap operation in FIG. 4D1 to FIG. 4F2 may be alternatively a user operation used to select a view element, such as a double-tap operation, a press-and-hold operation, or a voice instruction operation. For another example, in addition to the highlighted display manner in FIG. 4D1 and FIG. 4D2, a semantic entity related to dialog data selected by the user may be alternatively distinctly displayed in another manner, such as displaying by using a pop-up window, displaying by using a floating window, or separate displaying (to be specific, only the semantic entity related to the dialog data selected by the user is displayed in the conceptual view). For another example, a knowledge subgraph displayed in the conceptual view may be switched with switching of dialog data in the dialog view, and a switched-to knowledge subgraph corresponds to dialog data displayed in the dialog view; and dialog data in the dialog view may also be switched with switching of a knowledge subgraph in the conceptual view, and switched-to dialog data corresponds to a knowledge subgraph displayed in the conceptual view. A specific manner of collaborative interaction between the conceptual view and the dialog view is not limited in this application.

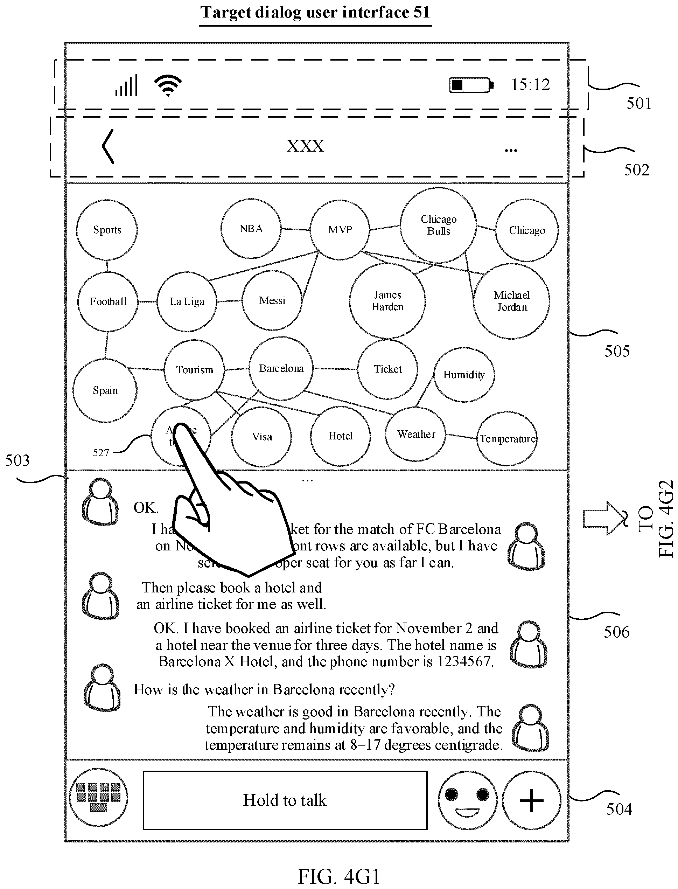

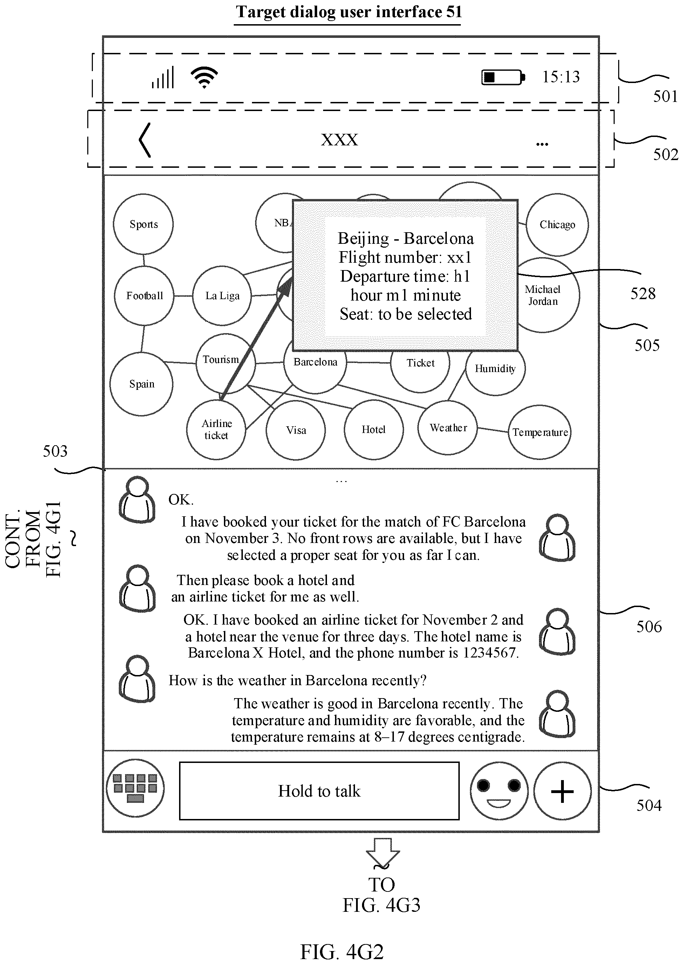

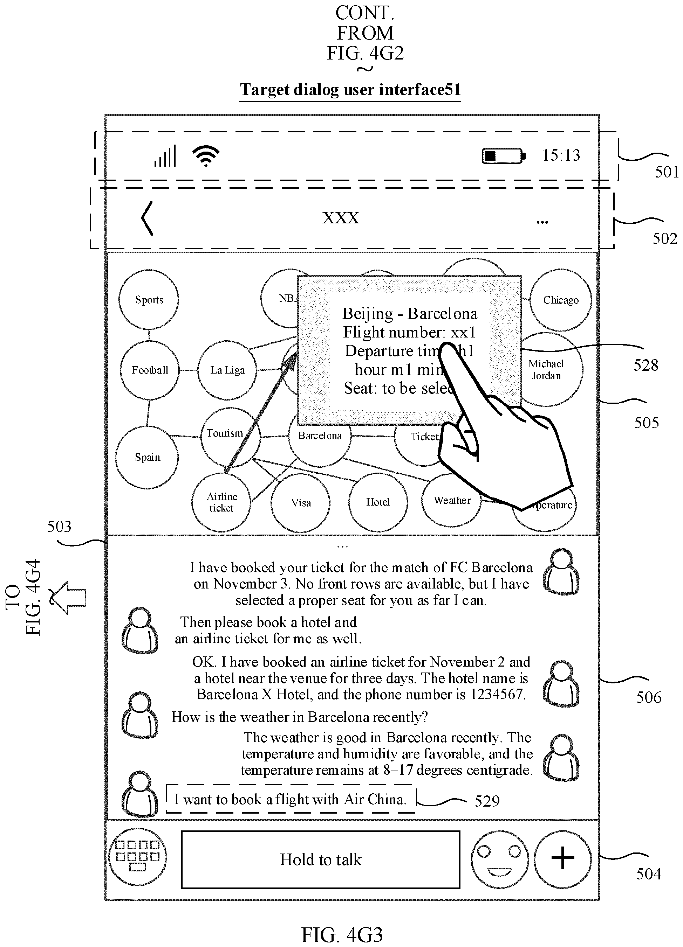

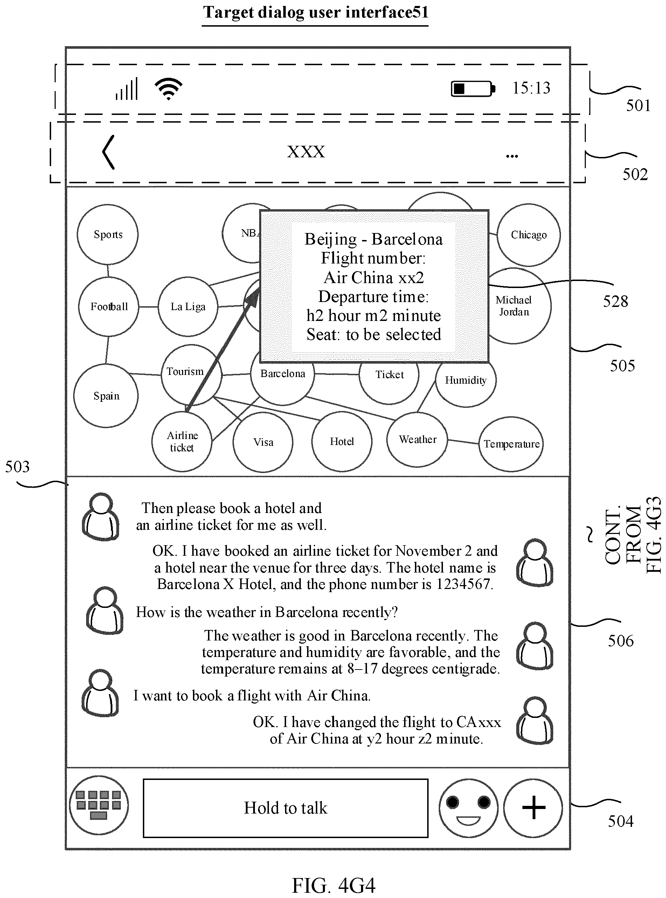

In some embodiments, a task semantic entity used to trigger a dialog task may be further displayed in the conceptual view, and each task semantic entity may correspond to one or more dialog tasks. FIG. 4G1 to FIG. 4G4 show an example graphical user interface implemented on the terminal device 200 when a dialog task is triggered.

As shown in FIG. 4G1 and FIG. 4G2, when detecting a tap operation on a task semantic entity 527 (for example, "airline ticket") displayed in the conceptual view 505, the terminal device 200 displays key information 528 ("flight number: xx1, departure time: h1 hour m1 minute, seat: to be selected") in the conceptual view 505 in response to the tap operation.

As shown in FIG. 4G3 and FIG. 4G4, when detecting a tap operation on key information 528 displayed in the conceptual view 505 and obtaining dialog data 529 ("I want to book a flight with Air China."), in response to the tap operation, the terminal device 200 triggers execution of a dialog task that meets a user intention of the dialog data 529 for booking an airline ticket for a flight with Air China. After triggering the execution of the dialog task that meets the user intention of the dialog data 529 for booking an airline ticket for a flight with Air China, the terminal device 200 updates the key information 528 ("Beijing - Barcelona, flight number: Air China xxx, departure time: h2 hour m2 minute, seat: to be selected") in the conceptual view 505.

With reference to FIG. 4G1 to FIG. 4G4, it can be learned that, in addition to the knowledge subgraph, the conceptual view may be further used to display a task semantic entity that is in the knowledge subgraph and that is used to trigger a dialog task. Based on an operation performed by the user on key information of the task semantic entity and a user intention, the terminal device triggers, in response to the operation of the user, execution of a dialog task that meets the user intention. It should be understood that the graphical user interface shown in FIG. 4G1 to FIG. 4G4 is merely an example provided in this application to describe a functional semantic entity and triggering of a system function corresponding to the functional semantic entity, and does not constitute a limitation on this application. In an optional implementation, there may be alternatively a manner of triggering execution of the dialog task that meets the user intention. For example, the foregoing key information may alternatively exist as a view element such as an icon, a button, a floating window, or a pop-up box. Tapping the view element corresponding to the key information triggers displaying of a lower-level menu or detailed content of the key information. Then the dialog task that meets the user intention is triggered through successively tapping and selection. A specific manner of triggering the dialog task by using the task semantic entity is not limited in this application.

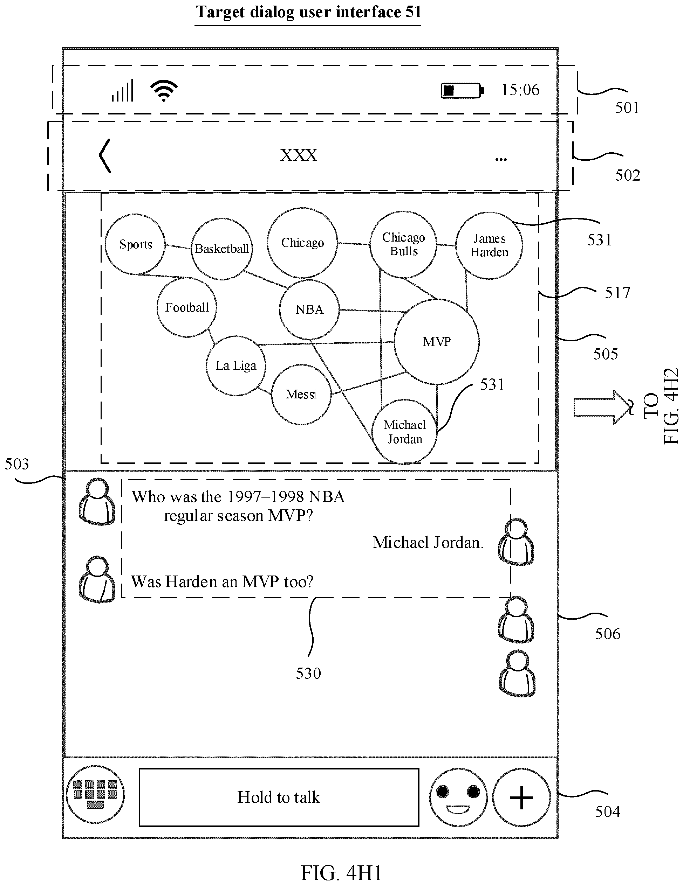

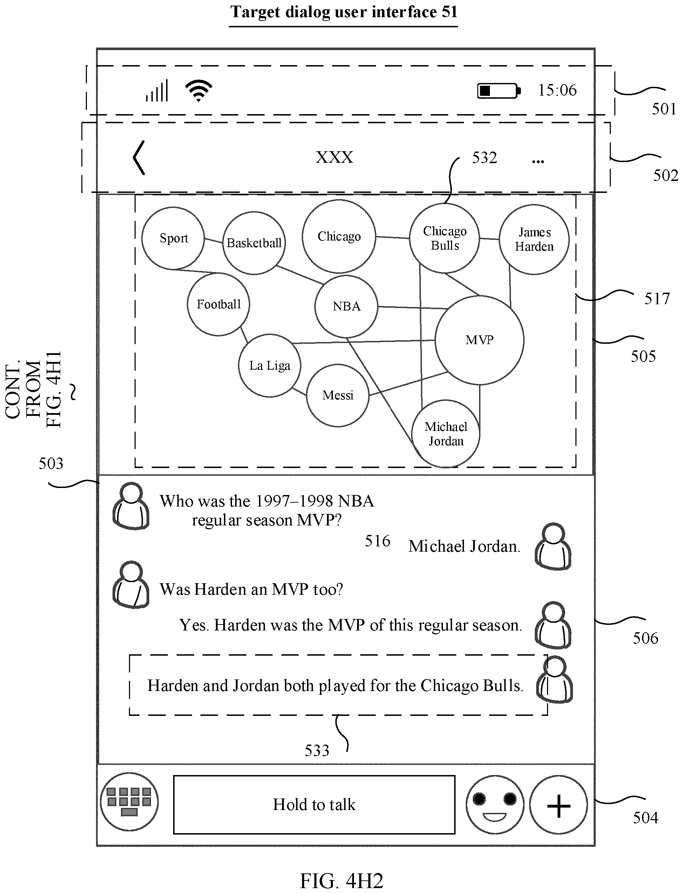

In some embodiments, the dialog system may alternatively actively initiate a dialog when the dialog system is a human-computer-interaction-based dialog system. FIG. 4H1 and FIG. 4H2 show some example graphical user interfaces implemented on the terminal device 200 when the dialog system initiates a dialog. As shown in FIG. 4H1 and FIG. 4H2, when a new semantic entity 532 ("Chicago Bulls") that has a semantic relationship with a semantic entity 531 ("Harden" and "Jordan") in historical dialog data 530 ("Who was the 1997-1998 NBA regular season MVP?" "Michael Jordan." "Was Harden an MVP too?") in the knowledge subgraph is identified, and the new semantic entity 532 does not exist in the historical dialog data 530, the terminal device initiates a dialog based on the semantic entity 531 existing in the historical dialog data 530 and the new semantic entity 532, and displays initiated third dialog data 533 ("Harden and Jordan both played for the Chicago Bulls.") in the dialog view 506.

With reference to FIG. 4H1 and FIG. 4H2, it can be learned that, when finding, through querying, that semantic entities included in a historical dialog have a path connection included in the historical dialog and a path connection not included in the historical dialog, the terminal device may alternatively actively initiate a dialog, to generate dialog data for guiding a topic.

Not limited to the graphical user interface embodiments shown in FIG. 3A to FIG. 3F and FIG. 4A1 to FIG. 4H2, in an optional implementation, the graphical user interface corresponding to the dialog system may be displayed in another manner. For example, the conceptual view and the dialog view of the target dialog user interface may be alternatively displayed in a left-right arrangement; or the target dialog user interface may not include view elements such as a status bar and a title bar. A specific manner of displaying the graphical user interface corresponding to the dialog system is not limited in this application.

With reference to the graphical user interface embodiments in FIG. 4A1 to FIG. 4H2, it can be learned that, in the solutions of this application, the conceptual view used to display the knowledge subgraph corresponding to the target dialog is added to the target dialog user interface based on a knowledge graph. The collaborative interaction between the dialog view and the conceptual view helps review historical dialog data, guide a topic direction, prompt a functional boundary of the dialog system, and the like, thereby improving dialog interaction experience of the user. The following describes technical solutions for implementing the foregoing graphical user interface embodiments.

Some concepts included in the technical solutions of this application are described first.

### 1. Knowledge graph

A knowledge graph may also be referred to as a scientific knowledge graph, and is a knowledge base that stores various entities existing in the real world and an association between the entities. The knowledge graph includes a node and an edge. The node represents an entity existing in the real world, and the edge represents an association relationship between entities. In this application, the knowledge graph may be a general-field knowledge graph. The general-field knowledge graph may also be referred to as an open-field knowledge graph, and is a knowledge graph that includes entities and relationships in a plurality of fields, emphasizes integration of more entities, and focuses on breadth of knowledge. The open-field knowledge graph may be used in fields such as intelligent searches. In this application, the knowledge graph may be alternatively a vertical-field knowledge graph. The vertical-field knowledge graph may also be referred to as an industry knowledge graph, and is a knowledge graph constructed based on data of a specific industry. The industry knowledge graph is a knowledge depth that focuses on depth of knowledge, and may be understood as an industry knowledge base based on a semantic technology.

### 2. Knowledge subgraph

A knowledge subgraph is a subgraph of a knowledge graph. In other words, the knowledge subgraph is part of the knowledge graph. A node and a relationship included in the knowledge subgraph both come from the knowledge graph. The knowledge subgraph may be formed by selecting one or more nodes and one or more association relationships from the knowledge graph according to a specific selection rule. In this application, a knowledge subgraph corresponding to a target dialog is a knowledge subgraph determined based on a pre-established knowledge graph and dialog data of the target dialog. For a specific implementation of determining the knowledge subgraph corresponding to the target dialog based on the pre-established knowledge graph and the dialog data of the target dialog, refer to subsequent descriptions.

### 3. Semantic entity and semantic relationship

A semantic entity may be a specific object or a specific type of object that is distinguishable and that exists independently. Specifically, the semantic entity may be a specific person (for example, Yao Ming), a specific city (for example, Shenzhen), a specific book (for example, a celebrity biography), a specific plant (for example, chlorophytum comosum), or the like. This is not limited to the descriptions herein. Alternatively, the semantic entity may be a collection of entities with a same characteristic, and is a general term for a collection, a type, a category, or the like, for example, a country, a nation, a personage, or geography. Alternatively, the semantic entity may be a description or an interpretation of a specific object or a specific type of object that is distinguishable and that exists independently, or a description or an interpretation of a collection of entities with a same characteristic. A semantic entity may exist as a node in a knowledge graph or a knowledge subgraph.

A semantic relationship is used to connect two semantic entities, and is used to describe an association or an intrinsic property between the two entities. The semantic relationship indicates an association between the two semantic entities in the real world. A semantic relationship may exist as an edge in a knowledge graph or a knowledge subgraph.

The following describes a dialog interaction method provided in this application. The dialog interaction method may be implemented in the foregoing dialog system. A general procedure of the dialog interaction method on a terminal device side may be as follows: The terminal device displays a dialog view in a first region of a target dialog user interface, and displays a conceptual view in a second region of the target dialog user interface.

Herein, for descriptions of the target dialog user interface, the first region, the dialog view, the second region, and the conceptual view, refer to the related descriptions of the graphical user embodiment shown in 3C. Details are not described herein again.

For specific implementation of the target dialog user interface, refer to the target dialog user interface 51 shown in the embodiments of FIG. 3C1 to FIG. 3F or FIG. 4A1 to FIG. 4H2.

Different cases of the target dialog user interface implemented on the terminal device correspond to dialog interaction methods with different implementation processes. Descriptions are provided below.
I. Some processes of a dialog interaction method for displaying, by a terminal device, a knowledge subgraph corresponding to a target dialog in a conceptual view of a target dialog user interface: For a graphical user interface embodiment in which the terminal device displays the knowledge subgraph in the conceptual view of the target dialog user interface, refer to the embodiments of FIG. 3E and FIG. 3F, FIG. 4A1 to FIG. 4C4, and FIG. 4H1 and FIG. 4H2.

1. An implementation process of a dialog interaction method corresponding to the embodiment of FIG. 3F: The implementation process may be used in a scenario in which a terminal device displays a knowledge subgraph corresponding to a target dialog in a conceptual view of a target dialog user interface when a user enters the target dialog user interface.

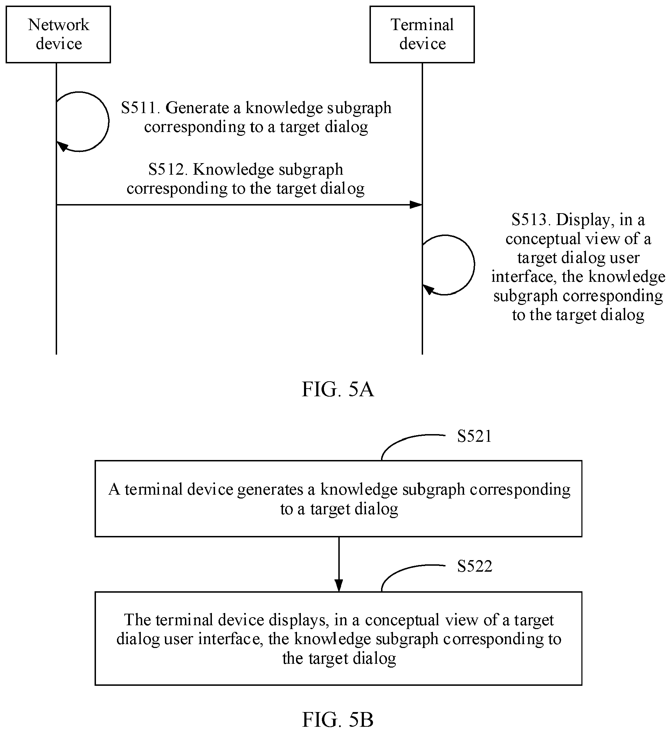

A schematic flowchart of a dialog interaction method corresponding to the embodiment shown in FIG. 3F may be shown in FIG. 5A. The process may be used in a dialog system that includes a network device and a terminal device, and specifically includes the following steps.

S511. The network device generates a knowledge subgraph corresponding to a target dialog.

Herein, for descriptions of the target dialog, refer to the foregoing descriptions. For example, the knowledge subgraph corresponding to the target dialog may be the knowledge subgraph 509 shown in FIG. 3F. In this embodiment of this application, the knowledge subgraph corresponding to the target dialog is an initial knowledge subgraph. The initial knowledge subgraph includes one or more initial semantic entities. The initial semantic entity may be any one or more of the initial semantic entities described in the embodiment of FIG. 3F.

Specifically, a semantic entity existing in dialog data of one or more dialogs that is generated before a current dialog may be specifically a semantic entity that is frequently mentioned in a dialog history of a user, that is, a semantic entity that frequently appears in a historical dialog record. The historical dialog record herein is a dialog record that corresponds to the target dialog and that is generated before the current dialog. For example, if the target dialog is a dialog between an instant messaging user A and an instant messaging user B, the semantic entity existing in the dialog data of the one or more dialogs that is generated before the current dialog is a semantic entity that frequently appears in a historical dialog record of the instant messaging user A and the instant messaging user B. For another example, if the target dialog is a dialog between a user and the dialog system, the semantic entity existing in the dialog data of the one or more dialogs that is generated before the current dialog is a semantic entity that frequently appears in a historical dialog record of the user and the dialog system. Herein, a meaning of "frequently" may be that frequency at which the semantic entity appears or is mentioned exceeds a preset frequency threshold. A value of the frequency threshold is not limited in this application.

Specifically, a semantic entity with relatively high popularity in the dialog system may be specifically a semantic entity that is frequently mentioned in the dialog system by most users using the dialog system, that is, a semantic entity that frequently appears in a historical dialog record of the most users. The historical dialog record herein is a dialog record of the most users that is generated before a current dialog and that corresponds to the target dialog. For example, if the dialog system is an instant-messaging-based dialog system, a semantic entity with relatively high popularity in the dialog system is a semantic entity that frequently appears in a historical dialog record of most instant messaging users using the dialog system. For another example, if the dialog system is a human-computer-interaction-based dialog system, a semantic entity with relatively high popularity in the dialog system is a semantic entity that frequently appears in a historical dialog record of all users using the dialog system. Herein, a meaning of the "most users" may be users whose proportion to all users using the dialog system exceeds a first proportion, where the first proportion is a proportion value greater than 1/2. A meaning of "frequently" may be that frequency at which the semantic entity appears or is mentioned exceeds a preset frequency threshold. A value of the frequency threshold is not limited in this application.

When the initial semantic entity is in the foregoing two cases, the dialog system has a function of storing the dialog data of the one or more dialogs that is generated before the current dialog. In specific implementation, the network device may determine the initial semantic entity based on the dialog data of the one or more dialogs that is generated before the current dialog and that is stored in the dialog system, and then generate, based on a knowledge graph stored in the dialog system and the initial semantic entity, the knowledge subgraph corresponding to the target dialog.

Specifically, a semantic entity related to a to-do item in a user's schedule may be specifically a semantic entity in a plan or a schedule recorded in an application program, such as a memo, a note, a to-do item, or a notepad, that is on the terminal device and that is used to record the user's schedule or plan. For example, if a to-do item on the terminal device records a schedule of the user in next few days, a semantic entity related to the to-do item in the user's schedule may be a semantic entity existing in the schedule of the next few days, such as a meeting time, a meeting room, or a contact.

Specifically, a semantic entity determined based on a user profile of a user may be specifically a semantic entity that is determined based on data related to daily behavior of the user (for example, shopping behavior, search behavior, an outing record, or an exercise record) and that meets a specific characteristic of the user. For example, if it is determined, based on the data related to daily routine of the user, that the user frequently goes to a gym, the semantic entity determined based on the user profile of the user may be a semantic entity related to fitness, such as a treadmill or aerobics.

When the initial semantic entity is in the foregoing two cases, the terminal device may collect the schedule or the plan recorded by the user or the data related to the daily behavior of the user, and send the collected schedule or plan recorded by the user or the data related to the daily behavior of the user to the network device. The network device may determine the initial semantic entity based on the schedule or the plan or the data related to the daily behavior of the user, and then generate, based on the knowledge graph stored in the dialog system and the initial semantic entity, the knowledge subgraph corresponding to the target dialog.

In specific implementation, a manner of generating, based on the knowledge graph stored in the dialog system and the initial semantic entity, the knowledge subgraph corresponding to the target dialog may be: querying the knowledge graph based on the initial semantic entity to determine a semantic relationship between initial semantic entities; and generating, based on the initial semantic entity and the semantic relationship between initial semantic entities, the knowledge subgraph corresponding to the target dialog.

S512. The network device sends the knowledge subgraph corresponding to the target dialog to the terminal device.

For example, the network device may directly send the generated knowledge subgraph to the terminal device, or send the generated knowledge subgraph to the terminal device by using another network device, or store the knowledge subgraph in a memory or another device for the terminal device to read.

S513. The terminal device displays, in a conceptual view of a target dialog user interface, the knowledge subgraph corresponding to the target dialog.

For example, the terminal device may display, in the conceptual view of the target dialog user interface, the knowledge subgraph corresponding to the target dialog, as shown in FIG. 3F.

A schematic flowchart of another dialog interaction method corresponding to the embodiment of FIG. 3F may be shown in FIG. 5B. The process may be used in a dialog system that includes only a terminal device, and specifically includes the following steps.

S521. The terminal device generates a knowledge subgraph corresponding to a target dialog.

Herein, for descriptions of the target dialog, refer to the foregoing descriptions. An example of the knowledge subgraph corresponding to the target dialog may be the knowledge subgraph 509 shown in FIG. 3F. For the knowledge subgraph corresponding to the target dialog in this embodiment of this application, refer to the knowledge subgraph corresponding to the target dialog that is described in step S511. Details are not described herein again.

For a specific implementation of generating the knowledge subgraph corresponding to the target dialog by the terminal device, refer to the specific implementation of generating the knowledge subgraph corresponding to the target dialog by the network device in step S511. Details are not described herein again.

S522. The terminal device displays, in a conceptual view of a target dialog user interface, the knowledge subgraph corresponding to the target dialog.

For example, the terminal device may display, in the conceptual view of the target dialog user interface, the knowledge subgraph corresponding to the target dialog, as shown in FIG. 3F.

With reference to any one of the method embodiments corresponding to FIG. 3F, FIG. 5A, and FIG. 5B, it can be learned that, when the dialog system does not have a function of displaying dialog data of one or more dialogs that is generated before a current dialog, or no dialog data of a target dialog has been generated in the dialog system before a user enters the target dialog user interface, the terminal device displays, on the target dialog user interface, the knowledge subgraph corresponding to the target dialog. The knowledge subgraph corresponding to the target dialog is an initial knowledge subgraph. A semantic entity in the initial knowledge subgraph may serve to guide a dialog topic, thereby improving user experience.

2. An implementation process of a dialog interaction method corresponding to the embodiments of FIG. 3E, FIG. 4A1 to FIG. 4C4, and FIG. 4H1 and FIG. 4H2: The implementation process may be used in a scenario in which a terminal device displays a knowledge subgraph corresponding to a target dialog in a conceptual view of a target dialog user interface after a user enters the target dialog user interface.

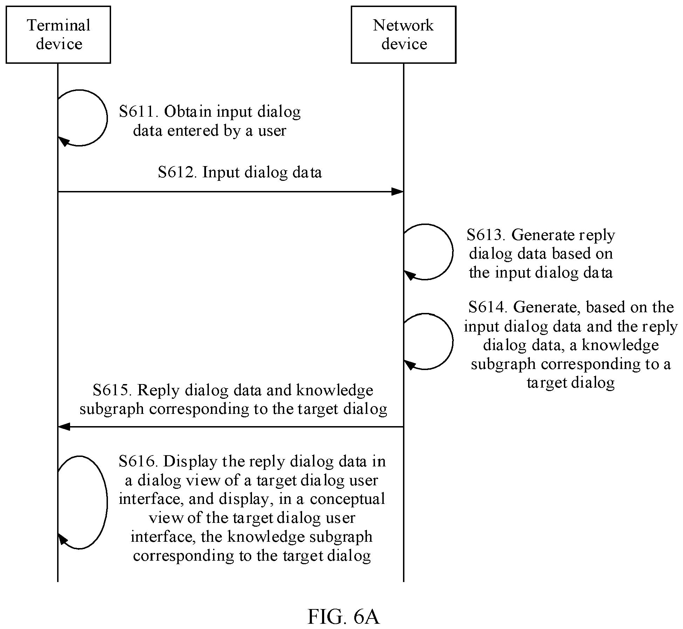

A schematic flowchart of a dialog interaction method corresponding to the embodiments shown in FIG. 3E, FIG. 4A1 and FIG. 4A2, and FIG. 4C1 to FIG. 4C4 may be shown in FIG. 6A. The process may be used in a human-computer-interaction-based dialog system that includes a network device and a terminal device, and specifically includes the following steps.

S611. The terminal device obtains input dialog data entered by a user.

Herein, the input dialog data entered by the user may be voice data or text data. Specifically, the terminal device may collect a sound signal by using a microphone to obtain the input dialog data entered by the user. Alternatively, the terminal device may obtain, by using a touchscreen, a keyboard, or the like, an operation of entering a text by the user, to obtain the input dialog data entered by the user. For example, the input dialog data entered by the user may be the dialog data "How is the weather in Shenzhen?" shown in FIG. 3E.

S612. The terminal device sends the input dialog data to the network device, and the network device receives the input dialog data.

S613. The network device generates reply dialog data based on the input dialog data.

Specifically, the network device may recognize semantic entities existing in the input dialog data, and query, based on the recognized semantic entities, a knowledge graph stored in the dialog system, to determine a semantic relationship between the recognized semantic entities; and then input the recognized semantic entities and the semantic relationship obtained through querying to an encoder-decoder (Encoder-Decoder) model obtained through pre-training, and determine dialog data output by the encoder-decoder model as the reply dialog data.

The network device may recognize, through entity extraction, the semantic entities existing in the input dialog data. The entity extraction may also be referred to as named entity learning (named entity learning) or named entity recognition (named entity recognition). A manner of the entity extraction may be any one of a manner based on a rule and a dictionary, a manner based on statistical machine learning, or a manner oriented to an open field. This is not limited in this embodiment of this application.

For example, the reply dialog data generated by the network device may be the dialog data "It is clear to overcast in Shenzhen today, and the temperature is 16-28 degrees centigrade." shown in FIG. 3E, or the dialog data "Michael Jordan." shown in FIG. 4A1 to FIG. 4C4.

S614. The network device generates, based on the input dialog data and the reply dialog data, a knowledge subgraph corresponding to a target dialog.

Herein, the knowledge subgraph corresponding to the target dialog includes semantic entities existing in the input dialog data and the reply dialog data. The network device may recognize the semantic entities existing in the input dialog data and the reply dialog data, and then generate, based on the recognized semantic entities, the knowledge subgraph corresponding to the target dialog. An example of the knowledge subgraph that corresponds to the target dialog and that is generated based on the recognized semantic entities may be the knowledge subgraph 508 shown in FIG. 3E.

For a specific implementation of recognizing the semantic entities existing in the input dialog data and the reply dialog data by the network device, refer to the manner of recognizing the semantic entities existing in the input dialog data by the network device through entity extraction in step S613. For a specific implementation of generating, by the network device based on the recognized semantic entities, the knowledge subgraph corresponding to the target dialog, refer to the specific implementation of generating, by the network device based on the knowledge graph stored in the dialog system and the initial semantic entity, the knowledge subgraph corresponding to the target dialog in step S511. Details are not described herein again.

S615. The network device sends the reply dialog data and the knowledge subgraph corresponding to the target dialog to the terminal device, and the terminal device receives the reply dialog data and the knowledge subgraph corresponding to the target dialog.

S616. The terminal device displays the reply dialog data in a dialog view of a target dialog user interface, and displays, in a conceptual view of the target dialog user interface, the knowledge subgraph corresponding to the target dialog.

For example, the terminal device may display the reply dialog data in the dialog view of the target dialog user interface, and display, in the conceptual view of the target dialog user interface, the knowledge subgraph corresponding to the target dialog, as shown in FIG. 3E and FIG. 4A1 to FIG. 4C4.

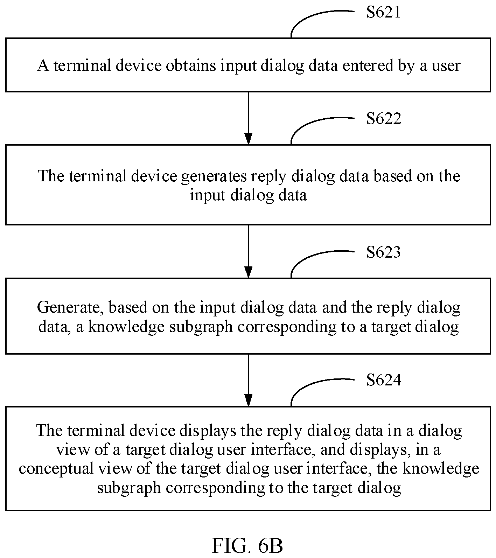

A schematic flowchart of another dialog interaction method corresponding to the embodiments shown in FIG. 3E, FIG. 4A1 and FIG. 4A2, and FIG. 4C1 to FIG. 4C4 may be shown in FIG. 6B. The process may be used in a human-computer-interaction-based dialog system that includes only a terminal device, and specifically includes the following steps.

S621. The terminal device obtains input dialog data entered by a user.

Herein, for a specific implementation of step S621, refer to the descriptions of step S611. Details are not described herein again.

S622. The terminal device generates reply dialog data based on the input dialog data.

S623. The terminal device generates, based on the input dialog data and the reply dialog data, a knowledge subgraph corresponding to a target dialog.

Herein, for specific implementations of steps S622 and S623, refer to the specific implementations of steps S613 and S614. Details are not described herein again.

S624. The terminal device displays the reply dialog data in a dialog view of a target dialog user interface, and displays, in a conceptual view of the target dialog user interface, the knowledge subgraph corresponding to the target dialog.

For example, the terminal device may display the reply dialog data in the dialog view of the target dialog user interface, and display, in the conceptual view of the target dialog user interface, the knowledge subgraph corresponding to the target dialog, as shown in FIG. 3E, FIG. 4A1 and FIG. 4A2, or FIG. 4C1 to FIG. 4C4.

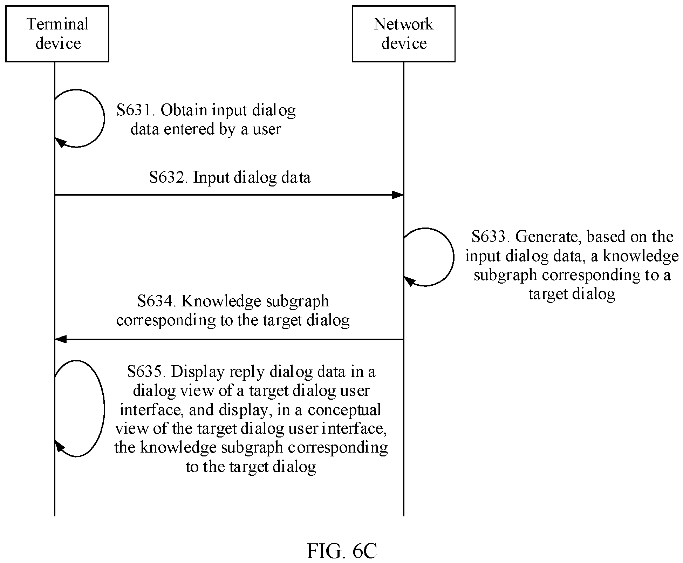

A schematic flowchart of still another dialog interaction method corresponding to the embodiments shown in FIG. 3E, FIG. 4A1 and FIG. 4A2, and FIG. 4C1 to FIG. 4C4 may be shown in FIG. 6C. The process may be used in an instant-messaging-based dialog system that includes a terminal device and a network device, and specifically includes the following steps.

S631. The terminal device obtains input dialog data entered by a user.

Herein, for a specific implementation of step S621, refer to the descriptions of step S611. Details are not described herein again.

S632. The terminal device sends the input dialog data to the network device, and the network device receives the input dialog data.

S633. The network device generates, based on the input dialog data, a knowledge subgraph corresponding to a target dialog.

Herein, for a specific implementation of generating, by the network device based on the input dialog data, the knowledge subgraph corresponding to the target dialog, refer to the descriptions of generating, by the network device based on the input dialog data and the reply dialog data, the knowledge subgraph corresponding to the target dialog in step S614. Details are not described herein again.

S634. The network device sends the knowledge subgraph corresponding to the target dialog to the terminal device, and the terminal device receives the knowledge subgraph corresponding to the target dialog.

S635. The terminal device displays, in a conceptual view of a target dialog user interface, the knowledge subgraph corresponding to the target dialog.

For example, the terminal device may display reply dialog data in a dialog view of the target dialog user interface, and display, in the conceptual view of the target dialog user interface, the knowledge subgraph corresponding to the target dialog, as shown in FIG. 3E or FIG. 4A1 to FIG. 4C4.

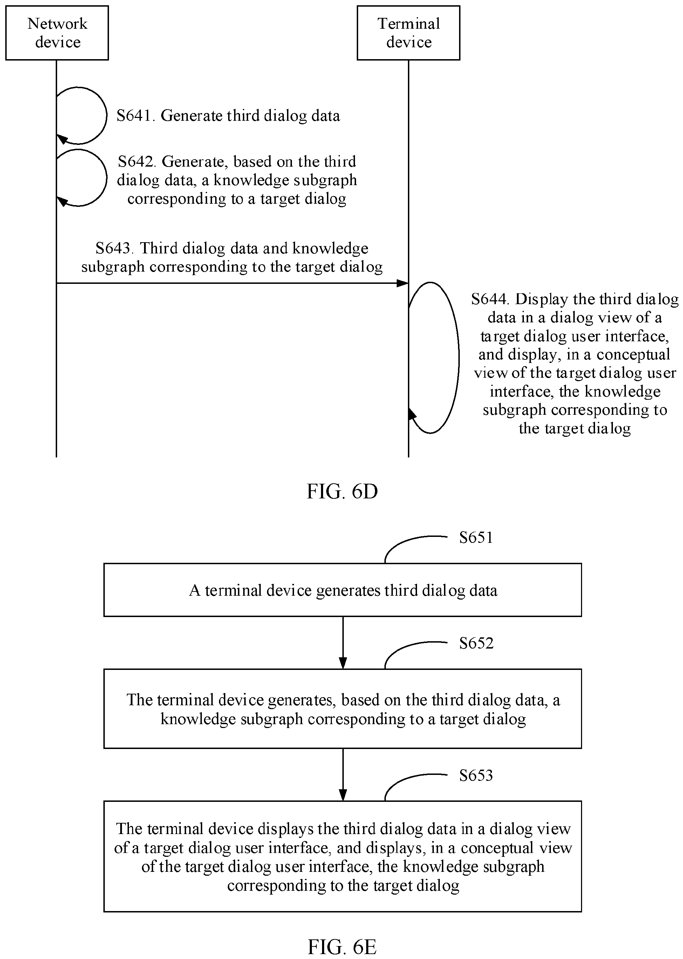

In some possible embodiments, when the dialog system is a human-computer-interaction-based dialog system, the dialog system may further actively generate and initiate a dialog, in addition to generating the dialog reply data based on the input dialog data entered by the user. For example, for a graphical user interface embodiment in which a dialog system actively initiates a dialog, refer to FIG. 4H1 and FIG. 4H2. A schematic flowchart of a dialog interaction method corresponding to the embodiment of FIG. 4H1 and FIG. 4H2 may be shown in FIG. 6D. The process may be used in a human-computer-interaction-based dialog system that includes a network device and a terminal device, and specifically includes the following steps.

S641. The network device generates third dialog data.

Herein, the third dialog data is dialog data actively initiated by the network device, that is, dialog data actively initiated by the dialog system. A specific implementation of generating the third dialog data by the network device is described in detail in subsequent method embodiments. Details are not described herein.

S642. The network device generates, based on the third dialog data, a knowledge subgraph corresponding to a target dialog.

Herein, for a specific implementation of generating, by the network device based on the third dialog data, the knowledge subgraph corresponding to the target dialog, refer to the descriptions of generating, by the network device based on the input dialog data and the reply dialog data, the knowledge subgraph corresponding to the target dialog in step S614. Details are not described herein again.

S643. The network device sends the third dialog data and the knowledge subgraph corresponding to the target dialog to the terminal device, and the terminal device receives the third dialog data and the knowledge subgraph corresponding to the target dialog.

S644. The terminal device displays the third dialog data in a dialog view of a target dialog user interface, and displays, in a conceptual view of the target dialog user interface, the knowledge subgraph corresponding to the target dialog.

A schematic flowchart of another dialog interaction method corresponding to the embodiment of FIG. 4H1 and FIG. 4H2 may be shown in FIG. 6E. The process may be used in a human-computer-interaction-based dialog system that includes only a terminal device, and specifically includes the following steps.

S651. The terminal device generates third dialog data.

Herein, a specific implementation of generating the third dialog data by the terminal device is described in detail in subsequent method embodiments. Details are not described herein.

S652. The terminal device generates, based on the third dialog data, a knowledge subgraph corresponding to a target dialog.

Herein, for a specific implementation of generating, by the terminal device based on the third dialog data, the knowledge subgraph corresponding to the target dialog, refer to the descriptions of generating, by the network device based on the input dialog data and the reply dialog data, the knowledge subgraph corresponding to the target dialog in step S614. Details are not described herein again.

S653. The terminal device displays the third dialog data in a dialog view of a target dialog user interface, and displays, in a conceptual view of the target dialog user interface, the knowledge subgraph corresponding to the target dialog.

The input dialog data and the reply dialog data in the embodiments of FIG. 6A and FIG. 6B, the dialog data in the embodiment of FIG. 6C, and the third dialog data in the embodiments of FIG. 6D and FIG. 6E may be collectively referred to as dialog data. With reference to any one of the method embodiments corresponding to FIG. 3E, FIG. 4A1 and FIG. 4A2, FIG. 4H1 and FIG. 4H2, and FIG. 6A to FIG. 6E, it can be learned that the knowledge subgraph corresponding to the target dialog includes a first semantic entity, and the first semantic entity is a semantic entity existing in the dialog data. The first semantic entity is equivalent to an abstract and a summary of the dialog data of the target dialog, thereby helping quickly learn of an outline of historical dialog content, to reply to the historical dialog content. When the input dialog data and the reply dialog data in the embodiments of FIG. 6A and FIG. 6B, the dialog data in FIG. 6C, and the third dialog data in FIG. 6D and FIG. 6E are new dialog data, with reference to any one of the method embodiments corresponding to FIG. 4C1 to FIG. 4C4 and FIG. 6A to FIG. 6E, it can be learned that the terminal device updates the conceptual view when obtaining the new dialog data, and an updated conceptual view is used to display a knowledge subgraph updated based on the new dialog data. The updated knowledge subgraph includes a semantic entity existing in the new dialog data.

In some possible embodiments, the knowledge subgraph corresponding to the target dialog may further include one or more second semantic entities associated with the first semantic entity. An example of the knowledge subgraph that corresponds to the target dialog and that includes the second semantic entity may be the knowledge subgraph 511 shown in FIG. 4B.

Specifically, the second semantic entity associated with the first semantic entity may be in the following cases.

In a possible case, the second semantic entity may include a semantic entity adjacent to the first semantic entity in a knowledge graph, that is, a semantic entity that has a semantic relationship with the first semantic entity in the knowledge graph. For example, the semantic entity adjacent to the first semantic entity in the knowledge graph may be the semantic entities "James Harden", "NBA", "La Liga", and "Messi" shown in FIG. 4B. "James Harden", "La Liga", "NBA", and "Messi" are semantic entities having a semantic relationship with the semantic entity "MVP".

Further, the second semantic entity may include some semantic entities adjacent to the first semantic entity in the knowledge graph.

In a feasible implementation, the some semantic entities adjacent to the first semantic entity in the knowledge graph may be a semantic entity that is adjacent to the first semantic entity in the knowledge graph and whose use frequency in a dialog process is greater than a first frequency threshold. The use frequency may be use frequency in the target dialog, and the semantic entity that is adjacent to the first semantic entity in the knowledge graph and whose use frequency in the dialog process is greater than the first frequency threshold is a semantic entity that is adjacent to the first semantic entity in the knowledge graph and that frequently appears in a historical dialog record corresponding to the target dialog. Alternatively, the use frequency may be use frequency in all dialogs in the dialog system, and the semantic entity that is adjacent to the first semantic entity in the knowledge graph and whose use frequency in the dialog process is greater than the first frequency threshold is a semantic entity that is adjacent to the first semantic entity in the knowledge graph and that frequently appears in historical dialog records corresponding to all the dialogs in the dialog system. The historical dialog record herein may be a historical dialog record of a current dialog corresponding to the target dialog, or may be all historical dialog records corresponding to the target dialog (that is, a historical dialog record of a current dialog and a historical dialog record generated before the current dialog).

The semantic entity that is adjacent to the first semantic entity in the knowledge graph and whose use frequency in the dialog process is greater than the first frequency threshold is described by using an example. For example, the semantic entities adjacent to the first semantic entity in the knowledge graph are "Ren Zhengfei", "mobile phone", "5G", "network device", "Honor", and "HiSilicon".
(1) The use frequency is use frequency in the target dialog, and the first frequency threshold is 20 times per week. Frequency at which "Ren Zhengfei" appears in the historical dialog record of the target dialog is once per week, frequency at which "mobile phone" appears in the historical dialog record of the target dialog is 25 times per week, frequency at which "5G" appears in the historical dialog record of the target dialog is 18 times per week, frequency at which "Honor" appears in the historical dialog record of the target dialog is 10 times per week, and frequency at which "HiSilicon" appears in the historical dialog record of the target dialog is three times per week. In this case, the semantic entity "mobile phone" is determined as the semantic entity that is adjacent to the first semantic entity in the knowledge graph and whose use frequency in the dialog process is greater than the first frequency threshold.
(2) The use frequency is use frequency in all the dialogs in the dialog system, and the first frequency threshold is 200 times per day. Frequency at which "Ren Zhengfei" appears in the historical dialog record of the target dialog is 10 times per day, frequency at which "mobile phone" appears in the historical dialog record of the target dialog is 250 times per day, frequency at which "5G" appears in the historical dialog record of the target dialog is 300 times per day, frequency at which "Honor" appears in the historical dialog record of the target dialog is 220 times per day, and frequency at which "HiSilicon" appears in the historical dialog record of the target dialog is 30 times per day. In this case, the semantic entities "mobile phone", "5G", and "Honor" are determined as the semantic entity that is adjacent to the first semantic entity in the knowledge graph and whose use frequency in the dialog process is greater than the first frequency threshold.

In another feasible implementation, the some semantic entities adjacent to the first semantic entity in the knowledge graph may be a semantic entity that is adjacent to the first semantic entity in the knowledge graph and that is determined based on a user profile. For a definition of the semantic entity determined based on the user profile, refer to the descriptions of step S511. Details are not described herein again.

The some semantic entities adjacent to the first semantic entity in the knowledge graph are not limited to the foregoing two feasible implementations. Specific semantic entities, of semantic entities adjacent to the first semantic entity in the knowledge graph, that serve as the second semantic entity are not limited in this embodiment of this application.

In another possible case, the second semantic entity may alternatively include a semantic entity whose semantic relationship path distance from the first semantic entity in the knowledge graph is less than a first distance threshold. A semantic relationship path distance between two semantic entities may be measured by a quantity of semantic entities included in a semantic relationship path between the two semantic entities in the knowledge graph. The semantic relationship path may be equal to a quantity of semantic entities included in a shortest semantic relationship path between the two semantic entities in a knowledge subgraph minus 1.

The semantic relationship path distance is described by using an example. For example, a part of the knowledge graph is shown in the knowledge subgraph 513 in FIG. 4B. In this case, there are two semantic relationship paths between the semantic entity "basketball" and the semantic entity "Michael Jordan": "basketball - NBA - Michael Jordan" and "basketball - NBA - MVP - Michael Jordan". A shortest semantic relationship path is "basketball - NBA - Michael Jordan", and it is determined that a semantic relationship path distance between the semantic entity "basketball" and the semantic entity "Michael Jordan" is 2.

Further, the second semantic entity may include some semantic entities whose semantic relationship path distances from the first semantic entity in the knowledge graph are less than the first distance threshold. In a feasible implementation, the some semantic entities whose semantic relationship path distances from the first semantic entity in the knowledge graph are less than the first distance threshold may be a semantic entity whose use frequency in a dialog process is greater than a second frequency threshold and whose semantic relationship path distance from the first semantic entity in the knowledge graph is less than the first distance threshold. For descriptions of the use frequency, refer to the foregoing descriptions. Details are not described herein again. In another feasible implementation, the some semantic entities whose semantic relationship path distances from the first semantic entity in the knowledge graph are less than the first distance threshold may be a semantic entity that is determined based on a user profile and whose semantic relationship path distance from the first semantic entity in the knowledge graph is less than the first distance threshold. For descriptions of the semantic relationship path distance, refer to the foregoing descriptions. Details are not described herein again.

The second semantic entity associated with the first semantic entity is not limited to the foregoing cases. Specifically, a semantic entity that is in the knowledge graph and that is determined as a semantic entity associated with the first semantic entity is not limited in this embodiment of this application.

With reference to any one of the method embodiments corresponding to FIG. 4B and FIG. 6A to FIG. 6E, it can be learned that, in addition to the first semantic entity, the knowledge graph corresponding to the target dialog further includes the second semantic entity associated with the first semantic entity. The second semantic entity serves to guide a dialog topic, thereby improving dialog experience of the user.

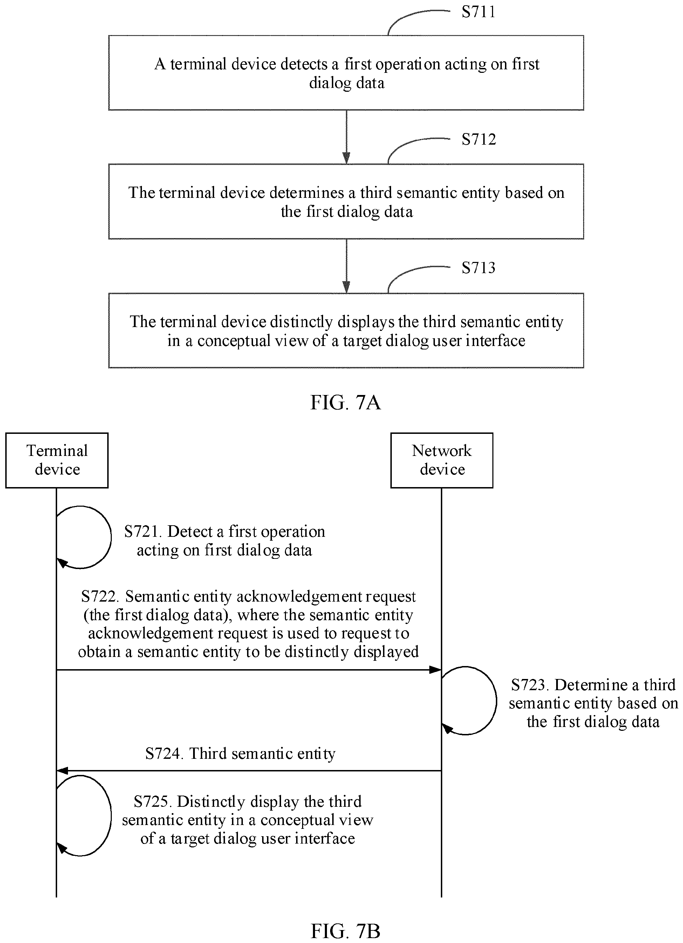

II. Some processes of a dialog interaction method for implementing collaborative interaction between a dialog view and a conceptual view displayed on a terminal device: The processes may be used in a scenario in which dialog data and a knowledge subgraph are already displayed on a target dialog user interface, that is, a scenario in which one or more dialogs have been performed. For a graphical user interface embodiment of the collaborative interaction between the dialog view and the conceptual view displayed on the terminal device, refer to the embodiments of FIG. 4D1 to FIG. 4G4.
1. An implementation process of a dialog interaction method corresponding to the embodiment of FIG. 4D1 and FIG. 4D2:
   A schematic flowchart of a dialog interaction method corresponding to the embodiment of FIG. 4D1 and FIG. 4D2 may be shown in FIG. 7A. The process may be used in a dialog system that includes only a terminal device, and specifically includes the following steps.

S711. The terminal device detects a first operation acting on first dialog data.

The first dialog data is any dialog data displayed in a dialog view of a target dialog user interface. For example, the first dialog data may be the dialog data "Then please book a hotel and an airline ticket for me as well." shown in FIG. 4D1 and FIG. 4D2.

The first operation acting on the first dialog data is specifically an operation of selecting the first dialog data, and the first operation may have a plurality of forms. For example, the first operation may be an operation of tapping the first dialog data in the dialog view, or the first operation may be an operation of double-tapping the first dialog data in the dialog view, or the first operation may be an operation of dragging the first dialog data in the dialog view. This is not limited to the descriptions herein. A specific form of the first operation is not limited in this embodiment of this application.

S712. The terminal device determines a third semantic entity based on the first dialog data.

Herein, the third semantic entity is a semantic entity that is displayed in a conceptual view of the target dialog user interface and that is related to or corresponds to the first dialog data.

In a feasible implementation, the semantic entity related to or corresponding to the first dialog data may include a semantic entity existing in the first dialog data. The terminal device may recognize the semantic entity existing in the first dialog data, and determine the semantic entity as the third semantic entity. For the recognizing the semantic entity existing in the first dialog data by the terminal device, refer to the manner of recognizing the semantic entity existing in the input dialog data by the network device in step S613. Details are not described herein again.

In another feasible implementation, the semantic entity related to or corresponding to the first dialog data may alternatively include a semantic entity associated with a semantic entity existing in the first dialog data. For a concept of the semantic entity associated with the semantic entity existing in the first dialog data, refer to the foregoing descriptions of the second semantic entity associated with the first semantic entity. Details are not described herein again. The terminal device may recognize the semantic entity existing in the first dialog data, and then determine, as the third semantic entity, a semantic entity that is in a knowledge subgraph displayed in the conceptual view and that is associated with the semantic entity existing in the first dialog data.

In still another feasible implementation, the semantic entity related to or corresponding to the first dialog data may include a semantic entity existing in the first dialog data and a semantic entity associated with the semantic entity existing in the first dialog data.

In still another feasible implementation, the semantic entity related to or corresponding to the first dialog data may alternatively include a semantic entity with a topic tag whose similarity to a topic tag corresponding to the first dialog data is greater than a correlation threshold, that is, a similarity between a topic tag corresponding to the third semantic entity and the topic tag corresponding to the first dialog data is greater than the correlation threshold. The terminal device may determine the topic tag corresponding to the first dialog data, separately determine a topic tag corresponding to each semantic entity in the knowledge subgraph displayed in the conceptual view, perform similarity matching between the topic tag corresponding to each semantic entity and the topic tag corresponding to the first dialog data to determine the semantic entity with the topic tag whose similarity to the topic tag corresponding to the first dialog data is greater than the correlation threshold, and further determine the semantic entity with the topic tag whose similarity to the topic tag corresponding to the first dialog data is greater than the correlation threshold as the first semantic entity. In a specific implementation, the terminal device may determine, by using a topic recognizer obtained through pre-training, the topic tag corresponding to the first dialog data and the topic tag corresponding to each semantic entity in the knowledge subgraph displayed in the dialog view.

The semantic entity related to or corresponding to the first dialog data is not limited to the foregoing descriptions. Specifically, a semantic entity that is displayed in the conceptual view and that serves as the semantic entity related to or corresponding to the first dialog data depends on a specific design of a correspondence between a semantic entity in the conceptual view and dialog data in the dialog view in the dialog system. This is not limited in this embodiment of this application.

S713. The terminal device distinctly displays the third semantic entity in the conceptual view of the target dialog user interface.

Herein, that the terminal device distinctly displays the third semantic entity in the conceptual view of the target dialog user interface may be displaying the third semantic entity in the conceptual view of the target dialog user interface in a manner different from that of displaying another semantic entity in the conceptual view of the target dialog user interface. The another semantic entity is a semantic entity displayed in the conceptual view of the target dialog user interface other than the third semantic entity.

For a specific manner of distinctly displaying the third semantic entity by the terminal device in the conceptual view of the target dialog user interface, refer to the related descriptions in the embodiment of FIG. 4D1 and FIG. 4D2. Details are not described herein again.

For example, the target dialog user interface on which the terminal device distinctly displays the third semantic entity in the conceptual view of the target dialog user interface may be shown in FIG. 4D2.

A schematic flowchart of another dialog interaction method corresponding to the embodiment of FIG. 4D1 and FIG. 4D2 may be shown in FIG. 7B. The process may be used in a dialog system that includes a terminal device and a network device, and specifically includes the following steps.

S721. The terminal device detects a first operation acting on first dialog data.

Herein, for related descriptions of step S721, refer to step S711. Details are not described herein again.

S722. The terminal device sends a semantic entity acknowledgement request to the network device, where the semantic entity acknowledgement request is used to request to obtain a semantic entity to be distinctly displayed, and the semantic entity acknowledgement request includes first dialog data, and the network device receives the semantic entity acknowledgement request.

S723. The network device determines a third semantic entity based on the first dialog data.

Herein, for the third semantic entity and a specific implementation of determining the third semantic entity by the network device based on the first dialog data, refer to the descriptions of step S712. Details are not described herein again.

S724. The network device sends the third semantic entity to the terminal device, and the terminal device receives the third semantic entity.

S725. The terminal device distinctly displays the third semantic entity in the conceptual view of the target dialog user interface.

Herein, for related descriptions of step S725, refer to step S715. Details are not described herein again.

With reference to any one of the method embodiments corresponding to FIG. 4D1 and FIG. 4D2, FIG. 7A, and FIG. 7B, it can be learned that dialog data and a knowledge subgraph are already displayed on the target dialog user interface after one or more dialogs are performed, and when dialog data in the dialog view is selected, the terminal device distinctly displays, in the conceptual view of the target dialog user interface, a semantic entity related to the dialog data, thereby implementing collaborative interaction between the dialog view and the conceptual view, helping a user locate a specific semantic entity, and improving user experience.

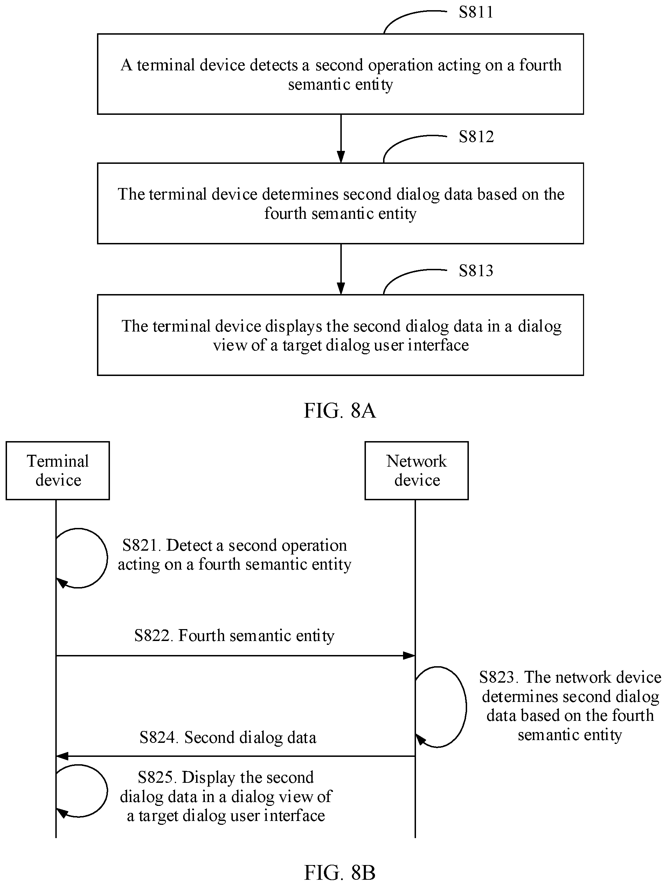

2. An implementation process of a dialog interaction method corresponding to the embodiment of FIG. 4E1 and FIG. 4E2:
A schematic flowchart of a dialog interaction method corresponding to the embodiment of FIG. 4E1 and FIG. 4E2 may be shown in FIG. 8A. The process may be used in a dialog system that includes only a terminal device, and specifically includes the following steps.

S811. The terminal device detects a second operation acting on a fourth semantic entity.

The fourth semantic entity is a semantic entity displayed in a conceptual view of a target dialog user interface. For example, the fourth semantic entity may be the semantic entity "Barcelona" shown in FIG. 4E1 and FIG. 4E2.

The second operation acting on the fourth semantic entity is specifically an operation of selecting the fourth semantic entity, and the second operation may have a plurality of forms. For example, the second operation may be an operation of tapping the fourth semantic entity in the conceptual view, or the second operation may be an operation of double-tapping the fourth semantic entity in the conceptual view, or the second operation may be an operation of drawing a circle in the conceptual view by using the fourth semantic entity as a center, or the second operation may be an operation of dragging the fourth semantic entity in the conceptual view, or the second operation may be an operation of controlling the fourth semantic entity by using voice (that is, a user utters a voice instruction for viewing the fourth semantic entity). This is not limited to the descriptions herein. A specific form of the second operation is not limited in this embodiment of this application.

S812. The terminal device determines second dialog data based on the fourth semantic entity.

Herein, the second dialog data is historical dialog data related to or corresponding to the fourth semantic entity. The historical dialog data is dialog data, of a target dialog, that is already generated in the dialog system. The historical dialog data herein is historical dialog data of a current dialog corresponding to the target dialog, and is specifically dialog data of one or more dialogs that have been performed.

In a feasible implementation, the historical dialog data related to or corresponding to the fourth semantic entity may be historical dialog data in which the second semantic entity exists, that is, the fourth semantic entity exists in the second dialog data. The terminal device may search the dialog data of the one or more dialogs that have been performed for the dialog data in which the fourth semantic entity exists, and determine the dialog data as the second dialog data. In specific implementation, the terminal device may compare text data corresponding to the dialog data of the one or more dialogs that have been performed with the fourth semantic entity, to determine the historical dialog data in which the second semantic entity exists.

In another feasible implementation, the historical dialog data related to or corresponding to the fourth semantic entity may be alternatively historical dialog data in which a semantic entity associated with the fourth semantic entity exists, that is, the semantic entity associated with the fourth semantic entity exists in the second dialog data. For a concept of the semantic entity associated with the fourth semantic entity, refer to the foregoing descriptions of the second semantic entity associated with the first semantic entity. The terminal device may search the dialog data of the one or more dialogs that have been performed for dialog data of the semantic entity associated with the fourth semantic entity, and determine the dialog data as the second dialog data.

In still another feasible implementation, the historical dialog data related to or corresponding to the fourth semantic entity may be historical dialog data with a topic tag whose similarity to a topic tag corresponding to the fourth semantic entity is greater than a correlation threshold, that is, a similarity between the topic tag corresponding to the second dialog data and the topic tag corresponding to the second semantic entity is greater than the correlation threshold. The terminal device may determine the topic tag of the second semantic entity and a topic tag corresponding to each piece of historical dialog data, perform similarity matching between the topic tag of each piece of historical dialog data and the topic tag of the second semantic entity to determine the historical dialog data with the topic tag whose similarity to the topic tag corresponding to the second semantic entity is greater than the correlation threshold, and further determine the historical dialog data with the topic tag whose similarity to the topic tag corresponding to the second semantic entity is greater than the correlation threshold as the second dialog data. For a specific implementation of determining the topic tag of the second semantic entity and the topic tag corresponding to each piece of historical dialog data, refer to the manner of determining the topic tag corresponding to the first dialog data and the topic tag corresponding to each semantic entity in the knowledge subgraph displayed in the dialog view in step S712. Details are not described herein again.

The historical dialog data related to or corresponding to the fourth semantic entity is not limited to the foregoing descriptions. Specifically, historical dialog data that serves as a dialog related to or corresponding to the fourth semantic entity depends on a specific design of a correspondence between a semantic entity in the conceptual view and dialog data in the dialog view in the dialog system. This is not limited in this embodiment of this application.

S813. The terminal device displays the second dialog data in a dialog view of the target dialog user interface.

For example, the target dialog user interface on which the terminal device displays the second dialog data in the dialog view of the target dialog user interface may be shown in FIG. 4E2.

A schematic flowchart of another dialog interaction method corresponding to the embodiment of FIG. 4E1 and FIG. 4E2 is shown in FIG. 8B. The process may be used in a dialog system that includes a terminal device and a network device, and specifically includes the following steps.

S821. The terminal device detects a second operation acting on a fourth semantic entity.

Herein, for related descriptions of step S821, refer to step S811. Details are not described herein again.

S822. The terminal device sends the fourth semantic entity to the network device, and the network device receives the fourth semantic entity.

S823. The network device determines second dialog data based on the fourth semantic entity.

Herein, for descriptions of the second dialog data and a specific implementation of determining the second dialog data by the network device based on the fourth semantic entity, refer to the descriptions of step S812. Details are not described herein again.

S824. The network device sends the second dialog data to the terminal device, and the terminal device receives the second dialog data.

S825. The terminal device displays the second dialog data in a dialog view of a target dialog user interface.

For example, the target dialog user interface on which the terminal device displays the second dialog data in the dialog view of the target dialog user interface may be shown in FIG. 4E2.

With reference to any one of the method embodiments corresponding to FIG. 4E1 and FIG. 4E2, FIG. 8A, and FIG. 8B, it can be learned that dialog data and a knowledge subgraph are already displayed on the target dialog user interface after one or more dialogs are performed, and when a semantic entity in the conceptual view is selected, the terminal device displays dialog data related to the semantic entity, thereby implementing system interaction between the dialog view and the conceptual view, helping a user locate historical dialog content, and improving user experience.

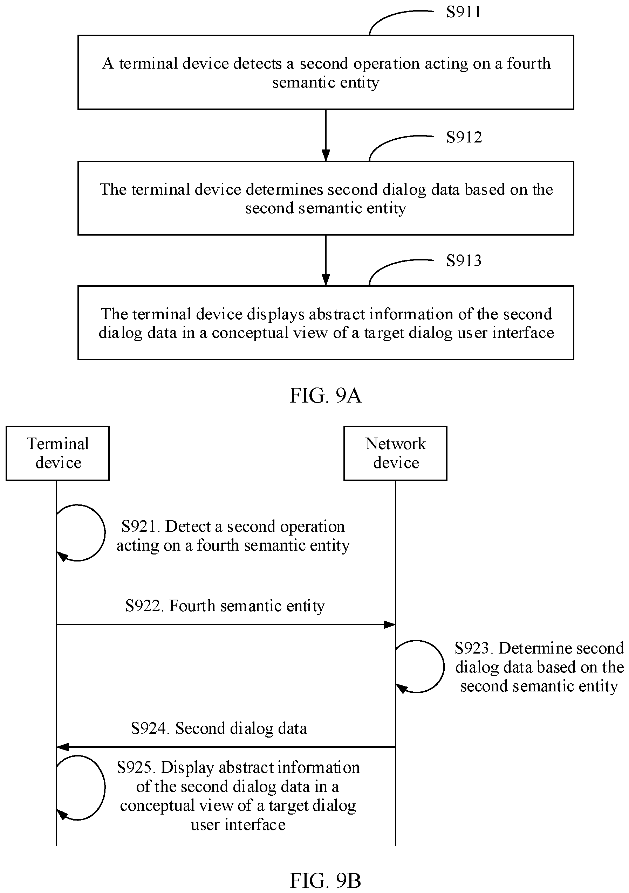

3. An implementation process of a dialog interaction method corresponding to the embodiment of FIG. 4F1 and FIG. 4F2:
A schematic flowchart of a dialog interaction method corresponding to the embodiment of FIG. 4F1 and FIG. 4F2 may be shown in FIG. 9A. The process may be used in a dialog system that includes only a terminal device, and specifically includes the following steps.

S911. The terminal device detects a second operation acting on a fourth semantic entity.

Herein, for related descriptions of step S911, refer to step S811. Details are not described herein again.

S912. The terminal device determines second dialog data based on the second semantic entity.

Herein, for descriptions of the second dialog data, refer to the descriptions of step S812. Details are not described herein again. Second dialog data with a latest generation time is latest historical dialog data of historical dialog data whose topic correlation with the second semantic entity is greater than a correlation threshold. There may be one or more pieces of second dialog data with a latest generation time.

In specific implementation, the terminal device may determine the second dialog data in the manner described in step S812.

S913. The terminal device displays abstract information of the second dialog data in a conceptual view of a target dialog user interface.

Herein, the abstract information of the second dialog data is a content summary or a content conclusion of the second dialog data, and is used to briefly describe the second dialog data and reflect main content of the second dialog data.

In specific implementation, the terminal device may recognize the main content of the second dialog data, to determine the abstract information of the second dialog data. A method for recognizing the main content of the second dialog data is not limited in this application. For example, the main content of the second dialog data may be recognized by using an abstract information extraction model obtained through pre-training.

For example, the target dialog user interface on which the terminal device displays the abstract information of the second dialog data in the conceptual view of the target dialog user interface may be shown in FIG. 4F2.

Further, the terminal device may display, in the conceptual view of the target dialog user interface, abstract information of the second dialog data with the latest generation time.

A schematic flowchart of another dialog interaction method corresponding to the embodiment of FIG. 4F1 and FIG. 4F2 is shown in FIG. 9B. The process may be used in a dialog system that includes a terminal device and a network device, and specifically includes the following steps.

S921. The terminal device detects a second operation acting on a fourth semantic entity.

Herein, for related descriptions of step S911, refer to step S811. Details are not described herein again.

S922. The terminal device sends the fourth semantic entity to the network device, and the network device receives the second semantic entity.

S923. The network device determines second dialog data based on the second semantic entity.

Herein, for the second dialog data and a specific implementation of determining the second dialog data by the network device based on the fourth semantic entity, refer to the descriptions of step S912. Details are not described herein again.

S924. The network device sends the second dialog data to the terminal device, and the terminal device receives the second dialog data.

S925. The terminal device displays abstract information of the second dialog data in a conceptual view of a target dialog user interface.

Herein, for related descriptions of step S925, refer to step S913. Details are not described herein again.

With reference to any one of the method embodiments corresponding to FIG. 4F1 and FIG. 4F2, FIG. 9A, and FIG. 9B, it can be learned that dialog data and a knowledge subgraph are already displayed on the target dialog user interface after one or more dialogs are performed, and when a semantic entity in the conceptual view is selected, the terminal device displays abstract information of dialog data related to the semantic entity, thereby helping a user quickly learn of main content of the dialog data related to the semantic entity.

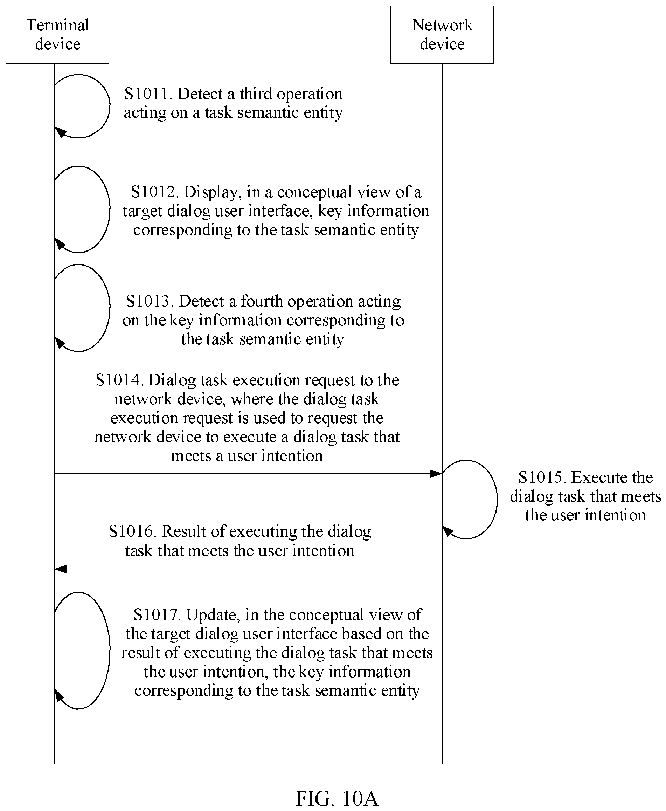

4. An implementation process of a dialog interaction method corresponding to the embodiment of FIG. 4G1 to FIG. 4G4:
A schematic flowchart of a dialog interaction method corresponding to the embodiment of FIG. 4G1 to FIG. 4G4 may be shown in FIG. 10A. The process may be used in a dialog system that includes a terminal device and a network device, and specifically includes the following steps.
(1) Steps of triggering display of a function option corresponding to a functional semantic entity: The steps of triggering display of a function option corresponding to a functional semantic entity include steps S1011 and S1012.

S1011. The terminal device detects a third operation acting on a task semantic entity.

Herein, the task semantic entity is a semantic entity displayed in a conceptual view of a target dialog user interface. One task semantic entity may be used to trigger one or more dialog tasks. The task semantic entity is used to indicate a functional boundary of the dialog system. Specifically, the task semantic entity may be a semantic entity used to describe various travel tools, such as an aircraft, a train, or an automobile, or may be a semantic entity related to various travel tools, such as an airline ticket, a bus ticket, or a boat ticket. The semantic entity used to describe various travel tools or the semantic entity related to various travel tools may be used to indicate a travel-related dialog task in the dialog system, for example, booking an airline ticket, a bus ticket, or a boat ticket, or canceling an airline ticket, a bus ticket, or a boat ticket. Alternatively, the task semantic entity may be a semantic entity used to describe an expected transaction, such as traveling, a meeting, or dining, or may be a semantic entity related to the expected transaction, such as a name of a hotel, a meeting room, various tourist attractions, or a restaurant. The semantic entity used to describe an expected transaction or the semantic entity related to the expected transaction may be used to indicate a "planning" dialog task in the dialog system, for example, hotel reservation, meeting room reservation, ticket reservation, navigation, or hotel room reservation. The task semantic entity is not limited to the descriptions herein. Specifically, a semantic entity that may serve as the task semantic entity to trigger one or more dialog tasks in the dialog system is not limited in this application.

The third operation acting on the task semantic entity is specifically an operation of selecting a functional semantic entity. The third operation may have a plurality of forms. For a specific form of the third operation, refer to the form of the second operation acting on the second semantic entity. Details are not described herein again. A specific form of the third operation is not limited in this embodiment of this application.

S1012. The terminal device displays, in the conceptual view of the target dialog user interface, key information corresponding to the task semantic entity.

The key information corresponding to the task semantic entity is each slot of a dialog task corresponding to the task semantic entity and a value of the slot. The slot is various core information (such as a time and a geographical location) corresponding to the dialog task, and the value of the slot is specific content of the core information. For example, the dialog task corresponding to the task semantic entity is ticket reservation. In this case, a slot of the dialog task of ticket reservation may include core information such as an "airline", a "departure time", a "seat number", and a "gate", and the value of the slot may include specific content of the airline, specific content of the departure time, specific content of the seat number, specific content of the gate, and the like.

For example, the target dialog user interface on which the terminal device displays, in the conceptual view of the target dialog user interface, the key information corresponding to the task semantic entity may be shown in FIG. 4G2.

Optionally, after display of the key information corresponding to the task semantic entity is triggered, the dialog task corresponding to the task semantic entity may be further triggered.

(2) Steps of triggering a dialog task corresponding to the functional semantic entity: The steps of triggering a system function corresponding to the functional semantic entity include steps S1013 to S1015.

S1013. The terminal device detects a fourth operation acting on the key information corresponding to the task semantic entity, and obtains a user intention specific to the key information of the task semantic entity.

The fourth operation acting on the key information is an operation of selecting the key information corresponding to the task semantic entity. The fourth operation may have a plurality of forms. For a specific form of the fourth operation, refer to the form of the second operation acting on the second semantic entity. Details are not described herein again. A specific form of the third operation is not limited in this embodiment of this application.

In a possible implementation, the user intention specific to the key information may be obtained by obtaining dialog data entered by a user after the fourth operation is detected. The dialog data entered by the user may be voice data entered by the user, or may be text data entered by the user. For example, the tap operation shown in FIG. 4G1 to FIG. 4G4 is the fourth operation, and the user intention specific to the key information is obtained by obtaining the dialog data "I want to book Air China."

In another possible implementation, the user intention specific to the key information may be alternatively obtained based on the fourth operation. For example, the fourth operation is a voice control operation (that is, the user utters a voice instruction related to the key information). In this case, voice content corresponding to the operation of the voice operation may be obtained, to obtain the user intention specific to the key information.

S1014. The terminal device sends a dialog task execution request to the network device, where the dialog task execution request is used to request the network device to execute a dialog task that meets the user intention.

Specifically, the terminal device may send, to the network device, dialog data corresponding to the user intention for the key information of the task semantic entity.

For example, the user intention is "changing the meeting time from 9:00 a.m. to 10:00 a.m.". In this case, a dialog task that meets the user intention and that is determined based on the user intention is "changing the meeting time", and specific content of the dialog task is "changing the meeting time to 10:00 a.m.".

S1015. The network device executes the dialog task that meets the user intention.

Specifically, the network device executes, based on the dialog data corresponding to the user intention specific to the key information of the task semantic entity, the dialog task that meets the user intention.

Optionally, after executing the dialog task that meets the user intention, the terminal device may further update the key information corresponding to the task semantic entity.

(3) Steps of updating the key information corresponding to the task semantic entity: The steps of updating the key information corresponding to the task semantic entity include S1016 and S 1017.

S1016. The network device sends a result of executing the dialog task that meets the user intention to the terminal device, and the terminal device receives the result of executing the dialog task corresponding to the functional semantic entity.

S1017. The terminal device updates, in the conceptual view of the target dialog user interface based on the result of executing the dialog task that meets the user intention, the key information corresponding to the task semantic entity.

Herein, that the terminal device updates, in the conceptual view of the target dialog user interface, the key information corresponding to the task semantic entity is as follows: The terminal device adds, based on the result of executing the dialog task that meets the user intention, the result of executing the dialog task that meets the user intention to the key information corresponding to the task semantic entity, or uses the result of the dialog task that meets the user intention to replace an original result corresponding to the result.

For example, as shown in FIG. 4G3, the original result is "flight number: xx1, departure time: h1 hour m1 minute". After the dialog task that meets the user intention (that is, changing a flight) is executed, an obtained result is "flight number: Air China xx2, departure time: h2 hour m2 minute". In this case, the result of executing the dialog task that meets the user intention is used to replace the original result corresponding to the result, that is "flight number: Air China xxx, departure time: h2 hour m2 minute" is used to replace "flight number: xx1, departure time: h1 hour m1 minute", and a target dialog user interface obtained through replacement is shown in FIG. 4G4.

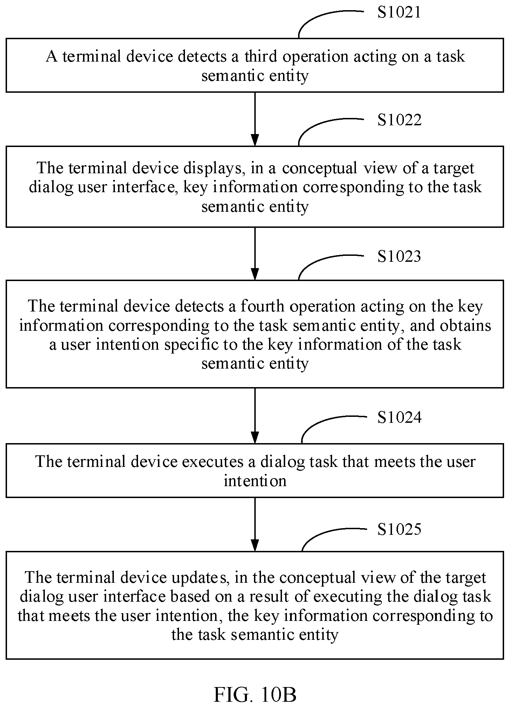

A schematic flowchart of another dialog interaction method corresponding to the embodiment of FIG. 4G1 to FIG. 4G4 is shown in FIG. 10B. The process may be used in a dialog system that includes only a terminal device, and specifically includes the following steps.

S1021. The terminal device detects a third operation acting on a task semantic entity.

S1022. The terminal device displays, in a conceptual view of a target dialog user interface, key information corresponding to the task semantic entity.

S1023. The terminal device detects a fourth operation acting on the key information corresponding to the task semantic entity, and obtains a user intention specific to the key information of the task semantic entity.

Herein, for related descriptions of steps S1021 to S1023, refer to steps S1011 to S1013. Details are not described herein again.

S1024. The terminal device executes a dialog task that meets the user intention.

Herein, for specific descriptions about the dialog task that meets the user intention, and a specific implementation of executing the dialog task that meets the user intention by the terminal device, refer to the descriptions of steps S1014 and S 1015. Details are not described herein again.

S1025. The terminal device updates, in the conceptual view of the target dialog user interface based on a result of executing the dialog task that meets the user intention, the key information corresponding to the task semantic entity.

Herein, or a specific implementation of updating the key information corresponding to the task semantic entity by the terminal device in the conceptual view of the target dialog user interface based on the result of executing the dialog task corresponding to the functional semantic entity, refer to the descriptions of step S 1017. Details are not described herein again.

With reference to any one of the method embodiments corresponding to FIG. 4G1 to FIG. 4G4, FIG. 10A, and FIG. 10B, it can be learned that, in addition to the semantic entity existing in the dialog data in the dialog view, the knowledge subgraph displayed in the conceptual view further includes the task semantic entity used to trigger the dialog task, and the task semantic entity serves to indicate a functional boundary of the dialog system, so that the user may learn of a function of the dialog system based on the task semantic entity.

III. Implementation processes of dialog interaction methods for implementing other functions: The processes may be used in a scenario in which dialog data and a knowledge subgraph are already displayed on a target dialog user interface, that is, a scenario in which one or more dialogs have been performed. For graphical user interface embodiments of other functions implemented on the terminal device, refer to the embodiments of FIG. 4C1 to FIG. 4C4 and FIG. 4H1 and FIG. 4H2.
1. A process of a dialog interaction method for enabling a dialog system to initiate dialog data: For an embodiment of a graphical user interface displayed on the terminal device when the dialog system initiates the dialog data, refer to the embodiment of FIG. 4H1 and FIG. 4H2.

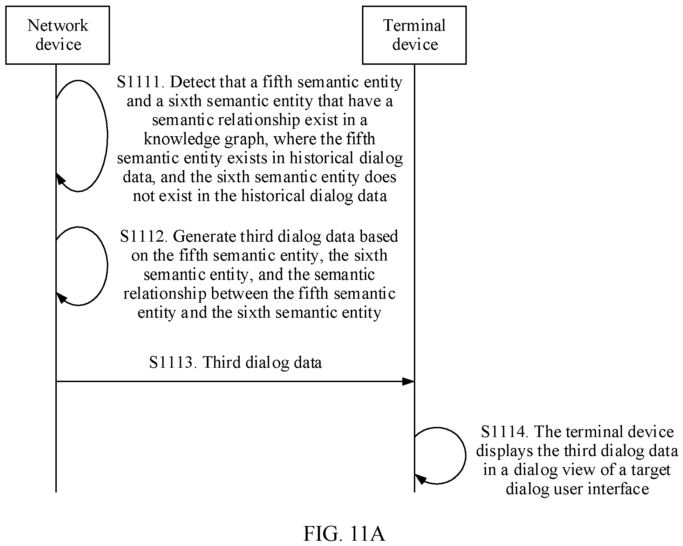

A schematic diagram of a dialog interaction method corresponding to the embodiment of FIG. 4H1 and FIG. 4H2 may be shown in FIG. 11A. The process may be used in a human-computer-interaction-based dialog system that includes a network device and a terminal device, and specifically includes the following steps.

S1111. The network device detects that a fifth semantic entity and a sixth semantic entity that have a semantic relationship exist in a knowledge graph, where the fifth semantic entity exists in historical dialog data, and the sixth semantic entity does not exist in the historical dialog data.

The historical dialog data is dialog data, of a target dialog, that is already generated in the dialog system. The historical dialog data herein may be historical dialog data of a current dialog corresponding to the target dialog. For a definition and descriptions of a dialog, refer to the foregoing descriptions. Details are not described herein again. Alternatively, the historical dialog data herein may be all historical dialog data corresponding to the target dialog (that is, historical dialog data of the current dialog and historical dialog data generated before the current dialog).

Herein, the fifth semantic entity and the sixth semantic entity that have a semantic relationship in the knowledge graph may be in the following cases.

In a first case, a semantic entity exists in the historical dialog data, and the semantic entity has a semantic relationship with another semantic entity that does not exist in the historical dialog data. In this case, the semantic entity may be referred to as the fifth semantic entity, and the another semantic entity that does not exist in the historical dialog data may be referred to as the fifth semantic entity.

In a second case, at least two semantic entities exist in the historical dialog data, the at least two semantic entities have a semantic relationship with a same semantic entity in the historical dialog data, and the at least two semantic entities have a semantic relationship with another semantic entity that does not exist in the historical dialog data. In this case, the at least two semantic entities may be referred to as the fifth semantic entity, and the another semantic entity that does not exist in the historical dialog data may be referred to as the sixth semantic entity.

The fifth semantic entity and the sixth semantic entity in the foregoing two cases are described by using an example. Referring to FIG. 4C2, historical dialog data is "Who was the 1997-1998 NBA regular season MVP?" and "Michael Jordan." Semantic entities existing in the historical dialog data are "NBA", "MVP", and "Michael Jordan".

Based on the definition in the first case, because the semantic entity "NBA" has a semantic relationship with semantic entities "basketball" and "Michael Jordan", and the semantic entity "basketball" does not exist in the historical dialog data, the semantic entity "NBA" is the fifth semantic entity, and the semantic entity "basketball" is the sixth semantic entity that has a semantic relationship with the semantic entity "NBA"; because the semantic entity "MVP" has a semantic relationship with semantic entities "James Harden", "Michael Jordan", "Messi", and "La Liga", and the semantic entities "James Harden", "Messi", and "La Liga" do not exist in the historical dialog data, the semantic entity "MVP" is the fifth semantic entity, and the semantic entities "James Harden", "Messi", and "La Liga" are the sixth semantic entity that has a semantic relationship with the semantic entity "MVP".

Based on the definition in the second case, because the semantic entities "NBA" and "Michael Jordan" have a semantic relationship with "MVP", assuming that the semantic entities "NBA" and "Michael Jordan" also have a semantic relationship with a semantic entity "Bill CartWright" in the knowledge graph, the semantic entities "NBA" and "Michael Jordan" are the fifth semantic entity, and the semantic entity "Bill CartWright" is the sixth semantic entity that has a semantic relationship with the semantic entities "NBA" and "Michael Jordan".

Not limited to the foregoing cases, the fifth semantic entity and the sixth semantic entity that have a semantic relationship in the knowledge graph may be alternatively in another case. This is not limited in this embodiment of this application.

S1112. The network device generates third dialog data based on the fifth semantic entity, the sixth semantic entity, and the semantic relationship between the fifth semantic entity and the sixth semantic entity.

Specifically, the network device may input the fifth semantic entity, the sixth semantic entity, and the semantic relationship between the fifth semantic entity and the sixth semantic entity to an encoder-decoder model obtained through pre-training, and determine data output by the encoder-decoder model as the third dialog data. The third dialog data is dialog data actively initiated by the dialog system.

S1113. The network device sends the third dialog data to the terminal device, and the terminal device receives the third dialog data.

S1114. The terminal device displays the third dialog data in a dialog view of a target dialog user interface.

For example, for the displaying the third dialog data in the dialog view of the target dialog user interface by the terminal device, refer to FIG. 4C2, where the dialog data "Harden and Jordan both played for the Chicago Bulls." is the third dialog data.

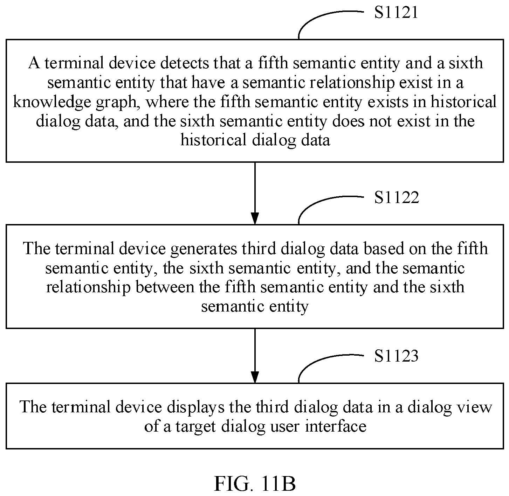

A schematic diagram of another dialog interaction method corresponding to the embodiment of FIG. 4H1 and FIG. 4H2 may be shown in FIG. 11B. The process may be used in a human-computer-interaction-based dialog system that includes only a terminal device, and specifically includes the following steps.

S1121. The terminal device detects that a fifth semantic entity and a sixth semantic entity that have a semantic relationship exist in a knowledge graph, where the fifth semantic entity exists in historical dialog data, and the sixth semantic entity does not exist in the historical dialog data.

Herein, for definitions and descriptions of the fifth semantic entity, the sixth semantic entity, and the historical dialog data, refer to the related descriptions of step S1111. Details are not described herein again.

S1122. The terminal device generates third dialog data based on the fifth semantic entity, the sixth semantic entity, and the semantic relationship between the fifth semantic entity and the sixth semantic entity.

Herein, for a specific implementation of step S1122, refer to the specific implementation of step S1112.

### Details are not described herein again.

S1123. The terminal device displays the third dialog data in a dialog view of a target dialog user interface.

With reference to any one of the method embodiments corresponding to FIG. 4C1 to FIG. 4C4, FIG. 11A, and FIG. 11B, it can be learned that a human-computer-interaction-based dialog system may alternatively actively initiate dialog data based on an association relationship between concepts in historical dialog data. The third dialog data actively initiated by the dialog system serves to guide a topic, thereby enriching dialog content.

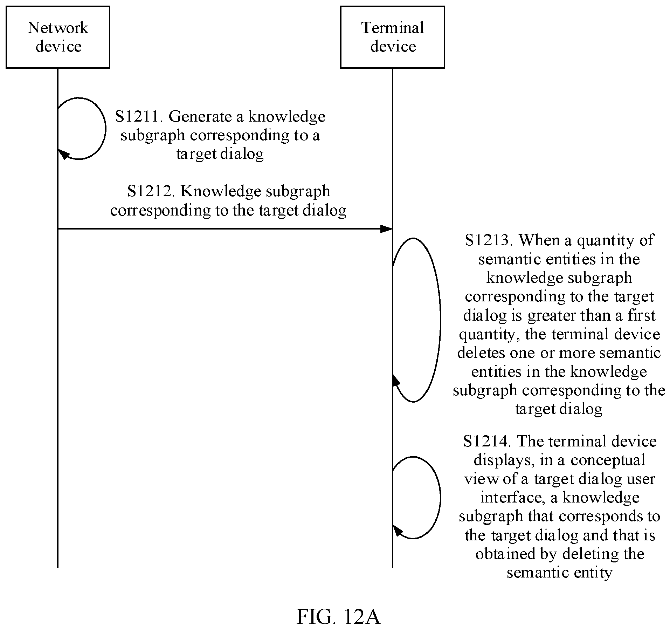

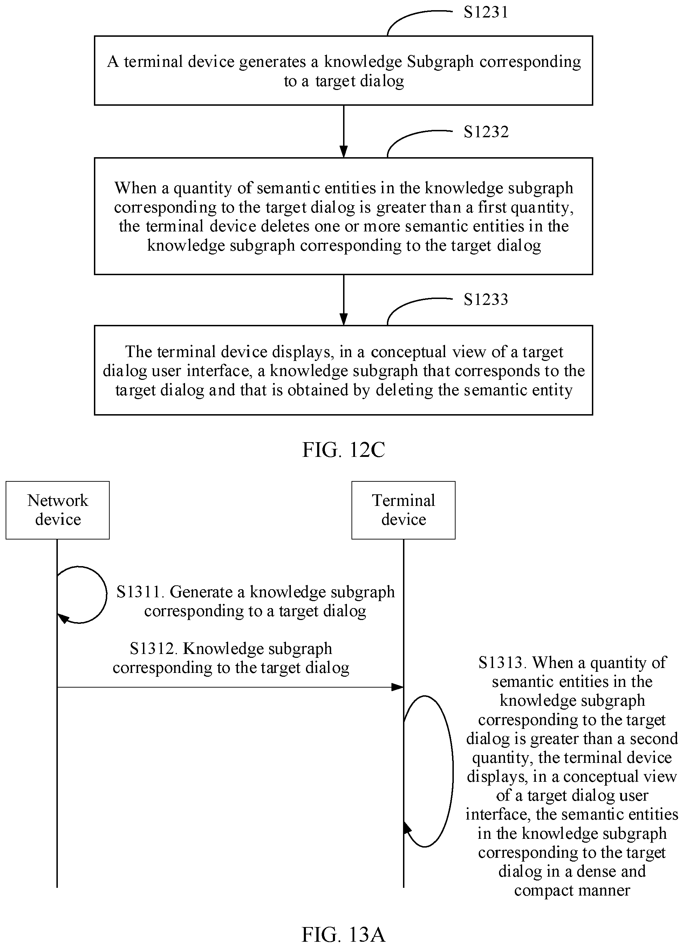

2. An implementation process of a dialog interaction method for deleting a semantic entity:
A process of a dialog interaction method for deleting a semantic entity may be shown in FIG. 12A. The process may be used in a dialog system that includes a network device and a terminal device, and specifically includes the following steps.

S1211. The network device generates a knowledge subgraph corresponding to a target dialog.

S1212. The network device sends the knowledge subgraph corresponding to the target dialog to the terminal device, and the terminal device receives the knowledge subgraph corresponding to the target dialog.

Herein, for specific implementations of steps S1211 and S1212, refer to the descriptions of steps S611 to S615, steps S631 to S634, or steps S641 to S643. Details are not described herein again.

S1213. When a quantity of semantic entities in the knowledge subgraph corresponding to the target dialog is greater than a first quantity, the terminal device deletes one or more semantic entities in the knowledge subgraph corresponding to the target dialog.

Herein, the first quantity may be a maximum quantity of semantic entities that can be displayed in a conceptual view displayed on the terminal device. A value of the first quantity is related to a size of the conceptual view displayed on the terminal device. A larger size of the conceptual view displayed on the terminal device indicates a larger value of the first quantity.

In this embodiment of this application, in a process of deleting the semantic entity in the knowledge subgraph corresponding to the target dialog, the terminal device may delete one or more of the following semantic entities in the knowledge subgraph corresponding to the target dialog:
a1. a semantic entity that does not appear in historical dialog data, where the historical dialog data may be historical dialog data of a current dialog, or may be all historical dialog data that corresponds to the target dialog and that has been generated in the dialog system, and the semantic entity that does not appear in the historical dialog data means that the semantic entity does not exist in the historical dialog data, that is, a semantic entity not included in the historical dialog data;
a2. a semantic entity whose semantic relationship path distance from a seventh semantic entity in the knowledge subgraph corresponding to the target dialog is greater than a second distance threshold, where the seventh semantic entity is a semantic entity existing in latest dialog data displayed in a dialog view, the latest dialog data displayed in the dialog view is one or more pieces of dialog data that corresponds to the target dialog and that has a latest generation time in the dialog system, and for a related definition of the semantic relationship path distance, refer to the related descriptions of step S614. Details are not described herein again; and
a3. one or more semantic entities in the knowledge subgraph corresponding to the target dialog that have lowest use frequency in a dialog process, where for a definition and descriptions of the use frequency in the dialog process, refer to the related descriptions of step S614, and details are not described herein again.

Not limited to the foregoing cases, specific semantic entities in the knowledge subgraph corresponding to the target dialog that are deleted by the terminal device in a process of deleting the semantic entity in the knowledge subgraph corresponding to the target dialog are not limited in this embodiment of this application.

S1214. The terminal device displays, in a conceptual view of a target dialog user interface, a knowledge subgraph that corresponds to the target dialog and that is obtained by deleting the semantic entity.
For example, the target dialog user interface on which the terminal device displays, in the conceptual view of the target dialog user interface, the knowledge subgraph that corresponds to the target dialog and that is obtained by deleting the semantic entity may be shown in FIG. 4C4.

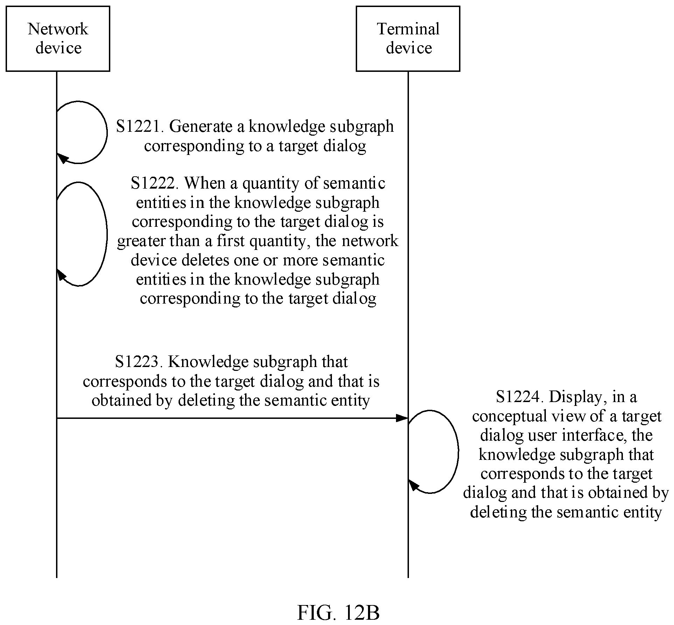

A process of another dialog interaction method for deleting a semantic entity displayed in a conceptual view may be shown in FIG. 12B. The method may be used in a dialog system that includes a network device and a terminal device, and specifically includes the following steps.

S1221. The network device generates a knowledge subgraph corresponding to a target dialog.

Herein, for a specific implementation of step S1221, refer to the descriptions of steps S611 to S614, steps S631 to S634, or steps S641 and S642. Details are not described herein again.

S1222. When a quantity of semantic entities in the knowledge subgraph corresponding to the target dialog is greater than a first quantity, the network device deletes one or more semantic entities in the knowledge subgraph corresponding to the target dialog.

Herein, for a semantic entity that is in the knowledge subgraph corresponding to the target dialog and that may be deleted by the network device in a process of deleting the semantic entity in the knowledge subgraph corresponding to the target dialog, refer to the descriptions of step S1213. Details are not described herein again.

S1223. The network device sends a knowledge subgraph that corresponds to the target dialog and that is obtained by deleting the semantic entity to the terminal device, and the terminal device receives the knowledge subgraph that corresponds to the target dialog and that is obtained by deleting the semantic entity.

S1224. The terminal device displays, in a conceptual view of a target dialog user interface, the knowledge subgraph that corresponds to the target dialog and that is obtained by deleting the semantic entity.

For example, the target dialog user interface on which the terminal device displays, in the conceptual view of the target dialog user interface, the knowledge subgraph that corresponds to the target dialog and that is obtained by deleting the semantic entity may be shown in FIG. 4C4.

A process of still another dialog interaction method for deleting a semantic entity displayed in a conceptual view may be shown in FIG. 11C. The process may be used in a dialog system that includes only a terminal device, and specifically includes the following steps.

S1231. The terminal device generates a knowledge subgraph corresponding to a target dialog.

Herein, for a specific implementation of step S1231, refer to the descriptions of steps S621 to S623 or steps S651 and S652. Details are not described herein again.

S1232. When a quantity of semantic entities in the knowledge subgraph corresponding to the target dialog is greater than a first quantity, the terminal device deletes one or more semantic entities in the knowledge subgraph corresponding to the target dialog.

S1233. The terminal device displays, in a conceptual view of a target dialog user interface, a knowledge subgraph that corresponds to the target dialog and that is obtained by deleting the semantic entity.

Herein, for specific implementations of steps S1232 and S1233, refer to the descriptions of steps S1213 and S1214. Details are not described herein again.

With reference to any one of the method embodiments corresponding to FIG. 4C1 to FIG. 4C4 and FIG. 12A to FIG. 12C, it can be learned that, when the quantity of semantic entities in the knowledge subgraph corresponding to the target dialog is excessively large, a semantic entity in the knowledge subgraph corresponding to the target dialog is deleted, thereby dynamically deleting a semantic entity, and keeping a view interface of target dialog simple.

3. A process of a dialog interaction method for adjusting a manner of displaying a semantic entity in a conceptual view:
A process of a dialog interaction method for adjusting a manner of displaying a semantic entity in a conceptual view may be shown in FIG. 13A. The process may be used in a dialog system that includes a network device and a terminal device, and specifically includes the following steps.

S1311. The network device generates a knowledge subgraph corresponding to a target dialog.

S1312. The network device sends the knowledge subgraph corresponding to the target dialog to the terminal device, and the terminal device receives the knowledge subgraph corresponding to the target dialog.

Herein, for specific implementations of steps S1311 and S1312, refer to the descriptions of steps S611 to S615, steps S631 to S634, or steps S641 to S643. Details are not described herein again.

S1313. When a quantity of semantic entities in the knowledge subgraph corresponding to the target dialog is greater than a second quantity, the terminal device displays, in a conceptual view of a target dialog user interface, the semantic entities in the knowledge subgraph corresponding to the target dialog in a dense and compact manner.

Herein, the second quantity is less than the first quantity in step S1213. The displaying the semantic entities in the knowledge subgraph corresponding to the target dialog in the conceptual view of the target dialog user interface in a dense and compact manner specifically means that one or more of a size of a region occupied by the semantic entities in the conceptual view, a location of the region occupied by the semantic entities in the conceptual view, and a distance between two semantic entities in the conceptual view is changed, so that more semantic entities can be fully displayed in the conceptual view of the target dialog user interface.

For example, the displaying the semantic entities in the knowledge subgraph corresponding to the target dialog in the conceptual view of the target dialog user interface in a dense and compact manner may be displaying the knowledge subgraph corresponding to the target dialog in a parallel layout, as shown in FIG. 4C3 or FIG. 4C4.

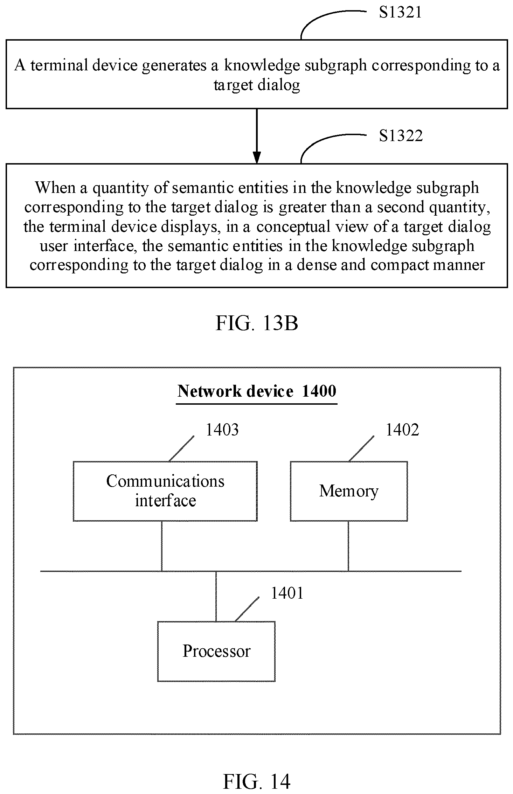

A process of a dialog interaction method for adjusting a manner of displaying a semantic entity in a conceptual view may be shown in FIG. 13B. The process may be used in a dialog system that includes only a terminal device, and specifically includes the following steps.

S1321. The terminal device generates a knowledge subgraph corresponding to a target dialog.

Herein, for a specific implementation of step S1331, refer to the descriptions of steps S621 to S623 or steps S651 and S652. Details are not described herein again.

S1322. When a quantity of semantic entities in the knowledge subgraph corresponding to the target dialog is greater than a second quantity, the terminal device displays, in a conceptual view of a target dialog user interface, the semantic entities in the knowledge subgraph corresponding to the target dialog in a dense and compact manner.

Herein, for a specific implementation of step S1322, refer to the descriptions of step S1313. Details are not described herein again.

With reference to any one of the method embodiments corresponding to FIG. 4C1 to FIG. 4C4, FIG. 13A, and FIG. 13B, it can be learned that, when the quantity of semantic entities in the knowledge subgraph corresponding to the target dialog is relatively large, the semantic entities in the knowledge subgraph corresponding to the target dialog are displayed in the conceptual view of the target dialog user interface in a dense and compact manner, thereby ensuring a visual effect of the conceptual view.

The methods of this application are described in detail above. To better implement the methods of this application, the following further provides another apparatus of this application.

FIG. 14 is a structural block diagram of a network device according to an embodiment of this application. As shown in the figure, the network device 1400 may include a processor 1401, a memory 1402, a communications interface 1403, and any other similar or appropriate component. The components may perform communication on one or more communications buses. The bus may be a memory bus, a peripheral bus, or the like.

The processor 1401 may be a general-purpose processor, for example, a central processing unit (central processing unit, CPU). The processor 302 may further include a hardware chip. The hardware chip may be a combination of one or more of the following: an application-specific integrated circuit (application specific integrated circuit, ASIC), a field programmable gate array (field programmable gate array, FPGA), and a complex programmable logic device (complex programmable logic device, CPLD). The processor 1401 may process data received by the communications interface 1403, and the processor 1401 may further process data that is to be sent to the communications interface 1403 for transmission by using a wired transmission medium.

In this embodiment of this application, the processor 1401 may be configured to read and execute computer-readable instructions. Specifically, the processor 1401 may be configured to invoke a program stored in the memory 1402, for example, an implementation program, on the network device side, of a dialog interaction method provided in one or more embodiments of this application; and execute instructions included in the program.

The memory 1402 is coupled to the processor 1401, and is configured to store various software programs and/or a plurality of instructions. In specific implementation, the memory 1402 may include a high-speed random access memory, and may also include a nonvolatile memory, for example, one or more magnetic disk storage devices, a flash storage device, or another nonvolatile solid-state storage device. The memory 1402 has a built-in operating system, for example, a Linux operating system or a Windows operating system. The memory 1402 may further have a built-in network communications program, and the network communications program may be used to communicate with another device.

In some embodiments of this application, the memory 1402 may be configured to store the implementation program, on the network device side, of the dialog interaction method provided in the one or more embodiments of this application. For implementation of the dialog interaction method provided in this application, refer to the foregoing method embodiments.

The communications interface 1403 may be used by the network device 300 to communicate with another device, for example, a terminal device. The communications interface 1403 may include a wired communications interface. For example, the communications interface 1403 may be an Ethernet interface or an optical fiber interface. Optionally, the communications interface 1403 may further include a wireless communications interface.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer instruction may be stored in a computer readable storage medium, or may be transmitted by using the computer readable storage medium. The computer storage medium may be any usable medium accessible by a computer, or a data storage device, such as a server or a data center, integrating one or more usable media. The usable medium may be a semiconductor medium (for example, an SSD).

A person of ordinary skill in the art may be aware that, in combination with the examples described in the embodiments disclosed in this specification, modules and method steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It should be noted that the first, the second, the third, and various numbers in the embodiments of this application are merely used for differentiation for ease of description, and are not intended to limit the scope of the embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A dialog interaction method, comprising:
displaying, by a terminal device, a dialog view in a first region of a target dialog user interface, and displaying a conceptual view in a second region of the target dialog user interface, wherein the target dialog user interface is a graphical user interface corresponding to a target dialog, the dialog view is used to display dialog data of the target dialog, the conceptual view is used to display a knowledge subgraph corresponding to the target dialog, the knowledge subgraph comprises a plurality of semantic entities and a semantic relationship between semantic entities in the plurality of semantic entities, the plurality of semantic entities comprise a first semantic entity, and the first semantic entity is a semantic entity existing in the dialog data.

2. The method according to claim 1, wherein the plurality of semantic entities further comprise one or more second semantic entities associated with the first semantic entity.

3. The method according to claim 2, wherein the second semantic entity comprises a semantic entity adjacent to the first semantic entity in the knowledge graph or a semantic entity whose path distance from the first semantic entity in the knowledge graph is less than a first distance threshold.

4. The method according to any one of claims 1 to 3, wherein the method further comprises:
when new dialog data is obtained, updating, by the terminal device, the conceptual view, wherein an updated conceptual view is used to display a knowledge subgraph updated based on the new dialog data, and the updated knowledge subgraph comprises a semantic entity existing in the new dialog data, or a semantic entity existing in the new dialog data and a semantic entity associated with the semantic entity existing in the new dialog data.

5. The method according to any one of claims 1 to 4, wherein the method further comprises:
when a quantity of semantic entities in the knowledge subgraph is greater than a first quantity, deleting, by the terminal device, one or more semantic entities in the knowledge subgraph.

6. The method according to any one of claims 1 to 5, wherein the method further comprises:
when a first operation acting on first dialog data displayed in the dialog view is detected, distinctly displaying, by the terminal device, a third semantic entity in the conceptual view in response to the first operation, wherein the third semantic entity comprises a semantic entity existing in the first dialog data, and/or a semantic entity associated with the semantic entity existing in the first dialog data.

7. The method according to any one of claims 1 to 6, wherein the method further comprises:
when a second operation acting on a fourth semantic entity displayed in the conceptual view is detected, displaying, by the terminal device, second dialog data in the dialog view in response to the second operation, wherein the fourth semantic entity is a semantic entity existing in the second dialog data, or a semantic entity associated with a semantic entity existing in the second dialog data.

8. The method according to any one of claims 1 to 7, wherein the method further comprises:
when a second operation acting on a fourth semantic entity displayed in the conceptual view is detected, displaying, by the terminal device, abstract information of the second dialog data in the conceptual view in response to the second operation, wherein the fourth semantic entity is a semantic entity existing in the second dialog data, or a semantic entity associated with a semantic entity existing in the second dialog data.

9. The method according to any one of claims 1 to 8, wherein the method further comprises:
when a third operation acting on a task semantic entity displayed in the conceptual view is detected, displaying, by the terminal device, key information corresponding to the task semantic entity in the conceptual view in response to the third operation.

10. The method according to claim 9, wherein after the displaying, by the terminal device, key information corresponding to the task semantic entity in the conceptual view in response to the third operation, the method further comprises:
when a fourth operation acting on the key information is detected and a user intention specific to the key information is obtained, triggering, by the terminal device in response to the fourth operation, execution of a dialog task that meets the user intention.

11. The method according to claim 10, wherein after the triggering, by the terminal device in response to the fourth operation, execution of a dialog task that meets the user intention, the method further comprises:
updating, by the terminal device, the key information in the conceptual view based on a result obtained by executing the dialog task that meets the user intention.

12. The method according to any one of claims 1 to 11, wherein the method further comprises:
when a new semantic entity that has a semantic relationship with a semantic entity in historical dialog data in the knowledge graph is identified, and the new semantic entity does not exist in the historical dialog data, initiating, by the terminal device, a dialog based on the semantic entity in the historical dialog data and the new semantic entity.

13. A dialog interaction method, comprising:
generating, by a network device based on dialog data of a target dialog, a knowledge subgraph corresponding to the target dialog, wherein the knowledge subgraph comprises a plurality of semantic entities and a semantic relationship between semantic entities in the plurality of semantic entities, the plurality of semantic entities comprise a first semantic entity, and the first semantic entity is a semantic entity existing in the dialog data; and
sending, by the network device, the knowledge subgraph to a terminal device, wherein the knowledge subgraph is used by the terminal device to display a dialog view in a first region of a target dialog user interface and display a conceptual view in a second region of the target dialog user interface, the dialog view is used to display the dialog data, the conceptual view is used to display the knowledge subgraph, and the target dialog user interface is a graphical user interface corresponding to the target dialog.

14. The method according to claim 13, wherein the method further comprises:
updating, by the network device based on new dialog data, the knowledge subgraph corresponding to the target dialog, and sending an updated knowledge subgraph to the terminal device, wherein the updated knowledge subgraph is used by the terminal device to update the conceptual view, and the updated knowledge subgraph comprises a semantic entity existing in the new dialog data, or a semantic entity existing in the new dialog data and a semantic entity associated with the semantic entity existing in the new dialog data.

15. A graphical user interface on a terminal device, wherein the terminal device has a display screen, a memory, and one or more processors, and the one or more processors are configured to execute one or more computer programs stored in the memory; and the graphical user interface is a graphical user interface corresponding to a target dialog, and the graphical user interface comprises:
displaying a dialog view in a first region of the graphical user interface, and displaying a conceptual view in a second region of the graphical user interface, wherein the dialog view is used to display dialog data of the target dialog, the conceptual view is used to display a knowledge subgraph corresponding to the target dialog, the knowledge subgraph comprises a plurality of semantic entities and a semantic relationship between semantic entities in the plurality of semantic entities, the plurality of semantic entities comprise a first semantic entity, and the first semantic entity is a semantic entity existing in the dialog data.

16. The graphical user interface according to claim 15, wherein the plurality of semantic entities further comprise one or more second semantic entities associated with the first semantic entity.

17. The graphical user interface according to claim 16, wherein the second semantic entity comprises a semantic entity adjacent to the first semantic entity in the knowledge graph or a semantic entity whose path distance from the first semantic entity in the knowledge graph is less than a first distance threshold.

18. The graphical user interface according to any one of claims 15 to 17, wherein the graphical user interface further comprises:
when new dialog data is obtained, updating the conceptual view in the conceptual view, wherein the updated conceptual view is used to display a knowledge subgraph updated based on the new dialog data, and the updated knowledge subgraph comprises a semantic entity existing in the new dialog data, or a semantic entity existing in the new dialog data and a semantic entity associated with the semantic entity existing in the new dialog data.

19. The graphical user interface according to any one of claims 15 to 18, wherein the graphical user interface further comprises:
when a quantity of semantic entities in the knowledge subgraph is greater than a first quantity, deleting one or more semantic entities from the updated knowledge graph submap.

20. The graphical user interface according to any one of claims 15 to 19, wherein the graphical user interface further comprises:
when a first operation acting on first dialog data displayed in the dialog view is detected, highlighting a third semantic entity in the conceptual view in response to the first operation, wherein the third semantic entity comprises a semantic entity existing in the first dialog data, and/or a semantic entity associated with the semantic entity existing in the first dialog data.

21. The graphical user interface according to any one of claims 15 to 20, wherein the graphical user interface further comprises:
when a second operation acting on a fourth semantic entity displayed in the conceptual view is detected, displaying second dialog data in the conceptual view in response to the second operation, wherein the fourth semantic entity is a semantic entity existing in the second dialog data, or a semantic entity associated with a semantic entity existing in the second dialog data.

22. The graphical user interface according to any one of claims 15 to 21, wherein the graphical user interface further comprises:
when a second operation acting on the fourth semantic entity displayed in the conceptual view is detected, displaying abstract information of second dialog data in the conceptual view in response to the second operation, wherein the fourth semantic entity is a semantic entity existing in the second dialog data, or a semantic entity associated with a semantic entity existing in the second dialog data.

23. The graphical user interface according to any one of claims 15 to 22, wherein the graphical user interface further comprises:
when a third operation acting on a task semantic entity displayed in the conceptual view is detected, displaying key information corresponding to the task semantic entity in the conceptual view in response to the third operation.

24. The graphical user interface according to claim 23, wherein after the displaying key information corresponding to the task semantic entity in the conceptual view in response to the third operation, the method further comprises:
when the fourth operation acting on the key information is detected and a user intention specific to the key information is obtained, triggering, in response to the fourth operation, execution of a dialog task that meets the user intention.

25. The graphical user interface according to claim 24, after the triggering, in response to the fourth operation, the execution of a dialog task that meets the user intention, further comprising:
updating the key information in the conceptual view according to a result obtained by executing the dialog task that meets the user intention.

26. The graphical user interface according to any one of claims 15 to 25, wherein the graphical user interface further comprises:
when a new semantic entity that has a semantic relationship with a semantic entity in historical dialog data in the knowledge graph is identified, and the new semantic entity does not exist in the historical dialog data, initiating, by the terminal device, a dialog based on the semantic entity in the historical dialog data and the new semantic entity.

27. A terminal device, comprising a display screen, a memory, and one or more processors, wherein the one or more processors are configured to execute one or more computer programs stored in the memory, and the one or more programs are stored in the memory; and when the one or more processors execute the one or more programs, the terminal device is enabled to implement the method according to any one of claims 1 to 12.

28. A network device, comprising a memory and one or more processors, wherein the one or more processors are configured to execute one or more computer programs stored in the memory, and the one or more programs are stored in the memory; and when the one or more processors execute the one or more programs, the network device is enabled to implement the method according to claim 13 or 14.

29. A computer-readable storage medium, comprising instructions, wherein when the instructions are run on a terminal device, the terminal device is enabled to perform the method according to any one of claims 1 to 12.

30. A computer-readable storage medium, comprising instructions, wherein when the instructions are run on a network device, the network device is enabled to perform the method according to claim 13.
